# EUROPÄISCHE PATENTSCHRIFT

(11) **EP 0 805 441 B1**
(45) Veröffentlichungstag und Bekanntmachung des Hinweises auf die Patenterteilung: **08.10.2003**
(21) Anmeldenummer: 97810248.1
(22) Anmeldetag: 22.04.1997
(51) Int. Cl.: G11B 7/24

(54) **Optische Speichermedien mit hoher Kapazität, die Xanthenfarbstoffe enthalten**
High capacity optical recording medium containing xanthene dyes
Support d'enregistrement optique d'une grande capacité contenant des colorants xathène

(30) Priorität: 03.05.1996 CH 113596
(43) Veröffentlichungstag der Anmeldung: 05.11.1997
(73) Patentinhaber: Ciba Specialty Chemicals Holding Inc., 4057 Basel (CH)
(72) Erfinder: Wolleb, Heinz, 1723 Marly (CH); Schmidhalter, Beat, 1735 Giffers (CH); Budry, Jean-luc, 1815 Clarens (CH)

(56) Entgegenhaltungen:
- EP-A- 0 649 133
- EP-B- 0 174 054
- WO-A-95/34890
- DE-A- 3 503 995
- US-A- 4 809 022
- US-A- 4 994 352

## Beschreibung

Umfeld der Erfindung ist die optische Informationsspeicherung auf einmal beschriftbaren Speichermedien, wobei die Informationsbits sich durch die unterschiedlichen optischen Eigenschaften eines Farbmittels an beschriebenen und unbeschriebenen Stellen unterscheiden. Diese Technologie wird gewöhnlich als "WORM" bezeichnet (zum Beispiel "CD-R" oder "DVD-R"); diese Bezeichnungen wurden hier übernommen.

Bei eine Wellenlänge von 770 bis 830 nm beschreibbare Compact Discs sind aus "Optical Data Storage 1989", Technical Digest Series, Vol. 1, 45 (1989) bekannt. Sie werden mit reduzierter Ausleseleistung gelesen. Gemäss Orange Book Standard muss das Medium bei der Aufzeichnungswellenlänge eine Basisreflektivität von 65% und mehr aufweisen. Als Aufzeichnungsmedien können zum Beispiel Cyaninfarbstoffe (JP 58/125 246), Phthalocyanine (EP 676 751, EP 712 904), Azofarbstoffe (US 5 441 844), Doppelsalze (US 4 626 496), Dithioethenmetallkomplexe (JP Kokai 63/288 785, JP Kokai 63/288 786), Azometallkomplexe (US 5 272 047, US 5 294 471, EP 649 133, EP 649 880) oder Gemische davon (EP-649 884) verwendet werden.

Durch den Einsatz von neueren kompakten, leistungsstarken roten Diodenlaser, die im Bereich von 630 bis 690 nm emittieren, ist prinzipiell eine 5- bis 8-malige Verbesserung der Datenpackdichte möglich, indem der Trackabstand (Distanz zwischen 2 Windungen der Informationsspur) und die Grösse der Bits etwa auf etwa den halben Wert gegenüber der herkömmlichen CD verringert werden können.

Dies stellt jedoch ausserordentlich hohe Anforderungen an die zu verwendende Aufzeichnungsschicht, wie hoher Brechungsindex, Gleichmässigkeit der Schriftbreite bei unterschiedlich langer Pulsdauer sowie hohe Lichtstabilität am Tageslicht bei gleichzeitiger hoher Empfindlichkeit gegen energiereiche Laserstrahlung. Die bekannten Aufzeichnungsschichten besitzen diese Eigenschaften nur in unbefriedigendem Masse.

So beschreibt EP 676 751 ein optisches Aufzeichnungsmedium, welches sowohl bei 770 bis 830 nm als auch bei 630 bis 690 nm aufgezeichnet und gelesen werden kann. Im Bereich von 630 bis 690 nm ist jedoch die Basisreflektivität dieses Aufzeichnungsmediums sehr niedrig, so dass die Aufzeichnung doch vorzugsweise im Bereich von 770 bis 830 nm erfolgen muss, wo bekanntlich die erwünschte höhere Speicherdichte jedoch nicht erreicht werden kann. Ein weiteres Problem ist die praktische Notwendigkeit der Verwendung von Farbstoffgemischen mit dem damit öfters verbundenen Auftreten unerwünschter gegenseitiger Effekte.

Andererseits beschreibt JP 06/40162 ein optisches Aufzeichnungsmedium, welches einen Trimethincyanin-Farbstoff enthält und bei 630 nm aufgezeichnet werden kann. Dieses Aufzeichnungsmedium vermag jedoch den hohen Anforderungen insbesondere in bezug auf die Empfindlichkeit für rote Laserstrahlung und die Lichtstabilität am Tageslicht auch nicht zu genügen.

JP-3/51'182 beschreibt optische Aufzeichnungsmedien, welche ein Cyaninfarbstoff-Kation sowie ein elektrophiles Azometallkomplex-Anion enthalten und eine erhöhte Lichtstabilität besitzen sollen. Als Azometallkomplex-Anionen werden Phenolazonaphtholchromkomplexe offenbart. Diese optischen Aufzeichnungsmedien weisen jedoch im Bereich von 600 bis 900 nm eine sehr breite Absorption und flacher Absorptionskante auf.

US-5,426,015 offenbart ein tiefblau gefärbtes Salz aus einem Cyaninfarbstoff-Kation und einem Bis-azopyridon-nickel-Anion, welches ebenfalls eine breitbandige Absorption aufweist. Beschriftung und Ablesung erfolgen bei 788 nm, so dass auch mit diesem System keine hohe Speicherkapazität erreicht werden kann.

EP-438'225 beschreibt konventionelle optische Platten enthaltend fluoreszierende Stoffe, darunter auch Rhodamin. Diese Medien sind mit einem Laserstrahl bei 780 nm lesbar, jedoch keineswegs optisch beschriftbar.

DE-A-3 503 995 offenbart einen optischen Informationsaufzeichnungsträger ohne Reflektorschicht, welcher Radikalkationen aromatischer Polyamine allein oder in Kombination mit Farbstoffen verschiedener Klassen enthält. Die Regenerierungstendenz der Aufnahmeschicht nach der Aufzeichnung soll dadurch verbessert werden. Die Mischbarkeit mit gewissen Xanthenen ist erwähnt, empfohlen werden aber nur Polymethinfarbstoffe.

US-A-4 809 022 offenbart optische Informationsmedien, welche direkt nach der Aufnahme wiedergegeben werden können. Die Aufnahmeschicht enthält als essentieller Bestandteil ein thermisch zersetzliches Material wie Nitrocellulose, dessen Refraktionsindex bei 1,51 liegt. Bei der Aufnahme zersetzt die Nitrocellulose explosionsartig, wobei ein Leerraum hinterlassen wird. Rhodamin- und Xanthenfarbstoffe werden unter anderen erwähnt, jedoch ist die Menge Farbstoff funktionsbedingt gering.

EP-A-0 174 054 offenbart ein thermisches Abbildungsverfahren enthaltend Xanthenverbindungen, welche in einem Bindemittel eingebettet sind. Durch irreversible unimolekulare Abspaltung einer Urethangruppe und Zyklisierung wird eine Farbverschiebung erzeugt, wobei Farbbilder mit einer guten Auflösung von zum Beispiel 25 µm erzeugt werden können. Die zyanfarbene Verbindung gemäss Beispiel 1 wird mit einem 648 nm Kryptonlaser ausgebleicht. Wie optische Disks auf dieser Basis funktionieren sollten, ist jedoch nicht angegeben.

Ziel der Erfindung war die Bereitstellung eines optischen Aufzeichnungsmediums, dessen Aufzeichnungsschicht hohe Speicherkapazität bei hervorragenden sonstigen Eigenschaften besitzt. Dieses Aufzeichnungsmedium sollte bei der gleichen Wellenlänge im Bereich von 600 bis 700 nm sowohl beschriftet als auch gelesen werden können. Hauptmerkmale der erfindungsgemässen Aufzeichnungsschicht sind die sehr hohe Anfangsreflektivität im genannten Wellenlängenbereich der Laserdioden, welche mit hoher Empfindlichkeit geändert werden kann, der hohe Brechungsindex, die schmale Absorptionsbande im Festzustand, die gute Gleichmässigkeit der Schriftbreite bei unterschiedlichen Pulsdauem sowie die gute Lichtbeständigkeit und die gute Löslichkeit in polaren Lösungsmitteln.

Ganz überraschend konnte durch die Verwendung bestimmter Xanthen-Farbstoffe als Aufzeichnungsschicht ein optisches Aufzeichnungsmedium bereitgestellt werden, dessen Eigenschaften erstaunlich besser sind, als bei bisher bekannten Aufzeichnungsmedien.

Die Erfindung betrifft demnach ein optisches Aufzeichnungsmedium, enthaltend ein Substrat, eine reflektierende Schicht und eine Aufzeichnungsschicht, dadurch gekennzeichnet, dass diese Aufzeichnungsschicht aus einem oder mehreren Farbstoffen der Formel (I), 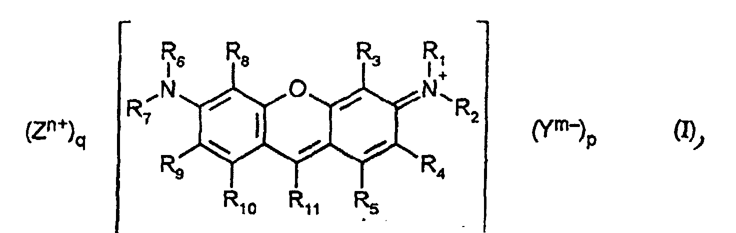 gegebenenfalls einem anderen Farbstoff in einer Menge von höchstens 50 Gew.-%, bezogen auf die Aufzeichnungsschicht, und gegebenenfalls einem Stabilisator besteht, worin R₁, R₂, R₆ und R₇ unabhängig voneinander für Wasserstoff, unsubstituiertes oder mit Halogen, C₁-C₈Alkoxy, C₁-C₈Alkylthio, NO₂, CN, NR₁₂R₁₃, COO⁻, COOH, COO-C₁-C₈Alkyl, SO₃⁻ SO₃H oder SO₃-C₁-C₈Alkyl einfach oder mehrfach substituiertes C₁-C₂₀Alkyl, C₂-C₂₀Alkenyl oder C₂C-₂₀Alkinyl oder unsubstituiertes oder mit C₁-C₈Alkyl, C₁-C₈Alkoxy, C₁-C₈Alkylthio, Halogen, NO₂, CN, NR₁₂R₁₃, SO₃⁻, SO₃R₁₂, SO₂NR₁₂R₁₃, COO⁻, COOR₁₂. CONR₁₂R₁₃, PO₃⁻, PO(OR₁₂)(OR₁₃) oder SiR₁₄R₁₅R₁₆ einfach oder mehrfach substituiertes C₇C₁₈Aralkyl oder C₆-C₁₄Aryl stehen, jedoch R₁ und R₆ sowie R₂ und R₇ nicht jeweils beide gleichzeitig Wasserstoff, wobei R₁ und R₂ sowie R₆ und R₇ unabhängig voneinander je paarweise getrennt oder, falls sie substituierbare Stellen enthalten, über eine Direktbindung oder über eine Brücke -O- oder -NR₁₂- miteinander so verbunden sein können, dass mit dem gemeinsamen N⁺ ein fünf- oder sechsgliedriger Heterozyklus gebildet wird;
R₃, R₄, R₅, R₈, R₉ und R₁₀ unabhängig voneinander für Wasserstoff, Halogen, OR₁₇, SR₁₇, NO₂, NR₁₈R₁₉ oder unsubstituiertes oder mit Halogen, C₁-C₈Alkoxy, C₁-C₈Alkylthio, NO₂, CN oder NR₁₈R₁₉ einfach oder mehrfach substituiertes C₁-C₂₀Alkyl, C₂-C₂₀Alkenyl, C₂-C₂₀Alkinyl oder C₇-C₁₈Aralkyl stehen, wobei R₁ und R₃, R₂ und R₄, R₆ und R₈ sowie R₇ und R₉ unabhängig voneinander je paarweise getrennt, oder, falls jeweils beide mindestens eine substituierbare Stelle enthalten, über eine Direktbindung oder über eine Brücke -O- oder -NR₂₀- miteinander so verbunden sind, dass mit der gemeinsamen Gruppe C-C=N⁺, C=C-N oder C-C-N ein fünf- oder sechsgliedriger Heterozyklus gebildet wird,
oder R₄ und R₅ oder davon unabhängig R₉ und R₁₀ sind zusammen unsubstituiertes oder mit C₁-C₈Alkyl, C₁-C₈Alkoxy, C₁-C₈Alkylthio, Halogen, NO₂, CN, NR₁₈R₁₉, SO₃⁻ SO₃R₁₇, SO₂NR₁₈R₁₉, COO⁻, COOR₁₇, CONR₁₈R₁₉, PO₃⁻, PO(OR₁₈)(OR₁₉) oder SiR₂₁R₂₂R₂₃ einfach oder mehrfach substituiertes 1,4-Buta-1,3-dienylen, so dass gegebenenfalls mit der gemeinsamen C=C-Gruppe ein sechsgliedriger aromatischer Ring gebildet wird;
R₁₁ für Wasserstoff, (CH₂)ₖCOO⁻ (CH₂)ₖCOOR₂₄, C₁-C₂₀Alkyl, C₂-C₂₀Alkenyl, C₂-C₂₀Alkinyl oder unsubstituiertes oder einfach oder mehrfach mit Halogen, NO₂, CN, NR₂₄R₂₅, SO₃⁻, SO₃R₂₄, SO₂NR₂₄R₂₅, COO⁻, (CH₂)ₖOR₂₄, (CH₂)ₖOCOR₂₄, COOR₂₄, CONR₂₄R₂₅, OR₂₄, SR_{24,} PO₃⁻, PO(OR₂₄)(OR₂₅) oder SiR₂₁R₂₂R₂₃ substituiertes C₇-C₁₈Aralkyl oder C₆₋C₁₄Aryl steht;
R₁₂, R₁₃, R₁₇, R₁₈, R₁₉, R₂₀, R₂₄ und R₂₅ unabhängig voneinander für Wasserstoff, C₁-C₂₀Alkyl, C₂-C₂₀Alkenyl, C₂-C₂₀Alkinyl oder C₇-C₁₈Aralkyl, oder für unsubstituiertes oder mit C₁-C₈Alkyl, C₁-C₈Alkoxy, C₁-C₈Alkylthio, Halogen, NO₂, CN, NH₂, NHR₂₁, NR₂₁R₂₂, SO₃⁻, SO₃R₂₃, SO₂NH₂, SO₂NHR₂₁, SO₂NR₂₁R₂₂, COO⁻, COOR₂₃, CONH₂, CONHR₂₁, CONR₂₁R₂₂, PO₃⁻, PO(OR₂₁)(OR₂₂) oder SiR₁₄R₁₅R₁₆ einfach oder mehrfach substituiertes C₆-C₁₄Aryl stehen,
oder NR₁₂R₁₃, NR₁₈R₁₉, NR₂₁R₂₂ oder NR₂₄R₂₅ einen fünf- oder sechsgliedrigen, gegebenenfalls einen weiteren N oder O-Atom enthaltenden Heterozyklus bedeuten, welcher einfach oder mehrfach mit C₁-C₈Alkyl substituiert sein kann;
R₁₄, R₁₅, R₁₆, R₂₁, R₂₂ und R₂₃ unabhängig voneinander für C₁-C₂₀Alkyl, C₂-C₂₀Alkenyl, C₂-C₂₀Alkinyl oder C₇-C₁₈Aralkyl stehen;
Y für ein Metallkomplexanion oder metallorganisches Anion, oder für ein Gemisch davon, steht;
Z für ein Proton oder ein Metall-, Ammonium- oder Phosphonium-Kation, oder für ein Gemisch davon, steht;
k für eine ganze Zahl von 1 bis 10 steht;
m, n und o unabhängig voneinander je für eine ganze Zahl von 1 bis 3 stehen; und
p und q je für eine Zahl von 0 bis 4 stehen, wobei o, p und q je nach Ladung der zugehörigen Teilstrukturen in einem solchen Verhältnis zueinander stehen, dass in Formel (I) keine überschüssige positive oder negative Ladung resultiert.

Sind die Zahlen p und q keine ganzen Zahlen, so ist Formel (I) dahin zu interpretieren, dass es sich dabei um ein Gemisch bestimmter molarer Zusammensetzung handelt, dessen einzelnen Komponenten gegebenenfalls auch unterschiedlicher Stöchiometrie sein können.

Anione anorganischer oder organischer Säuren sind beispielsweise Fluorid, Chlorid, Bromid, lodid, Perchlorat, Periodat, Carbonat, Hydrogencarbonat, Sulfat, Hydrogensulfat, Phosphat, Hydrogenphosphat, Dihydrogenphosphat, Tetrafluoroborat, Hexafluoroantimonat, Acetat, Oxalat, Methansulfonat, Trifluormethansulfonat, Tosylat, Methylsulfat, Phenolat, Benzoat oder ein negativ geladener Metallkomplex.

Metall-, Ammonium- oder Phosphonium-Katione sind beispielsweise Li⁺, Na⁺, K⁺, Mg²⁺, Ca²⁺, Cu²⁺, Ni²⁺, Fe²⁺, Co²⁺, Zn²⁺, Sn²⁺, La³⁺, Methylammonium, Ethylammonium, Pentadecylamonium, Isopropylammonium, Dicyclohexylammonium, Tetramethylammonium, Tetraethylammonium, Tetrabutylammonium, Benzyltrimethylammonium, Benzyltriethylammonium, Methyltrioctylammonium, Tridodecylmethylammonium, Tetrabutylphosphonium, Tetraphenylphosphonium, Butyltriphenylphosphonium oder Ethyltriphenylphosphonium.

Alkyl, Alkenyl oder Alkinyl, beispielsweise C₁-C₂₀Alkyl, C₂-C₂₀Alkenyl oder C₂-C₂₀Alkinyl, kann geradkettig, verzweigt, monozyclisch oder polyzyclisch sein. C₁-C₂₀Alkyl ist daher zum Beispiel Methyl, Ethyl, n-Propyl, Isopropyl, n-Butyl, sec.-Butyl, Isobutyl, tert.-Butyl, Cyclobutyl, n-Pentyl, 2-Pentyl, 3-Pentyl, 2,2-Dimethylpropyl, Cyclopentyl, n-Hexyl, Cyclohexyl, n-Octyl, 1,1,3,3-Tetramethylbutyl, 2-Ethylhexyl, Nonyl, Trimethylcyclohexyl, Decyl, Menthyl, Thujyl, Bomyl, 1-Adamantyl, 2-Adamantyl, Dodecyl, Tetradecyl, Hexadecyl, Octadecyl oder Eicosyl. C₁-C₂₄Alkyl kann darüberhinaus beispielsweise auch Heneicosyl, Docosyl oder Tetracosyl bedeuten.

C₂-C₂₀Alkenyl ist C₂-C₂₀Alkyl, welches ein- oder mehrfach ungesättigt ist, wobei zwei oder mehr Doppelbindungen gegebenenfalls isoliert oder konjugiert sein können, zum Beispiel Vinyl, Allyl, 2-Propen-2-yl, 2-Buten-1-yl, 3-Buten-1-yl, 1,3-Butadien-2-yl, 2-Cyclobuten-1-yl, 2-Penten-1-yl, 3-Penten-2-yl, 2-Methyl-1-buten-3-yl, 2-Methyl-3-buten-2-yl, 3-Methyl-2-buten-1-yl, 1,4-Pentadien-3-yl, 2-Cydopenten-1-yl, 2-Cyclohexen-1-yl, 3-Cyclohexen-1-yl, 2,4-Cyclohexadien-1-yl, 1-*p*-Menthen-8-yl, 4(10)-Thujen-10-yl, 2-Norbornen-1-yl, 2,5-Norbornadien-1-yl, 7,7-Dimethyl-2,4-norcaradien-3-yl oder die verschiedenen Isomeren von Hexenyl, Octenyl, Nonenyl, Decenyl, Dodecenyl, Tetradecenyl, Hexadecenyl, Octadecenyl, Eicosenyl, Heneicosenyl, Docosenyl, Tetracosenyl, Hexadienyl, Octadienyl, Nonadienyl, Decadienyl, Dodecadienyl, Tetradecadienyl, Hexadecadienyl, Octadecadienyl oder Eicosadienyl.

C₂-C₂₀Alkinyl ist C₂-C₂₀Alkyl oder C₂-C₂₀Alkenyl, welches ein- oder mehrfach doppelt ungesättigt ist, wobei die Dreifachbindungen gegebenenfalls isoliert oder unter sich oder mit Doppelbindungen konjugiert sein können, zum Beispiel 1-Propin-3-yl, 1-Butin-4-yl, 1-Pentin-5-yl, 2 -Methyl-3-butin-2-yl, 1,4-Pentadiin-3-yl, 1,3-Pentadiin-5-yl, 1-Hexin-6-yl, cis-3-Methyl-2-penten-4-in-1-yl, trans-3-Methyl-2-penten-4-in-1-yl, 1,3-Hexadiin-5-yl, 1-Octin-8-yl, 1-Nonin-9-yl, 1-Decin-10-yl oder 1-Tetracosin-24-yl.

C₇-C₁₈Aralkyl ist zum Beispiel Benzyl, 2-Benzyl-2-propyl, β-Phenyl-ethyl, 9-Fluorenyl, α,α-Dimethylbenzyl, ω-Phenyl-butyl, ω-Phenyl-octyl, ω-Phenyl-dodecyl oder 3-Methyl-5-(1',1',3',3'-tetramethyl-butyl)-benzyl. C₇-C₂₄Aralkyl kann darüberhinaus beispielsweise auch 2,4,6-Tri-tert.-butyl-benzyl oder 1-(3,5-Dibenzyl-phenyl)-3-methyl-2-propyl bedeuten. Ist C₇₋C₁₈Aralkyl substituiert, so können sowohl der Alkyl- als auch am Aryl-Teil der AralkylGruppe substituiert sein, wobei letztere Alternative bevorzugt ist.

C₆₋C₁₄Aryl ist zum Beispiel Phenyl, Naphthyl, Biphenylyl, 2-Fluorenyl, Phenanthryl, Anthracenyl oder Terphenylyl.

C₁-C₈Alkoxy ist O-C₁-C₁₈Alkyl, und C₁-C₈Alkylthio ist S-C₁-C₁₈Alkyl.

Halogen ist Chlor, Brom, Fluor oder Jod, bevorzugt Chlor oder Brom.

Das erfindungsgemässe Aufzeichnungsmedium kann neben den Verbindungen der Formel (I) zusätzlich Salze enthalten, beispielsweise Ammoniumchlorid, Pentadecylammoniumchlorid, Natriumchlorid, Natriumsulfat, Natriummethylsulfonat oder Natriummethylsulfat, deren Ionen beispielsweise von den verwendeten Komponenten stammen können. Gegebenenfalls sind die zusätzlichen Salze bevorzugt in Mengen bis 20 Gew.-% enthalten, bezogen auf das Totalgewicht der Aufzeichnungsschicht.

Bevorzugt sind Verbindungen der Formel (I), worin R₁, R₂, R₅ und R₇ unabhängig voneinander für Wasserstoff oder unsubstituiertes oder mit COO⁻, COOH, COO-C₁-C₈Alkyl, SO₃⁻, SO₃H oder SO₃-C₁-C₈Alkyl einfach oder mehrfach substituiertes C₁-C₂₀Alkyl, C₂-C₂₀Alkenyl oder C₂-C₂₀Alkinyl, jedoch R₁ und R₆ sowie R₂ und R₇ nicht jeweils beide gleichzeitig für Wasserstoff, stehen;
wobei R₁ und R₂ sowie R₆ und R₇ unabhängig voneinander je paarweise getrennt oder, falls sie substituierbare Stellen enthalten, über eine Direktbindung oder über eine Brücke -Ooder -NR₁₂- miteinander so verbunden sein können, dass mit dem gemeinsamen N⁺ ein fünf- oder sechsgliedriger Heterozyklus gebildet wird;
R₃ und R₈ unabhängig voneinander für Wasserstoff, Halogen, OR₁₇, NO₂, C₁-C₂₀Alkyl, C₂-C₂₀Alkenyl, C₂-C₂₀Alkinyl oder C₇₋C₁₈Aralkyl steht;
R₄, R₅, R₉ und R₁₀ unabhängig voneinander für Wasserstoff, Halogen, NO₂, OR₁₇ oder unsubstituiertes C₁-C₂₀Alkyl, C₂-C₂₀Alkenyl, C₂-C₂₀Alkinyl oder C₇-C₁₈Aralkyl stehen;
wobei R₁ und R₃, R₂ und R₄, R₆ und R₈ sowie R₇ und R₉ unabhängig voneinander je paarweise getrennt, oder, falls jeweils beide mindestens eine substituierbare Stelle enthalten, über eine Direktbindung miteinander so verbunden sind, dass mit der gemeinsamen Gruppe C-C=N⁺, C=C-N oder C-C-N ein fünf- oder sechsgliedriger Heterozyklus gebildet wird;
R₁₁ für Wasserstoff, (CH₂)ₖCOO⁻, (CH₂)ₖCOOR₂₄ oder unsubstituiertes oder einfach oder mehrfach mit Halogen, NO₂, NR₂₄R₂₅, SO₃⁻, SO₃R₂₄, SO₂NR₂₄R₂₅, (CH₂)ₖOR₂₄, COO⁻, COOR₂₄, CONR₂₄R₂₅ oder OR₂₄ substituiertes Phenyl oder Naphthyl steht;
R₁₇, R₁₉, R₂₄ und R₂₅ unabhängig voneinander für Wasserstoff oder unsubstituiertes C₁-C₂₀Alkyl, C₂-C₂₀Alkenyl, C₂-C₂₀Alkinyl oder C₇-C₁₈Aralkyl stehen; und
o für eine ganze Zahl 1 oder 2 steht; oder
Y^{m-} für ein Übergangsmetallkomplexanion, welches mindestens eine phenolische oder phenylcarboxylische Azoverbindung als Ligand enthält, m für eine ganze Zahl 1 oder 2, und p für eine Zahl von 0 bis 2 stehen; oder
Z für ein Proton oder ein Metall- oder Ammonium-Kation, n für eine ganze Zahl 1 oder 2, und q für eine Zahl von 0 bis 3 stehen;
wobei im Übrigen sämtliche oben angegebenen Überbrückungsmöglichkeiten, Einschränkungen und Definitionen unverändert bleiben.

Besonders bevorzugt sind Verbindungen der Formel (I), worin R₁, R₂, R₆ und R₇ unabhängig voneinander für unsubstituiertes C₁-C₂₀Alkyl stehen, wobei R₁ und R₂ sowie R₆ und R₇ unabhängig voneinander je paarweise getrennt oder über eine Direktbindung oder über eine Brücke -O- oder -NR₁₂- miteinander so verbunden sein können, dass mit dem gemeinsamen N⁺ ein fünf- oder sechsgliedriger Heterozyklus gebildet wird;
R₃, R₄, R₈ und R₉ unabhängig voneinander für Wasserstoff oder unsubstituiertes C₁-C₂₀Alkyl stehen, wobei R₁ und R₃, R₂ und R₄, R₆ und R₈ sowie R₇ und R₉ unabhängig voneinander je paarweise getrennt oder über eine Direktbindung miteinander so verbunden sind, dass mit der gemeinsamen Gruppe C-C=N⁺, C=C-N oder C-C-N ein fünf- oder sechsgliedriger Heterozyklus gebildet wird;
R₅ und R₁₀ für Wasserstoff stehen;
R₁₁ für unsubstituiertes oder einfach oder mehrfach mit Halogen, NO₂, SO₃⁻, SO₃R₂₄, SO₂NR₂₄R₂₅, COO⁻, COOR₂₄ oder CONR₂₄R₂₅ substituiertes Phenyl oder Naphthyl steht;
R₁₂ für Wasserstoff oder unsubstituiertes C₁-C₄Alkyl steht; und
R₂₄ und R₂₅ unabhängig voneinander für Wasserstoff oder unsubstituiertes C₁-C₂₀Alkyl stehen.

Diese Bevorzungen gelten für jede der in Formel (I) enthaltenen Teilstrukturen jeweils unabhängig von den gegebenenfalls vorhandenen anderen Teilstrukturen, sofern die in Formel (I) inhärente Bedingung eingehalten wird, dass keine überschüssige positive oder negative Ladung resultiert. Unter Teilstrukturen von Formel (I) werden deren drei miteinander nicht gebundenen Komponenten [Xanthen]₀, (Y^{m-})ₚ und (Zⁿ⁺)_{q} verstanden.

Besonders bevorzugt, insbesondere wegen ihrer hoher Lichtechtheit, sind Verbindungen der Formel (I), worin Y^{m-} ein Übergangsmetallkomplexanion der Formel (II) darstellt,

[(L₁)M(L₂)]^{m-} (II)

worin L₁ und L₂ unabhängig voneinander Liganden der Formeln 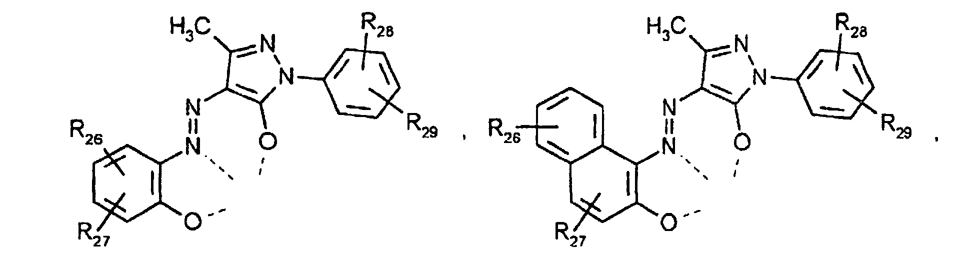 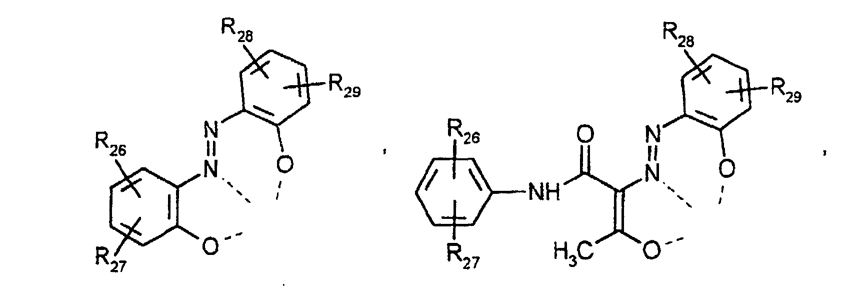 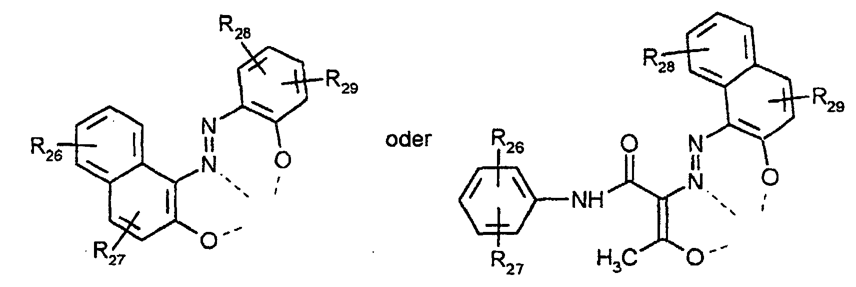 sind,
wobei R₂₆, R₂₇, R₂₈ und R₂₉ unabhängig voneinander Wasserstoff, Halogen, R₃₀, NO₂, NR₃₀R₃₁, NHCO-R₃₀, NHCOO-R₃₀, SO₂-R₃₀, SO₂NH₂, SO₂NH-R₃₀, SO₂NR₃₀R₃₁, SO₃⁻oder SO₃H sind, worin R₃₀ und R₃₁ unabhängig voneinander unsubstituiertes oder mit Hydroxy, Halogen oder C₁-C₆Alkoxy substituiertes C₁-C₁₂Alkyl bedeuten; und M für Cr³⁺ oder Co³⁺ steht.

Ganz besonders bevorzugt sind dabei Verbindungen der Formel (I), worin Y^{m-} ein Übergangsmetallkomplexanion der Formel (II) darstellt, worin L₁ und L₂ unabhängig voneinander Liganden der Formeln 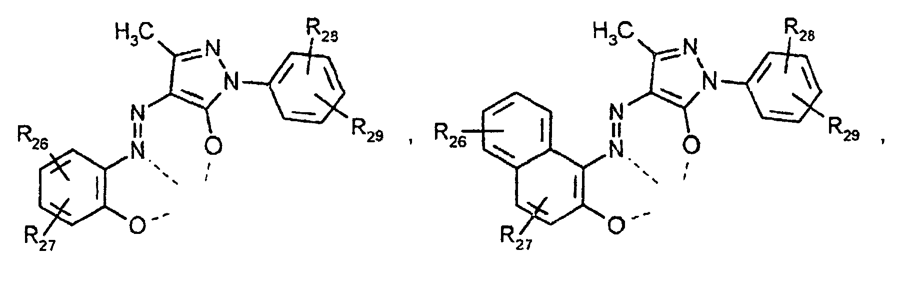 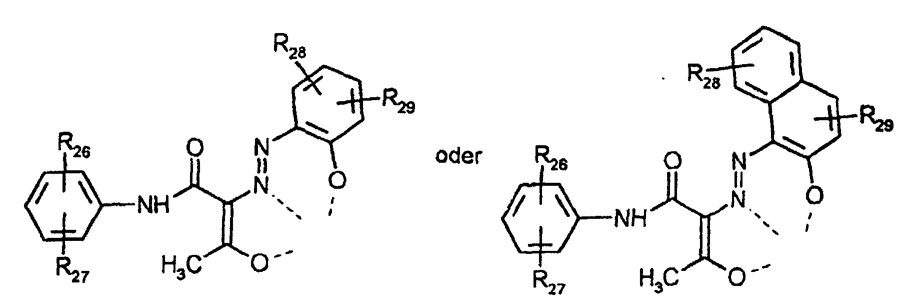 sind.

Besonders bevorzugt sind auch Verbindungen der Formel (I), worin Zⁿ⁺ für [NH₂R₃₂R₃₃]⁺ steht, wobei R₃₂ Wasserstoff oder C₁-C₁₂Alkyl und R₃₃ C₁-C₂₄Alkyl oder C₇-C₂₄Aralkyl bedeuten, und R₃₂ und R₃₃ zusammen von 8 bis 25 Kohlenstoffatome besitzen.

Besonders bevorzugt sind insbesondere auch Verbindungen der Formel (I), worin m, n und o je die Zahl 1, p eine Zahl von 0 bis 2½, und q eine Zahl von 0 bis 1½ sind, wobei die Summe von o und q gleich p ist, so dass in Formel (II) keine überschüssige positive oder negative Ladung resultiert.

Ganz besonders bevorzugt sind die Verbindungen der Formeln 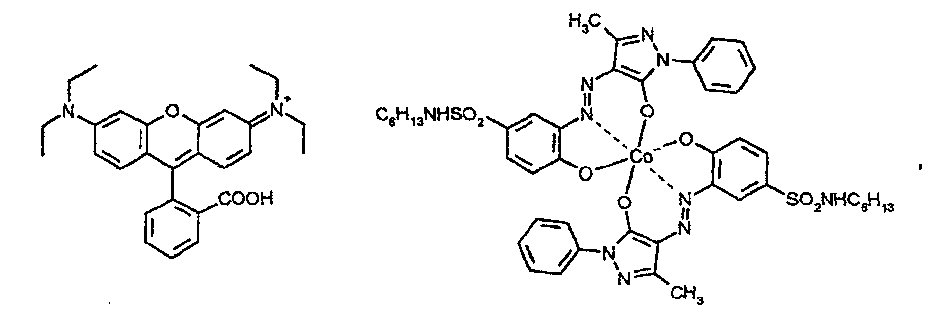 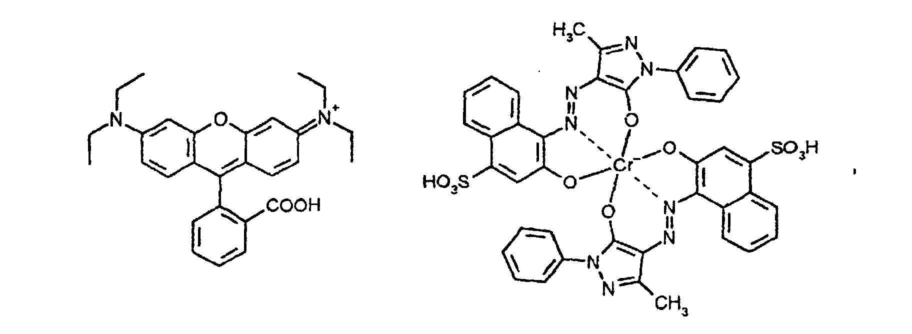 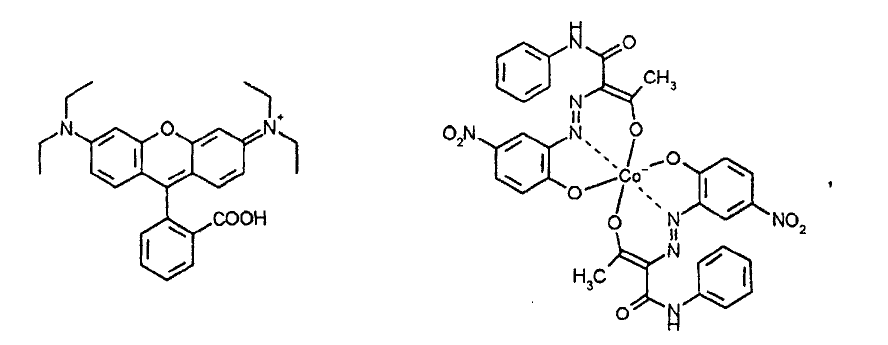 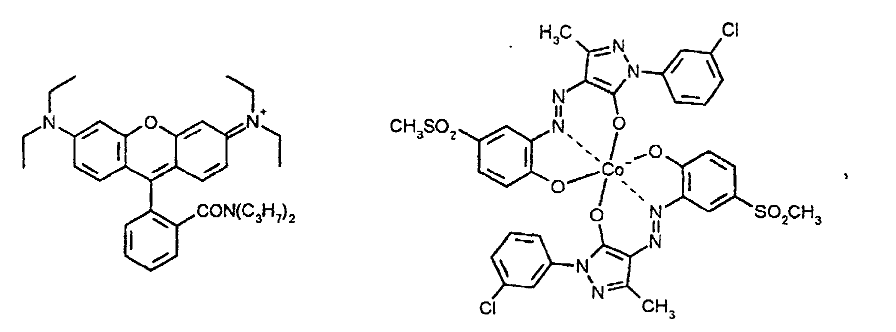 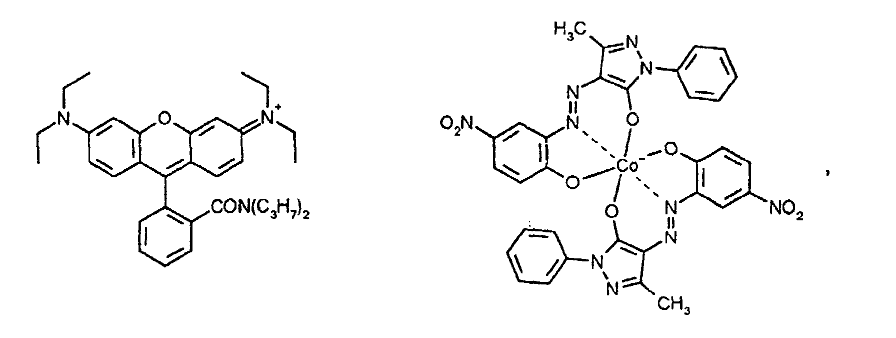 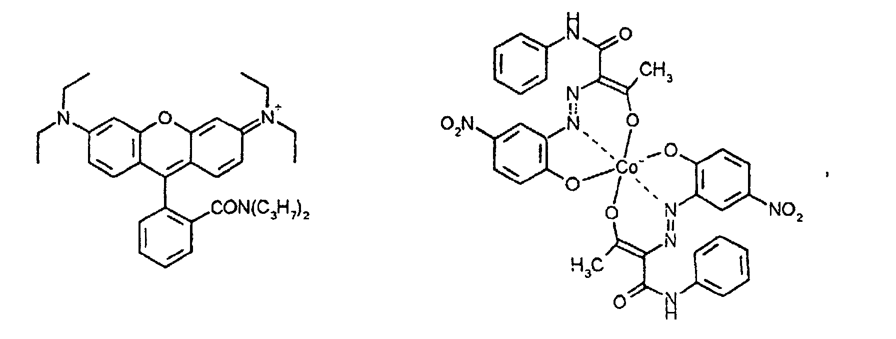 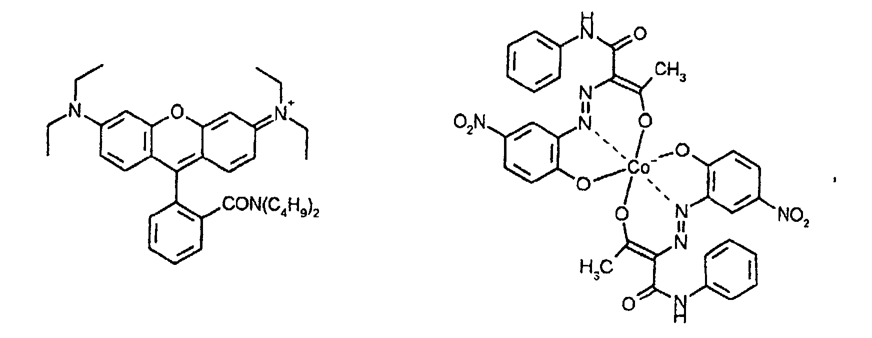 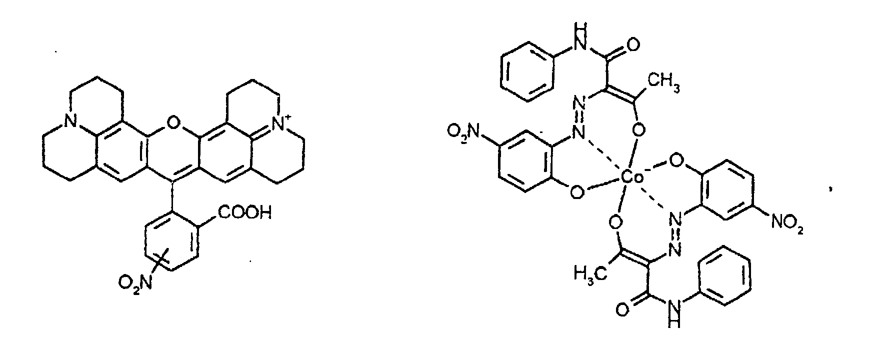 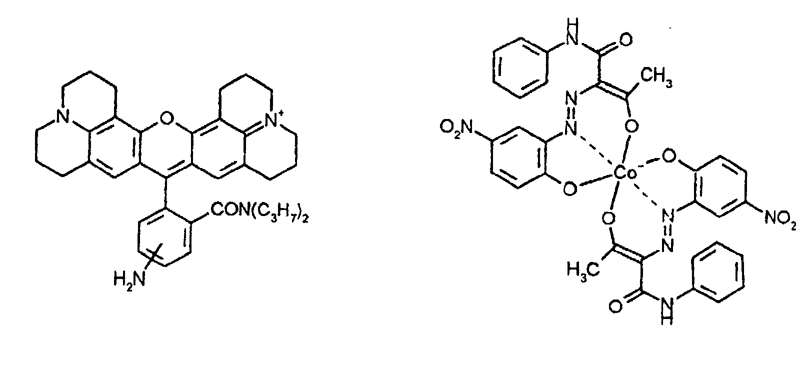 oder

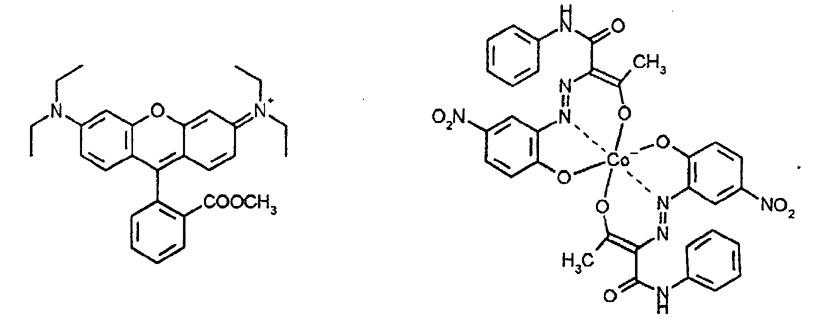

Die Verbindungen der Formeln (I) und (II) sind bekannte Verbindungen, welche zum Beispiel in Ullmanns Encyklopädie der technischen Chemie 23, 381 (4. Auflage 1983) oder im Colour Index 4, 4417 (3^{rd} Edition 1971) nachgeschlagen werden können. Einige davon sind noch neu, aber sie können analog zu den bekannten Verbindungen nach an sich bekannten Methoden hergestellt werden, zum Beispiel nach denjenigen, welche in EP 333 649 oder EP 468 821 offenbart sind. Metallkomplexe, bevorzugt diejenigen der Formel (II), sind aus der Fachliteratur wohlbekannt. Insbesondere kann es sich dabei um diejenigen Metallkomplexe handeln, welche in GB 1 599 812 oder EP 450 421 beschrieben werden, auf dessen Lehre hier ausdrücklich hingewiesen wird.

Die erfindungsgemäss verwendeten Xanthenfarbstoffe weisen in ethanolischer Lösung eine schmale Absorptionsbande auf, deren Maximum bei 540 bis 610 nm liegt und deren Halbwertsbandbreite bei einer Konzentration von 10⁻⁵ Mol/l bevorzugt höchstens 60 nm beträgt. Sehr überraschend besitzen sie zudem eine vergleichsweise schwache Tendenz zur Agglomeration im Festzustand, so dass die Absorptionskurve auch im Festzustand vorteilhaft schmal bleibt.

Die erfindungsgemäss verwendeten Xanthenfarbstoffe weisen auch an der längerwelligen Flanke der Absorptionsbande einen hohen Brechungsindex auf, welcher bevorzugt einen Spitzenwert von 2,0 bis 3,0 im Bereich von 600 bis 700 nm erreicht, wodurch ein Medium mit hoher Reflektivität sowie hoher Empfindlichkeit und guter Wiedergabecharakteristik im erwünschten Spektralbereich ermöglicht wird. Es ist zudem unnötig, einen weiteren Farbstoff der Aufzeichnungsschicht beizumischen, so dass eine sehr gute Lichtechtheit erreicht wird.

Das Substrat, welches als Träger für die darauf angebrachten Schichten fungiert, ist zweckmässig semi-transparent (T ≥ 10%) oder bevorzugt transparent (T ≥ 90%). Der Träger kann eine Dicke von 0,01 bis 10 mm, bevorzugt von 0,1 bis 5 mm aufweisen.

Die Aufzeichnungsschicht ist bevorzugt zwischen dem transparenten Substrat und der reflektierenden Schicht angebracht. Die Dicke der Aufzeichnungsschicht beträgt von 10 bis 1000 nm, bevorzugt von 50 bis 500 nm, besonders bevorzugt um zirka 100 nm, beispielsweise von 80 bis 150 nm. Die Absorption der Aufzeichnungsschicht beträgt dabei beim Absorptionsmaximum typisch von 0,1 bis 1,0. Ganz besonders bevorzugt wird die Schichtdicke abhängig von den jeweiligen Brechungsindizes im nichtbeschrifteten, beziehungsweise im beschrifteten Zustand bei der Lesewellenlänge auf bekannte Weise so gewählt, dass im nichtbeschrifteten Zustand eine konstruktive Interferenz und im beschrifteten Zustand dagegen eine destruktive Interferenz resultieren, oder umgekehrt.

Die reflektierende Schicht, deren Dicke von 10 bis 150 nm betragen kann, hat bevorzugt eine hohe Reflektivität (R ≥ 70%), gekoppelt mit einer niedrigen Transparenz (T ≤ 10%).

Die je nach Schichtaufbau oberste Schicht, zum Beispiel die Reflexionsschicht oder die Aufzeichnungsschicht, wird zweckmässig zusätzlich mit einer Schutzschicht versehen, welche eine Dicke von 0,1 bis 1000 µm, bevorzugt 0,1 bis 50 µm und besonders bevorzugt 0,5 bis 15 µm aufweisen kann. Diese Schutzschicht kann gegebenenfalls auch als Haftvermittler für eine darauf angebrachte, zweite Substratschicht dienen, welche bevorzugt von 0,1 bis 5 mm dick ist und aus dem gleichen Material wie das Trägersubstrat besteht.

Die Reflektivität des gesamten Aufzeichnungsmediums beträgt bevorzugt mindestens 60%.

Das erfindungsgemässe Aufzeichnungsmedium ist mit den Infrarotlaserdioden der üblichen CD-Geräten nach den Anforderungen des Orange Book Standards weder beschriftbar noch lesbar, denn bei 780 nm liegen charakteristisch die Brechungsindizes (n) zwischen 1,4 und 1,9 und deren Imaginärteile (k) zwischen 0 und höchstens 0,04. Dadurch ist die Gefahr einer Beschädigung bei einem irrtümlichen Beschriftungsversuch in einem zu hohe Auflösung nicht befähigten Gerät vorteilhaft weitgehend gebannt. Durch die Verwendung von Farbstoffen der Formel (I) ergeben sich vorteilhaft homogene, amorphe und streuungsarme Aufzeichnungsschichten, und die Brechungsindexkante ist überraschend auch in der Festphase besonders steil. Weitere Vorteile sind die hohe Lichtstabilität am Tageslicht bei gleichzeitiger hoher Empfindlichkeit unter Laserstrahlung hoher Leistungsdichte, die gleichmässige Schriftbreite sowie die gute Thermo- und Lagerstabilität.

Geeignete Substrate sind zum Beispiel Gläser, Mineralien, Keramiken und duroplastische oder thermoplastische Kunststoffe. Bevorzugte Träger sind Gläser und homo- oder copolymere Kunststoffe. Geeignete Kunststoffe sind zum Beispiel thermoplastische Polycarbonate, Polyamide, Polyester, Polyacrylate und Polymethacrylate, Polyurethane, Polyolefine, Polyvinylchlorid, Polyvinylidenfluorid, Polyimide, duroplastische Polyester und Epoxidharze. Das Substrat kann in reiner Form sein oder auch übliche Additive enthalten, beispielsweise UV-Absorber oder Farbstoffe, wie zum Beispiel in JP 04/167 239 als Lichtschutz für die Aufzeichnungsschicht vorgeschlagen wird. In letzterem Fall ist es gegebenenfalls zweckmässig, dass der zum Trägersubstrat zugesetzte Farbstoff ein relativ zum Farbstoff der Aufzeichnungsschicht um mindestens 10 nm, bevorzugt um mindestens 20 nm hypsochrom verschobenes Absorptionsmaximum aufweist.

Zweckmässig ist das Substrat in mindestens einem Teil des Bereichs von 600 bis 700 nm transparent, so dass es für mindestens 90% des darauf fallenden Lichtes der Beschriftungs- oder Auslesewellenlänge durchlässig ist. Das Substrat weist bevorzugt auf der Beschichtungsseite eine spiralförmige Führungsrille auf, mit einer Rillentiefe von 50 bis 500 nm, einer Rillenbreite von 0,2 bis 0,8 µm und einem Abstand zwischen 2 Windungen von 0,4 bis 1,6 µm, besonders bevorzugt mit einer Rillentiefe von 100 bis 200 nm, einer Rillenbreite von 0,3 µm und einem Abstand zwischen 2 Windungen von 0,6 bis 0,8 µm.

Die Aufzeichnungsschicht kann ausschliesslich oder im wesentlichen aus einem oder mehreren erfindungsgemässen Xanthenfarbstoffen bestehen. Zur nochmaligen Steigerung der Beständigkeit können aber gegebenenfalls auch bekannte Stabilisatoren in üblichen Mengen zugesetzt werden, wie zum Beispiel ein in JP 04/025 493 beschriebenes Nickeldithiolat als Lichtstabilisator. Gegebenenfalls können auch zusätzliche Farbstoffe zugesetzt werden, deren Menge jedoch zweckmässig höchstens 50 Gew.-%, bevorzugt höchstens 10 Gew.-%, bezogen auf die Aufzeichnungsschicht, beträgt. Da die Aufzeichnungsschicht im wesentlichen aus einem Farbstoff der Formel (I) bestehen soll, ist es zweckmässig, dass der gegebenenfalls zugesetzte Farbstoff ein relativ zum Farbstoff der Formel (I) hypsochrom verschobenes Absorptionsmaximum aufweist, und dass die Menge des zugesetzten Farbstoffes so klein gehalten wird, dass der Anteil des letzteren an der Gesamtabsorption der Aufzeichnungsschicht im Bereich von 600 bis 700 nm höchstens 20%, bevorzugt höchstens 10% beträgt. Besonders bevorzugt wird jedoch kein zusätzlicher Farbstoff zugesetzt.

Als reflektierendes Material für die Reflexionsschicht eignen sich besonders Metalle, welche die zur Aufzeichnung und Wiedergabe verwendete Laserstrahlung gut reflektieren, zum Beispiel die Metalle der dritten, vierten und fünften Hauptgruppe und der Nebengruppen des periodischen Systems der chemischen Elemente. Besonders geeignet sind Al, In, Sn, Pb, Sb, Bi, Cu, Ag, Au, Zn, Cd, Hg, Sc, Y, La, Ti, Zr, Hf, V, Nb, Ta, Cr, Mo, W, Fe, Co, Ni, Ru, Rh, Pd, Os, Ir, Pt und die Lanthanidenmetalle Ce, Pr, Nd, Pm, Sm, Eu, Gd, Tb, Dy, Ho, Er, Tm, Yb und Lu, sowie deren Legierungen. Besonders bevorzugt ist aus Gründen der hohen Reflektivität und leichten Herstellbarkeit eine Reflexionsschicht aus Aluminium, Silber, Kupfer, Gold oder deren Legierungen.

Als Material für die Schutzschicht eignen sich hauptsächlich Kunststoffe, die in dünner Schicht entweder direkt oder mit Hilfe von Haftschichten auf den Träger oder die oberste Schicht aufgetragen sind. Man wählt zweckmässig mechanisch und thermisch stabile Kunststoffe mit guten Oberflächeneigenschaften, die noch modifiziert, zum Beispiel beschrieben werden können. Es kann sich sowohl um duroplastische wie auch um thermoplastische Kunststoffe handeln. Bevorzugt sind strahlungsgehärtete (zum Beispiel mit UV-Strahlung) Schutzschichten, die besonders einfach und wirtschaftlich herstellbar sind. Strahlungshärtbare Materialien sind in grosser Vielzahl bekannt. Beispiele für strahlungshärtbare Monomere und Oligomere sind Acrylate und Methacrylate von Diolen, Triolen und Tetrolen, Polyimide aus aromatischen Tetracarbonsäuren und aromatischen Diaminen mit C₁-C₄Alkylgruppen in mindestens zwei Orthostellungen der Aminogruppen, und Oligomere mit Dialkyl-, zum Beispiel Dimethylmaleinimidylgruppen.

Die erfindungsgemässen Aufzeichnungsmedien können auch zusätzliche Schichten aufweisen, wie zum Beispiel Interferenzschichten. Es ist auch möglich, Aufzeichnungsmedien mit mehreren (zum Beispiel zwei) Aufzeichnungsschichten aufzubauen. Der Aufbau und die Verwendung solcher Materiale sind dem Fachmann bekannt. Bevorzugt sind gegebenenfalls Interferenzschichte, welche zwischen der Aufzeichnungsschicht und der reflektierenden Schicht und/oder zwischen der Aufzeichnungsschicht und dem Substrat angeordnet sind und aus einem dielektrischen Material bestehen, zum Beispiel wie in EP 353 393 beschrieben aus TiO₂, Si₃N₄, ZnS oder Silikonharzen.

Die erfindungsgemässen Aufzeichnungsmedien können nach an sich bekannten Verfahren hergestellt werden, wobei je nach verwendeten Materialien und deren Funktionsweise unterschiedliche Beschichtungsmethoden angewandt werden können.

Geeignete Beschichtungsverfahren sind zum Beispiel Tauchen, Giessen, Streichen, Rakeln und Schleudergiessen, sowie Aufdampfverfahren, die im Hochvakuum durchgeführt werden. Bei der Anwendung von zum Beispiel Giessverfahren werden im allgemeinen Lösungen in organischen Lösungsmitteln verwendet. Bei der Verwendung von Lösungsmittein ist darauf zu achten, dass die verwendeten Träger gegen diese Lösungsmittel unempfindlich sind. Geeignete Beschichtungsverfahren und Lösungsmittel sind zum Beispiel in EP 401 791 beschrieben.

Die Aufzeichnungsschicht wird bevorzugt durch Aufschleudem einer Farbstofflösung aufgebracht, wobei als Lösungsmittel insbesondere Alkohole, wie zum Beispiel 2-Methoxyethanol, Isopropanol, Isobutanol oder n-Butanol, oder bevorzugt fluorierte Alkohole, wie zum Beispiel 2,2,2-Trifluorethanol oder 2,2,3,3-Tetrafluor-1-propanol, und Gemische davon, sich bewährt haben.

Das Aufbringen der metallischen Reflexionsschicht erfolgt bevorzugt durch Sputtem, Aufdampfen im Vakuum oder chemische Dampfaufscheidung (CVD). Die Sputtertechnik wird wegen der hohen Haftfähigkeit zum Träger für das Aufbringen der metallischen Reflexionsschicht besonders bevorzugt. Diese Techniken sind bekannt und in Fachbüchern beschrieben (z.B. J.L. Vossen und W. Kern, "Thin Film Processes", Academic Press, 1978).

Der Aufbau des erfindungsgemässen Aufzeichnungsmediums richtet sich hauptsächlich nach der Auslesemethode; bevorzugtes Funktionsprinzip ist die Messung der Veränderung der Reflexion.

So können zum Beispiel folgende Strukturen zur Anwendung kommen : transparenter Träger/Aufzeichnungsschicht (gegebenenfalls mehrschichig)/Reflexionsschicht und falls zweckmässig, Schutzschicht (nicht unbedingt transparent), oder Träger (nicht unbedingt transparent)/Reflexionsschicht/Aufzeichnungsschicht und falls zweckmässig transparente Schutzschicht. Im ersten Fall wird das Licht von der Trägerseite eingestrahlt, während im letzten Fall die Strahlung von der Aufzeichnungsschicht- bzw. gegebenenfalls von der Schutzschichtseite einfällt In beiden Fällen befindet sich der Lichtdetektor auf gleicher Seite wie die Lichtquelle. Der ersterwähnte Aufbau des erfindungsgemäss zu verwendenden Aufzeichnungsmaterials ist im allgemeinen bevorzugt.

Geeignete Laser sind zum Beispiel handelsübliche Diodenlaser, insbesondere HalbleiterDiodenlaser, zum Beispiel He/Ne-, Kr-, GaAsAl-, lnGaAlP- oder GaAs-Laserdioden einer Wellenlänge von 602, 612, 633, 635, 647, 650, 670 oder 680 nm. Die Aufzeichnung kann mit Hilfe eines Lichtmodulators Punkt für Punkt vorgenommen werden. Bevorzugt werden Diodenlaser verwendet, deren Strahlung auf die Aufzeichnungsschicht fokussiert wird.

Das erfindungsgemässe Verfahren ermöglicht eine Speicherung von Informationen mit hoher Zuverlässigkeit und Beständigkeit, welche sich durch eine sehr gute mechanische und thermische Stabilität sowie durch eine hohe Lichtstabilität und scharfe Randzonen auszeichnen. Besonders vorteilhaft ist das überraschend hohe Signal/Rauschverhältnis von Trägermaterial zur Informationsmarkierung, das ein einwandfreies Auslesen zulässt. Die hohe Speicherkapazität ist insbesondere im Videobereich wertvoll.

Das Auslesen der Information erfolgt nach an sich bekannten Methoden durch Registrierung der Veränderung der Reflexion unter Verwendung von Laserstrahlung, zum Beispiel wie in "CD-Player und R-DAT Recorder" (Claus Biaesch-Wiepke, Vogel Buchverlag, Würzburg 1992) beschrieben.

Das erfindungsgemässe Informationen enthaltende Medium stellt insbesondere ein optisches Informationsmaterial vom WORM-Typ dar. Es kann zum Beispiel als abspielbare CD (compact disc), als Speichermaterial für Computer oder als Ausweis- und Sicherheitskarte oder für die Herstellung von diffraktiven optischen Elementen, beispielsweise Hologrammen, verwendet werden.

Ein weiterer Gegenstand der Erfindung ist daher ein Verfahren zur optischen Aufzeichnung, Speicherung und Wiedergabe von Information, dadurch gekennzeichnet, dass ein erfindungsgemässes Aufzeichnungsmedium verwendet wird. Die Aufzeichnung und die Wiedergabe erfolgen bevorzugt im Wellenlängenbereich von 600 bis 700 nm.

### Die nachfolgenden Beispiele erläutern die Erfindung näher:

Beispiel A1 : In einem 100 ml Dreihalskolben, versehen mit Thermometer, Rührer und Wasserabscheider, werden 2,84 g (15 mMol) 8-Hydroxyjulolidin, 2,36 g (16 mMol) Phthalsäureanhydrid und 30 g o-Dichlorbenzol vorgelegt und unter Rühren während 15 Min auf Rückfluss erhitzt. Anschliessend werden 1,8 g (10 mMol) 8-Hydroxyjulolidin innerhalb einer Stunde portionenweise (6× je 0,3 g) zugegeben. Danach wird das Reaktionsgemisch nochmals 3 Std unter Rückfluss gerührt. Das violette, pastöse Reaktionsgemisch wird abgekühlt, auf 33 g 3%ige NaOH-Lösung gegossen und ½ Std gerührt. Das Gemisch wird dreimal mit Methylenchlorid extrahiert, die vereinigten organischen Phasen mit Wasser gewaschen, über Magnesiumsulfat getrocknet, filtriert und eingedampft. Der Rückstand wird in 250 ml Hexan suspendiert und 3 Std stark gerührt, filtriert und 48 Std bei 80°C getrocknet. Man erhält 5,5 g (83,5% d.Th.) eines rot-violetten Pulvers der Formel 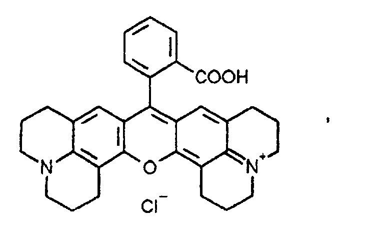 welches nach Dünnschichtschromatographie (DC; Kieselgel, Ethanol, R_{f} = 0,15) rein ist. UV/VIS (Ethanol): λₘₐₓ = 567 nm, ε = 71'950 l^{·}mol^{-1·}cm⁻¹.

Beispiel A2 : In einem 100 ml Dreihalskolben, versehen mit Thermometer, Rührer und Wasserabscheider, werden 10,0 g (60,5 mMol) 3-Diethylaminophenol, 17,05 g (88,8 mMol) Trimellitsäureanhydrid und 23,3 g o-Dichlorbenzol vorgelegt und unter Rühren während 6 Std auf Rückfluss erhitzt. Das violette, pastöse Reaktionsgemisch wird in 40 ml Wasser und 200 ml Ethanol gelöst und bei 90°C eingedampft. Der Rückstand wird in 90 ml gesättigter Natriumhydrogencarbonat-Lösung gelöst, filtriert und das Filtrat mit konz. Salzsäure auf pH 4 angesäuert. Das ausgefallene Rohprodukt wird abfiltriert, mit 500 ml Wasser gewaschen und bei 70°C /165 mbar getrocknet. Man erhält 16 eines violetten Pulvers, welches nach DC (Laufmittel Ethanol) noch polare Verunreinigungen enthält. Das Rohprodukt wird chromatographisch auf Kieselgel in einer Flashsäule mit Ethanol als Laufmittel gereinigt. Man erhält 2,8 g (9% d.Th.) eines violetten Pulvers der Formel: 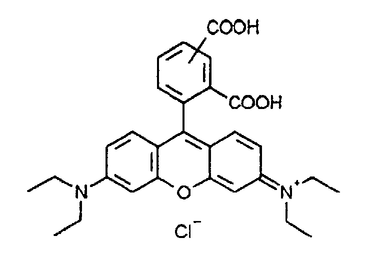 UV/VIS (Ethanol): λₘₐₓ = 546 nm, ε = 74'150 l^{·}mol^{-1·}cm⁻¹;
DC (Kieselgel; Ethanol): R_{f} = 0,20 bzw. 0,11 für die beiden möglichen Isomeren.

Beispiel A3 : In einem 1000 ml Dreihalskolben, versehen mit Magnetrührer, Thermometer, Rückflusskühler und Stickstoffüberleitung, werden innerhalb von 10 Min 25 ml konz. H₂SO₄ zu 500 ml vorgelegtes Methanol getropft. Anschliessend werden 10 g (20,8 mMol) Rhodamin B zugegeben und die rote Lösung 16 Std auf Rückfluss erhitzt. Danach wird das Reaktionsgemisch abgekühlt und das Lösungsmittel eingedampft. Der Rückstand wird auf 250 ml gesättigte NaCI-Lösung gegossen und 3× mit je 250 ml CH₂Cl₂ extrahiert. Die vereinigten organischen Phasen werden 2× mit je 250 ml Wasser gewaschen, über MgSO₄ getrocknet, filtriert und eingedampft. Der rot-violette Rückstand wird in 30 ml Methanol unter Rückfluss gelöst. Die Lösung wird unter Rühren auf 0°C abgekühlt und dann langsam mit 150 ml Diethyläther (Et₂O) versetzt, bis Kristallbildung einsetzt. Danach werden weitere 300 ml Et₂O zugegeben und die Suspension 15 Min gerührt. Der Niederschlag wird abfiltriert, 3x mit je 50 ml Et₂O gewaschen und bei 60°C 165 mbar getrocknet. Man erhält 8,64 g (84,2% d.Th.) grün-violette, metallisch glänzende Kristalle der Formel: 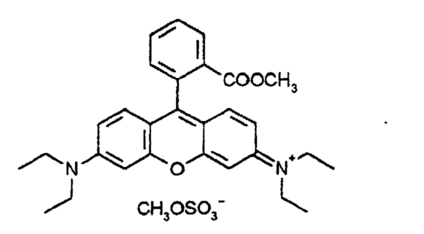 UV/VIS (Ethanol): λₘₐₓ = 556 nm, ε = 119'210 l^{·}mol^{-1^{·}}cm⁻¹;
DC (Kieselgel; Ethanol / 1N HCl 20:1): R_{f} = 0,56.

| | | | | |
|---|---|---|---|---|
| Elementaranalyse | C 63,91% | H 6,35% | N 5,17% | S 5,65%; |
| ( theoretisch | C 63,36% | H 6,38% | N 4,93% | S 5,64% ). |

Beispiel A4 : In einem 250 ml Dreihalskolben, versehen mit Magnetrührer, Thermometer, Rückflusskühler, Tropftrichter und Stickstoffüberleitung, werden 10 g (20,8 mMol) Rhodamin B in 100 ml Dimethylformamid (DMF) vorgelegt. Unter Rühren werden 10,15 g (62,6 mMol) Carbonyl-diimidazol zugegeben und das Gemisch auf 40°C erwärmt. Nach 30 Min ist die Gasentwicklung beendet und das Reaktionsgemisch wird auf Raumtemperatur (RT) abgekühlt. 7 g (68,9 mMol) Di-n-propylamin werden zugetropft und das Gemisch 45 Min gerührt. Nach DC (Kieselgel; Ethanol / 1N HCI 20:1) ist kein Edukt mehr vorhanden. Das Reaktionsgemisch wird auf 500 ml 1N HCI gegossen und 4× mit je 150 ml CH₂Cl₂ extrahiert. Die vereinigten organischen Phasen werden mit 100 ml 1N HCI und 4× mit je 100 ml Wasser gewaschen, über MgSO₄ getrocknet, filtriert und eingedampft. Der Rückstand wird in 200 ml Aceton unter Rückfluss gelöst, auf RT abgekühlt, vorsichtig mit 800 ml Et₂O versetzt und die Suspension 15 Min. bei 0°C gerührt. Anschliessend wird filtriert, der Rückstand 3 mal mit 50 ml Et₂O gewaschen und bei 60°C / 165 mbar getrocknet.
Man erhält 7,0 g (59,7% d.Th.) violette, metallisch glänzende Kristalle der Formel: 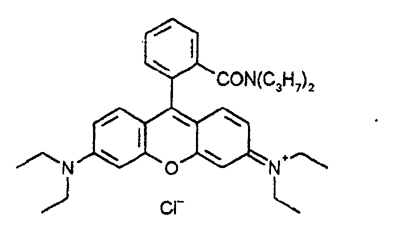 UV/VIS (Ethanol): λₘₐₓ = 563 nm, ε = 109'420 l^{·}mol^{-1·}cm⁻¹;
DC (Kieselgel; Ethanol / 1N HCI 20:1): R_{f} = 0,69.

| | | | | |
|---|---|---|---|---|
| Elementaranalyse | C 71,05% | H 7,82% | N 7,35% | Cl 5,69% ; |
| ( theoretisch | C 72,64% | H 7,89% | N 7,47% | Cl 6,31% ) . |

Beispiel A5 : In einem 100 ml Dreihalskolben, versehen mit Thermometer, Rührer und Wasserabscheider, werden 3,6 g (21,6 mMol) 3-Diethylaminophenol, 4,8 g (25 mMol) 4Nitro-phthalsäureanhydrid und 30 g o-Dichlorbenzol vorgelegt und unter Rühren während 7 Std auf Rückfluss erhitzt. Das violette Reaktionsgemisch wird mit 33 g 3%iger wässriger NaOH-Lösung versetzt, die Phasen getrennt und die organische Phase mit 66 g 5%iger H₂SO₄ sauer gestellt. Das Gemisch wird 3× mit je 100 ml CH₂Cl₂ extrahiert, die vereinigten organischen Phasen mit 150 ml gesättigter NaCl-Lösung gewaschen, über MgSO₄ getrocknet, filtriert und eingedampft. Der Rückstand wird mit Ethanol / 1N HCI 100:1 über 250 g Kieselgel filtriert, um unpolare Verunreinigungen zu entfernen. Man erhält 1,6 g (28,3% d.Th.) eines violetten Pulvers der Formel: 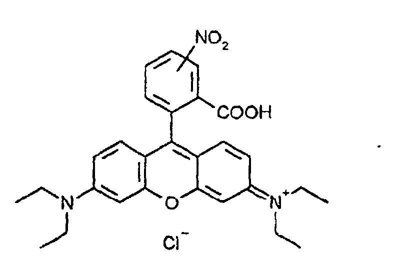 UV/VIS (Ethanol): λₘₐₓ = 553 nm, ε = 58'910 l^{·}mol^{-1·}cm⁻¹;
DC (Kieselgel; Ethanol / 1N HCI 100:1): R_{f} = 0,29 bzw. 0,51 für die beiden möglichen Isomeren.

Beispiel A6 : In einem 25 ml Dreihalskolben, versehen mit Magnetrührer, Thermometer, Rückflusskühler, Tropftrichter und Stickstoffüberleitung, werden 0,6 g (1,14 mMol) der nach Beispiel A5 hergestellten Verbindung in 10 ml DMF vorgelegt. Unter Rühren werden 0,55 g (3,43 mMol) Carbonyl-diimidazol zugegeben und das Gemisch auf 40°C erwärmt. Nach 30 Min ist die Gasentwicklung beendet und das Reaktionsgemisch wird auf RT abgekühlt. 0,38 g (3,76 mMol) Dipropylamin werden zugetropft und das Gemisch 20 Std gerührt. Nach DC (Kieselgel; Ethanol / 1N HCI 100:1) ist noch sehr wenig Edukt vorhanden. Das Reaktionsgemisch wird auf 80 ml 1N HCI gegossen und 4 mal mit 80 ml CH₂Cl₂ extrahiert. Die vereinigten organischen Phasen werden mit 50 ml 1N HCI und 4× mit 80 ml Wasser gewaschen, über MgSO₄ getrocknet, filtriert und eingedampft. Der Rückstand wird in 2 ml Aceton gelöst, vorsichtig mit 200 ml Et₂O versetzt und die Suspension 15 Min bei 0°C gerührt. Anschliessend wird filtriert und der Rückstand 3x mit je 10 ml Et₂O gewaschen und bei 60°C / 165 mbar getrocknet. Man erhält 0,3 g (43,3% d.Th.) violette Kristalle der Formel: 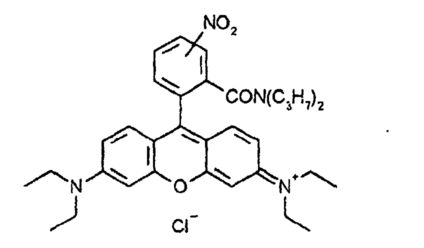 UV/VIS (Ethanol): λₘₐₓ =571 nm, ε = 92'800 l^{·}mol^{-1·}cm⁻¹;
DC (Kieselgel; Ethanol / 1N HCI 100:1): R_{f} = 0,57 und 0,71 für die beiden möglichen Isomeren.

Beispiel A7 : In einem 100 ml Dreihalskolben, versehen mit Thermometer, Rührer und Wasserabscheider, werden 3,6 g (21,6 mMol) 3-Diethylaminophenol, 5,42 g (25 mMol) 4,5-Dichlor-phthalsäureanhydrid und 30 g o-Dichlorbenzol vorgelegt und unter Rühren während 6 Std auf Rückfluss erhitzt. Das violette Reaktionsgemisch wird mit 33 g 3%iger wässriger NaOH-Lösung versetzt, die Phasen getrennt und die organsiche Phase mit 66 g 5%ige H₂SO₄ sauer gestellt. Die Phasen werden getrennt, die organische Phase mit 100 ml gesättigter NaCI-Lösung gewaschen, über MgSO₄ getrocknet, filtriert und eingedampft. Der Rückstand wird in 100 ml Aceton gelöst und vorsichtig mit 500 ml Et₂O versetzt. Die Suspension wird 15 Min gerührt, filtriert, der Rückstand 3× mit je 50 ml Et₂O gewaschen und bei 60°C /165 mbar getrocknet.
Man erhält 3,2 g (54,2% d.Th.) eines violetten Pulvers der Formel: 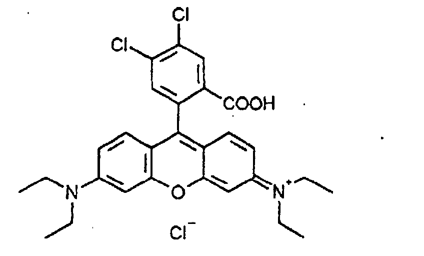 UV/VIS (Ethanol): λₘₐₓ = 551 nm, ε = 77'650 l^{·}mol^{-1·}cm⁻¹;
DC (Kieselgel; Ethanol / 1N HCl 100:1): R_{f} = 0,48.

Beispiel A8: In einem 100 ml Dreihalskolben, versehen mit Magnetrührer, Thermometer, Rückflusskühler und Stickstoffüberleitung, werden 50 ml Methanol vorgelegt und innerhalb von 10 Min 2,5 ml konz. H₂SO₄ zugetropft. Anschliessend wird 1 g (1,82 mMol) der nach Beispiel A7 hergestellten Verbindung zugegeben und die rote Lösung 17 Std auf Rückfluss erhitzt. Danach wird das Reaktionsgemisch abgekühlt und das Lösungsmittel eingedampft. Der Rückstand wird auf 100 ml Wasser gegossen und 4× mit je 80 ml CH₂Cl₂ extrahiert. Die vereinigten organischen Phasen werden mit 100 ml Wasser gewaschen, über MgSO₄ getrocknet, filtriert und eingedampft. Der rot-violette Rückstand wird in 7 ml Aceton gelöst. Die Lösung wird unter Rühren mit 300 ml Et₂O versetzt und die sich bildende Suspension 15 Min gerührt. Der Niederschlag wird abfiltriert, 3× mit je 10 ml Et₂O gewaschen und bei 60°C / 165 mbar getrocknet. Man erhält 0,70 g (60,3% d.Th.) violette Kristalle der Formel: 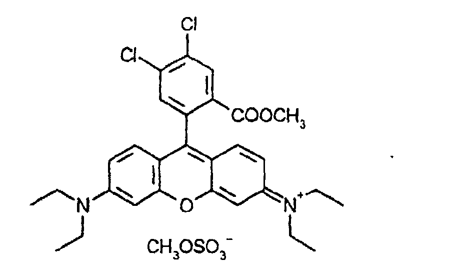 UV/VIS (Ethanol): λₘₐₓ = 564 nm, ε = 74'630 l^{·}mol^{-1·}cm⁻¹;
DC (Kieselgel; Ethanol / 1N HCI 100:1): R_{f} = 0,81.

| | | | | | |
|---|---|---|---|---|---|
| Elementaranalyse | C 54,55% | H 5,22% | N 4,04% | S 4,57% | Cl 10,55%; |
| ( theoretisch | C 56,52% | H 5,39% | N 4,39% | S 5,03% | Cl 11,12% ). |

Beispiel A9 : In einem 100 ml Dreihalskolben, versehen mit Magnetrührer, Thermometer, Rückflusskühler und Stickstoffüberleitung, werden 50 ml Methanol vorgelegt und innerhalb von 10 Min 2,5 ml konz. H₂SO₄ zugetropft. Anschliessend wird 1 (1,82 mMol) der nach Beispiel A1 hergestellten Verbindung zugegeben und die rote Lösung 17 Std auf Rückfluss erhitzt. Danach wird das Reaktionsgemisch abgekühlt und das Lösungsmittel eingedampft. Der Rückstand wird auf 100 ml gesättigte NaCl-Lösung gegossen und 4× mit je 80 ml CH₂Cl₂ extrahiert. Die vereinigten organischen Phasen werden 2× mit je 80 ml Wasser gewaschen, über MgSO₄ getrocknet, filtriert und eingedampft. Der rot-violette Rückstand wird in 4 ml Aceton gelöst. Die Lösung wird unter Rühren mit 300 ml Et₂O versetzt bis Kristallbildung einsetzt und die Suspension 15 Min gerührt. Der Niederschlag wird abfiltriert, 3× mit je 10 ml Et₂O gewaschen und bei 60°C / 165 mbar getrocknet.
Man erhält 0,50 g (46,8% d.Th.) violette Kristalle der Formel: 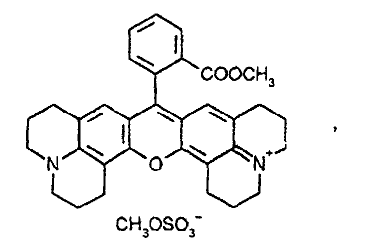 UV/VIS (Ethanol): λₘₐₓ = 576 nm, ε = 48'170 l^{·}mol^{-1·}cm⁻¹;
DC (Kieselgel; Ethanol / 1N HCl 100:1): R_{f} = 0,50.

Beispiel A10 : In einem 100 ml Dreihalskolben, versehen mit Thermometer, Rührer und Wasserabscheider, werden 5,0 g (26,4 mMol) 8-Hydroxyjulolidin, 5,9 g (30,65 mMol) 4-Nitro-phthalsäureanhydrid und 40 g o-Dichlorbenzol vorgelegt und unter Rühren während 3 Std auf Rückfluss erhitzt. Das violette, pastöse Reaktionsgemisch wird abgekühlt und bei 80°C / 1·10⁻³ mbar möglichst vollständig eingedampft.
Der Rückstand wird mit Ethanol / 1N HCl 100:1 an Kieselgel flashchromatographiert.
Man erhält 1,7 g (22,5% d.Th.) eines violetten Pulvers der Formel: 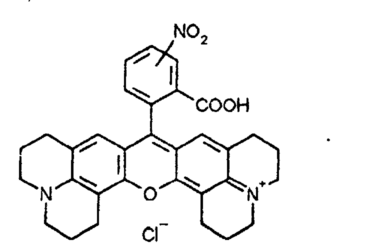 UV/VIS (Ethanol): λₘₐₓ = 577 nm, ε = 73'410 l^{·}mol^{-1·}cm⁻¹;
DC (Kieselgel; Ethanol / 1N HCI 100:1): R_{f} = 0,18 und 0,27 für die zwei möglichen Isomeren.

Beispiel A11 : In einem 100 ml Dreihalskolben, versehen mit Magnetrührer, Thermometer, Rückflusskühler und Stickstoffüberleitung, werden 30 ml Methanol vorgelegt und innerhalb von 10 Min 1,5 ml konz. H₂SO₄ zugetropft. Anschliessend wird 0,6 g (1,05 mMol) der nach Beispiel A10 hergestellten Verbindung zugegeben und die Lösung 16 Std auf Rückfluss erhitzt. Danach wird das Reaktionsgemisch abgekühlt und das Lösungsmittel eingedampft. Der Rückstand wird auf 80 ml gesättigte NaCI-Lösung gegossen und 6× mit je 50 ml CH₂Cl₂ extrahiert. Die vereinigten organischen Phasen werden 2× mit je 80 ml Wasser gewaschen, über MgSO₄ getrocknet, filtriert und eingedampft.
Man erhält 0,60 g (97,5% d.Th.) violettes Pulver der Formel: 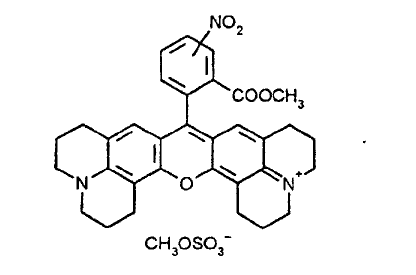 UV/VIS (Ethanol): λₘₐₓ = 585 nm, ε = 60'990 l^{·}mol^{-1·}cm⁻¹.
DC (Kieselgel; Ethanol / 1N HCL 100:1): R_{f} = 0,49.

Beispiel A12: In einem 50 ml Dreihalskolben, versehen mit Magnetrührer, Thermometer, Rückflusskühler, Tropftrichter und Stickstoffüberleitung, werden 1,7 g (2,97 mMol) der nach Beispiel A10 hergestellten Verbindung in 20 ml DMF vorgelegt. Unter Rühren werden 4,8 g (29,7 mMol) Carbonyl-diimidazol zugegeben und das Gemisch auf 40°C erwärmt. Nach 45 Min ist die Gasentwicklung beendet und das Reaktionsgemisch wird auf RT abgekühlt. 3,6 g (35,7 mMol) Di-n-propylamin werden zugetropft und das Gemisch 1½ Std gerührt. Nach DC (Kieselgel; Ethanol / 1N HCl 20:1) ist noch sehr wenig Edukt vorhanden. Das Reaktionsgemisch wird auf 100 ml 1N HCI gegossen und 5× mit je 90 ml CH₂Cl₂ extrahiert. Die vereinigten organischen Phasen werden mit 100 ml 1N HCI und 4× mit je 80 ml Wasser gewaschen, über MgSO₄ getrocknet, filtriert und eingedampft. Der Rückstand wird mit 250 ml Et₂O versetzt und die Suspension 15 Min gerührt. Anschliessend wird filtriert, der Rückstand 3× mit je 20 ml Et₂O gewaschen und bei 60°C 165 mbar getrocknet.
Man erhält 1,2 g (61,7% d.Th.) violette Kristalle der Formel: 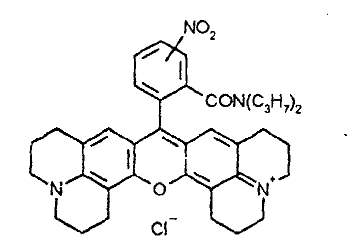 UV/VIS (Ethanol): λₘₐₓ = 592 nm, ε = 86'540 l^{·}mol^{-1·}cm⁻¹;
DC (Kieselgel; Ethanol / 1N HCl 100:1): R_{f} = 0,46.

Beispiel A13 : In einem 50 ml Dreihalskolben, versehen mit Magnetrührer, Thermometer, Rückflusskühler und Stickstoffüberleitung, werden 0,7 g (1,07 mMol) der nach Beispiel A12 hergestellten Verbindung, 60 mg Aktivkohle, 3 mg FeCl₃ und 0,64 g (10,7 mMol) N,N-Dimethylhydrazin in 20 ml Methanol vorgelegt und die Suspension unter Rühren während 18 Std auf Rückfluss erhitzt. Anschliessend wird das Reaktionsgemisch abgekühlt und das Lösungsmittel eingedampft. Der Rückstand wird mit Ethanol / 1N HCl 100:1 mittels Flashchromatographie an Kieselgel gereinigt.
Man erhält 0,6 g (89,7% d.Th.) eines blauen Pulvers der Formel: 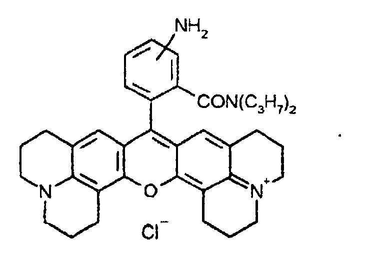 UV/VIS (Ethanol): λₘₐₓ = 578 nm, ε = 73'720 l^{·}mol^{-1·}cm⁻¹.

Beispiel A14 : In einem 100 ml Dreihalskolben, versehen mit Magnetrührer, Thermometer, Rückflusskühler und Stickstoffüberleitung, werden 3,8 g (5 mMol) ®Orasol Gelb 3R (Ciba-Geigy AG) und 30 ml n-Butanol vorgelegt und unter Rühren auf 70°C erhitzt. Anschliessend werden 2,4 g (5 mMol) Rhodamin B zugegeben, dann stellt man den pH auf 2 mit ca. 1 ml Ameisensäure. Das Reaktionsgemisch wird 5 Std bei 70°C gerührt, danach wird 1 g Filterhilfsmittel zugegeben und die Suspension heiss filtriert. Der Rückstand wird mit 100 ml heissem n-Butanol gewaschen und das Filtrat eingedampft. Der pastöse Rückstand wird mit 300 ml Et₂O versetzt und die sich bildende Suspension 10 Min gerührt. Danach wird filtriert und der Rückstand 3× mit je 50 ml Et₂O gewaschen.
Man erhält 5,2 g (87,9% d.Th.) eines roten Pulvers der Formel: 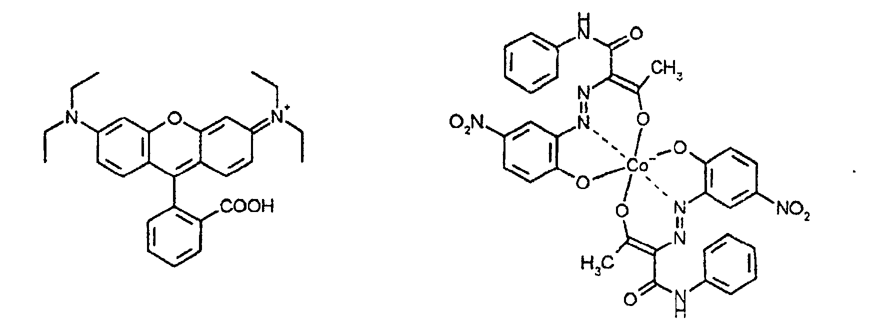 UV/VIS (Ethanol): λₘₐₓ = 543 nm, ε = 87'390 l^{·}mol^{-1·}cm⁻¹;
Elementaranalyse: Na 648 ppm.

Beispiel A15 : In einem 100 ml Dreihalskolben, versehen mit Magnetrührer, Thermometer, Rückflusskühler und Stickstoffüberleitung, werden 2,0 g (2,66 mMol) ®Orasol Gelb 3R (Ciba-Geigy AG) und 30 ml n-Butanol vorgelegt und unter Rühren auf 70°C erhitzt. Anschliessend werden 1,5 g (2,66 mMol) der nach Beispiel A4 hergestellten Verbindung zugegeben, dann stellt man den pH auf 2 mit ca. 1,5 ml Ameisensäure. Das Reaktionsgemisch wird 5 Std bei 70°C gerührt, danach wird 1 g Filterhilfsmittel zugegeben und die Suspension heiss filtriert. Der Rückstand wird mit 100 ml heissem n-Butanol gewaschen und das Filtrat eingedampft. Der pastöse Rückstand wird mit 200 ml Et₂O versetzt und die sich bildende Suspension 10 Min gerührt. Danach wird filtriert und der Rückstand mit 80 ml Et₂O gewaschen. Man erhält 3,0 g (89,0% d.Th.) eines roten Pulvers der Formel: 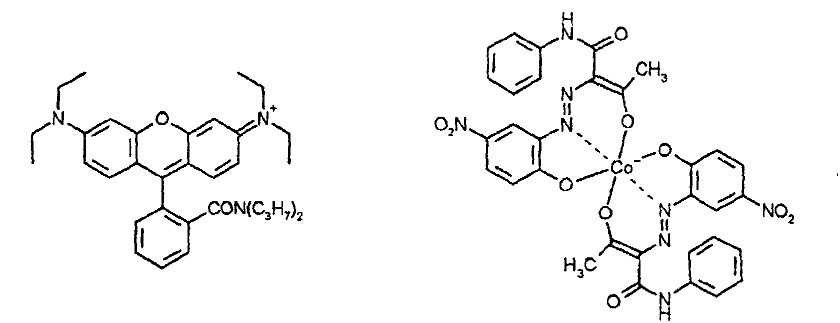 UV/VIS (Ethanol): λₘₐₓ = 562 nm, ε = 120'520 l^{·}mol^{-1·}cm⁻¹;
Elementaranalyse: Na 0,41%.

Beispiel A 16: In einem 100 ml Kolben werden 1 g (1,76 mMol) der gemäss Beispiel A3 hergestellten Verbindung, 1,34 g (1,76 mMol) ®Orasol Gelb 3R (Ciba-Geigy AG) und 30 ml CH₂Cl₂ vorgelegt. Die rote Lösung wird anschliessend bei 50°C eingedampft und der Rückstand bei 60°C / 165 mbar getrocknet.
Man erhält 2,3 g (98,3% d.Th.) eines dunkelroten Pulvers der Formel: 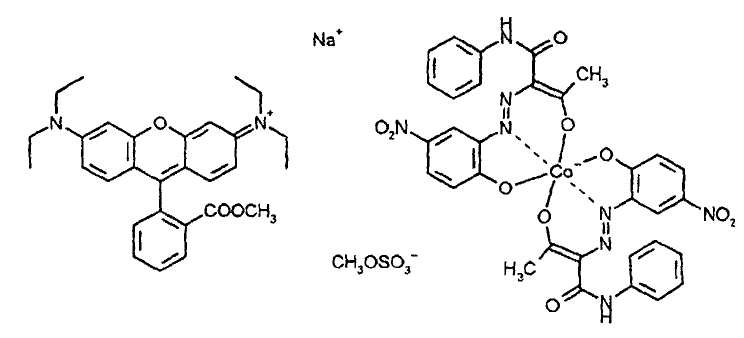 UV/VIS (Ethanol): λₘₐₓ = 555 nm, ε = 122'290 l^{·}mol^{-1·}cm⁻¹.

Beispiel A17 : In einem 100 ml Kolben werden 1 g (1,78 mMol) der gemäss Beispiel A4 hergestellten Verbindung, 1,36 g (1,78 mMol) ®Orasol Gelb 3R (Ciba-Geigy AG) und 30 ml CH₂Cl₂ vorgelegt. Die rote Lösung wird anschliessend bei 50°C eingedampft und der Rückstand bei 60°C / 165 mbar getrocknet.
Man erhält 2,3 g (97,4% d.Th.) eines dunkelroten Pulvers der Formel: 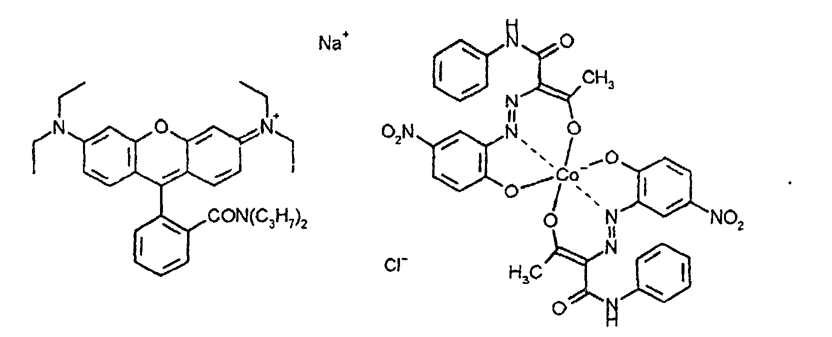 UV/VIS (Ethanol): λₘₐₓ = 563 nm, ε = 120'950 l^{·}mol^{-1·}cm⁻¹.

Beispiel A18 : Das gemäss Beispiel A17 hergestellte Produkt wird in 50 ml Wasser suspendiert, 30 Min gerührt, filtriert, mit 100 ml Wasser gewaschen und getrocknet.
Man erhält in quantitativer Ausbeute ein dunkelrotes Pulver der Formel: 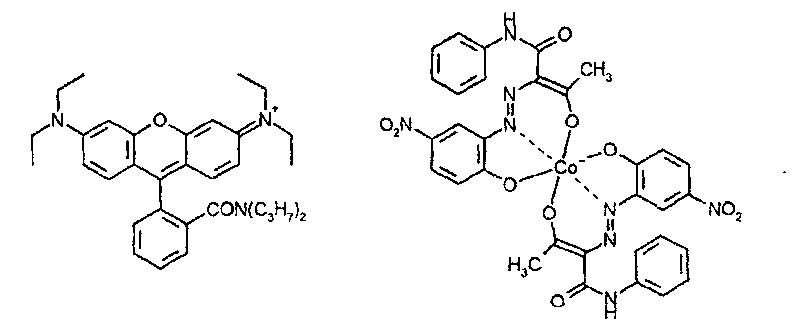 UV/VIS (Ethanol): λₘₐₓ = 563 nm, ε = 122'430 l^{·}mol^{-1·}cm⁻¹;
Elementaranalyse: Na 0,62%.

Beispiel A19 **:** In einem 100 ml Kolben werden 1 g (1,78 mMol) der gemäss Beispiel A4 hergestellten Verbindung, 1,36 (1,78 mMol) ®Orasol Gelb 3R (Ciba-Geigy AG) und 40 ml CH₂Cl₂ vorgelegt. Die rote Lösung wird 3× mit je 100 ml Wasser gewaschen, über MgSO₄ getrocknet und eingedampft. Der Rückstand wird bei 60°C / 165 mbar getrocknet.
Man erhält 2,2 g (97,6% d.Th.) eines dunkelroten Pulvers der Formel: 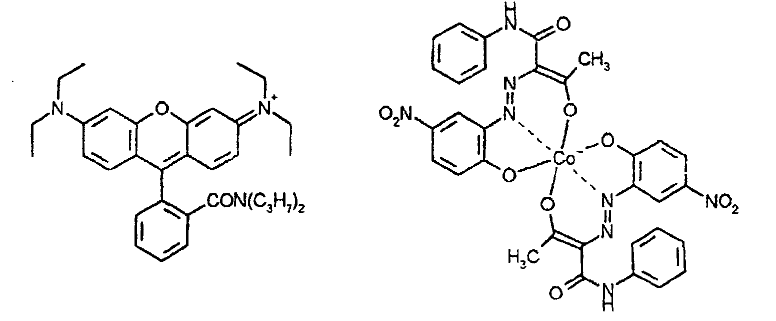 UV/VIS (Ethanol): λₘₐₓ = 563 nm, ε = 108'940 l^{·}mol^{-1·}cm⁻¹;
Elementaranalyse: Na 0,16%.

Beispiel A20 : In einem 100 ml Dreihalskolben, versehen mit Magnetrührer, Thermometer, Rückflusskühler und Stickstoffüberleitung, werden 2,4 g (2,66 mMol) ®Orasol Rot GL (Ciba-Geigy AG) und 30 ml n-Butanol vorgelegt und unter Rühren auf 70°C erhitzt. Anschliessend werden 1,5 g (2,66 mMol) der gemäss Beispiel A4 hergestellten Verbindung zugegeben, danach stellt man den pH auf 2 mit ca. 1,5 ml Ameisensäure. Das Reaktionsgemisch wird 5 Std bei 70°C gerührt, dann werden 1 g Filterhilfsmittel zugegeben, die Suspension heiss filtriert und der Rückstand mit 80 ml heissem n-Butanol nachgewaschen. Das Filtrat wird eingedampft und der Rückstand mit 200 ml Et₂O versetzt. Die sich bildende Suspension wird 10 Min gerührt und dann filtriert. Der Rückstand wird mit 80 ml Et₂O gewaschen und bei 50°C /165 mbar getrocknet.
Man erhält 3,4 g (90,7% d.Th.) eines dunkelroten Pulvers der Formel: 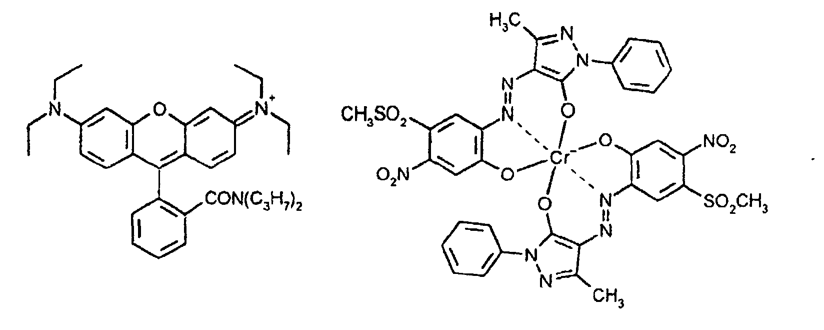 UV/VIS (Ethanol): λₘₐₓ = 562 nm, ε = 123'600 l^{·}mol^{-1·}cm⁻¹;
Elementaranalyse: Na 0,17%.

Beispiele A21-A23 : Man verfährt analog zum Beispiel A15, verwendet jedoch anstatt von ®Orasol Gelb 3R jeweils eine äquimolare Menge ®Orasol Rot 2BL, ®Orasol Rot 3GL oder

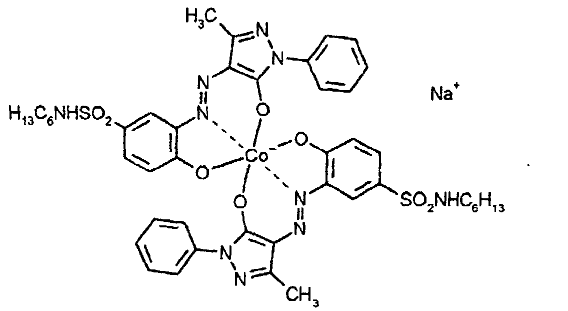

Man erhält folgende Verbindungen: 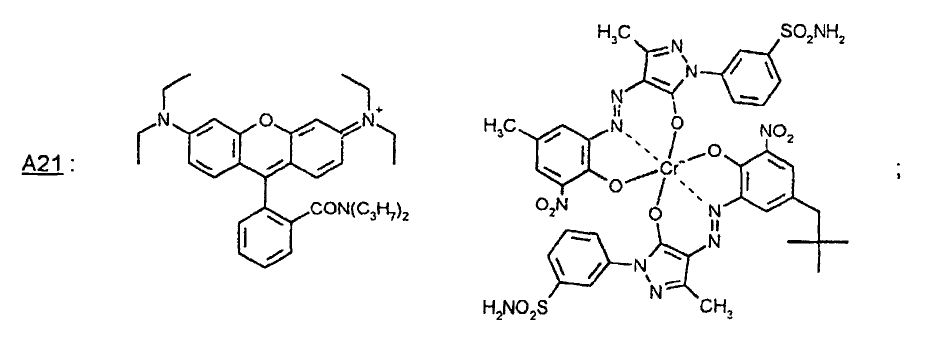 UV/VIS (Ethanol): λₘₐₓ = 554 nm, ε = 115'240 l^{·}mol^{-1·}cm⁻¹. 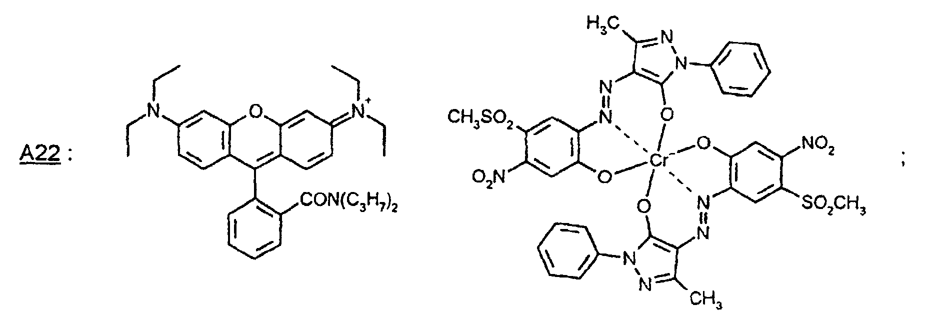 UV/VIS (Ethanol): λₘₐₓ = 554 nm, ε = 113'130 l^{·}mol^{-1·}cm⁻¹. 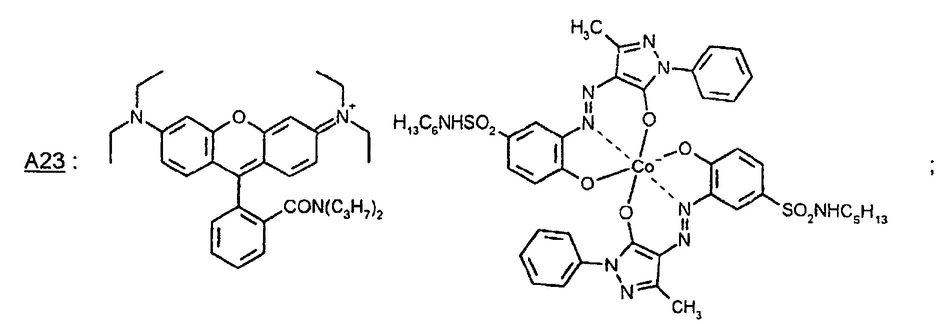 UV/VIS (Ethanol): λₘₐₓ = 555 nm, ε = 116'290 l^{·}mol^{-1·}cm⁻¹.

Beispiele A24-A26 : Man verfährt analog zu den Beispielen A21-A23, verwendet jedoch anstatt der Verbindung nach Beispiel A4 jeweils eine äquimolare Menge der Verbindung nach Beispiel A3. Man erhält folgende Verbindungen:

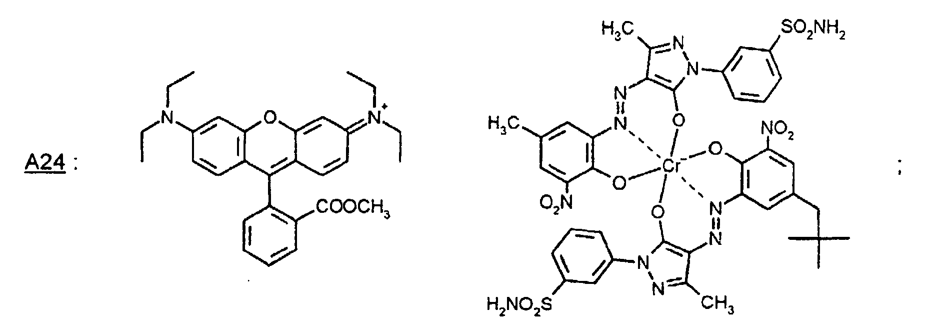

UV/VIS (Ethanol): λₘₐₓ = 562 nm, ε = 151'990 l^{·}mol^{-1·}cm⁻¹.

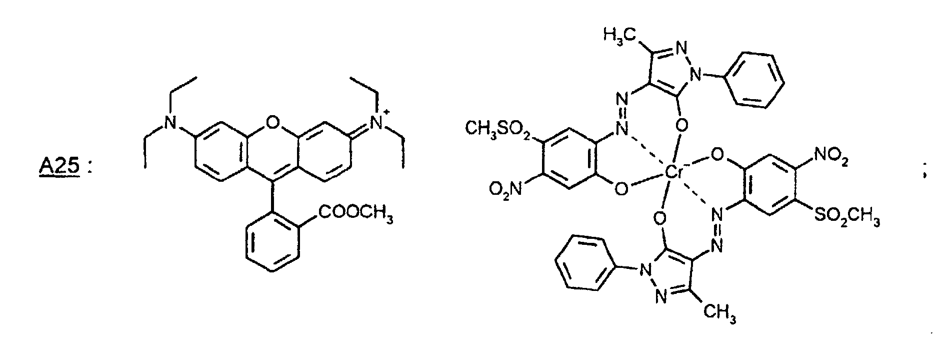

UV/VIS (Ethanol): λₘₐₓ = 562 nm, ε = 123'610 l^{·}mol^{-1·}cm⁻¹. UV/VIS (Ethanol): λₘₐₓ = 563 nm, ε = 119'030 l^{·}mol^{-1·}cm⁻¹;

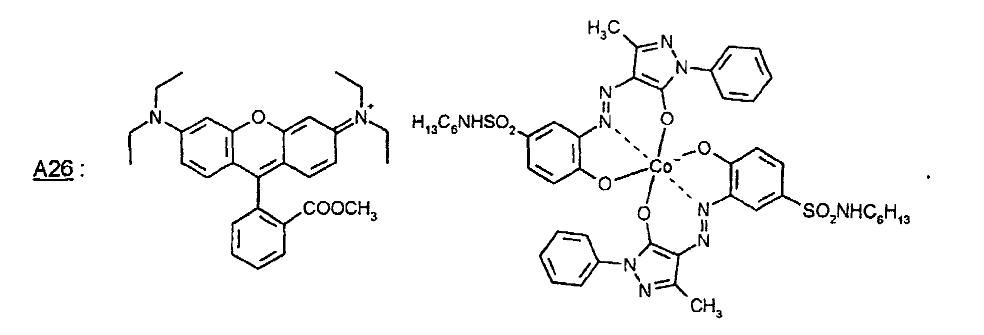

Beispiele A27-A30: Man verfährt analog zum Beispiel A17, verwendet jedoch anstatt von ®Orasol Gelb 3R jeweils eine äquimolare Menge ®Orasol Gelb 2RLN, ®Orasol Orange G, ®Orasol Rot 2B oder ®Orasol Gelb 2GLN. Dann verfährt man weiter analog zum Beispiel 18. Man erhält folgende Verbindungen: 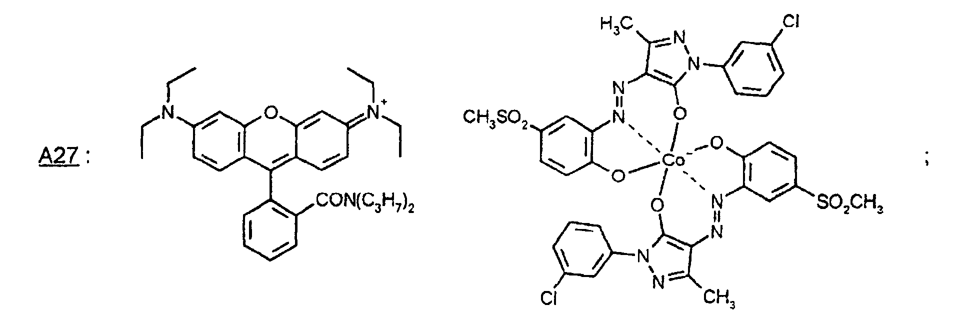 UV/VIS (Ethanol): λₘₐₓ = 563 nm, ε = 98'920 l^{·}mol^{-1·}cm⁻¹. 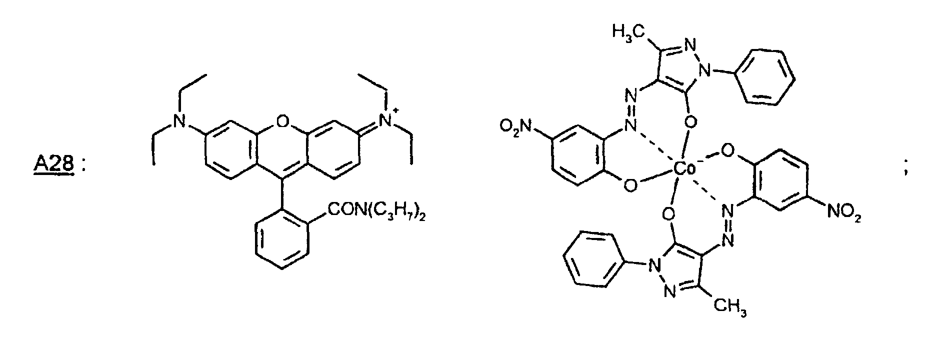 UV/VIS (Ethanol): λₘₐₓ = 563 nm, ε = 100'884 l^{·}mol^{-1·}cm⁻¹. 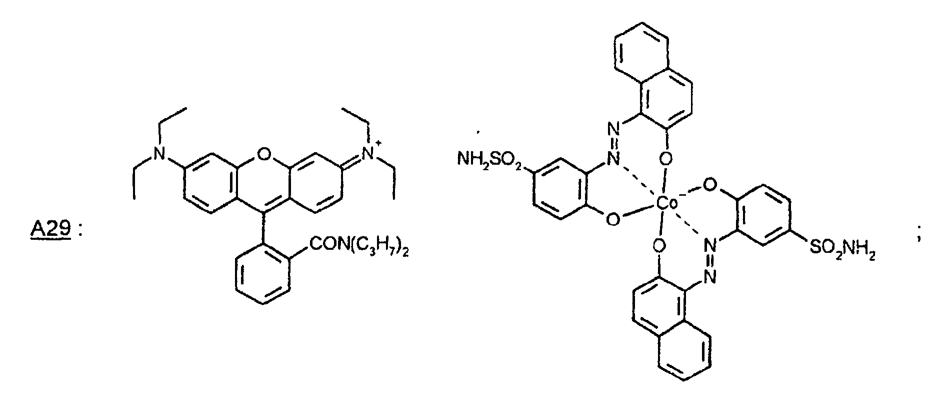 UV/VIS (Ethanol): λₘₐₓ = 562 nm, ε = 109'040 l^{·}mol^{-1·}cm⁻¹. 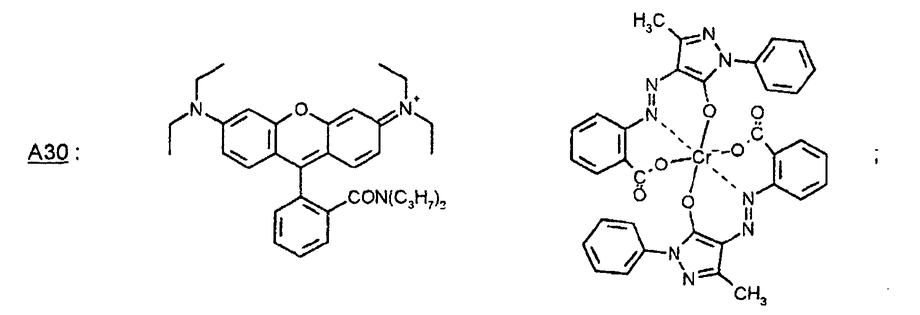 UV/VIS (Ethanol): λₘₐₓ = 563 nm, ε = 97'930 l^{·}mol^{-1·}cm⁻¹.

Beispiele A31-A34 : Man verfährt analog zu den Beispielen A27-A30, verwendet jedoch anstatt der Verbindung nach Beispiel A4 jeweils eine äquimolare Menge der Verbindung nach Beispiel A3. Man erhält folgende Verbindungen: 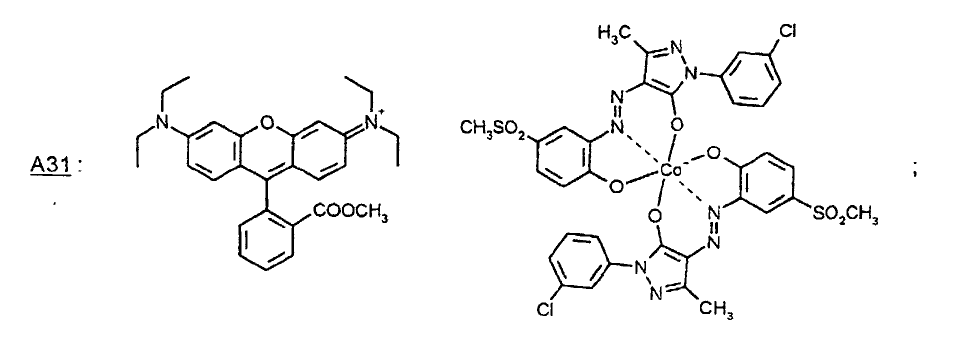 UV/VIS (Ethanol): λₘₐₓ = 554 nm, ε = 92'418 l^{·}mol^{-1·}cm⁻¹. 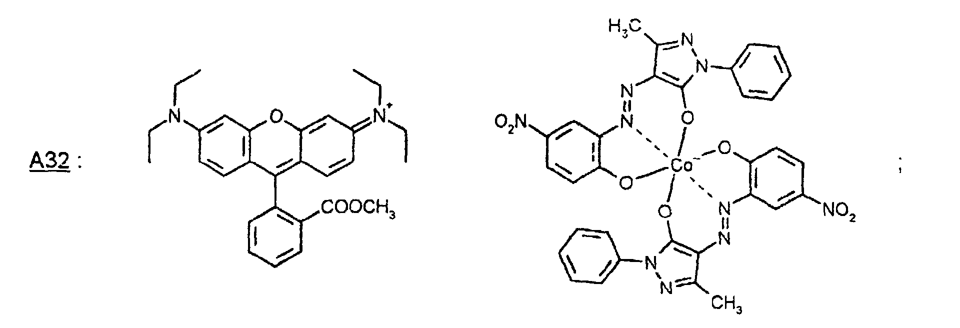 UV/VIS (Ethanol): λₘₐₓ = 554 nm, ε = 93'970 l^{·}mol^{-1·}cm⁻¹. 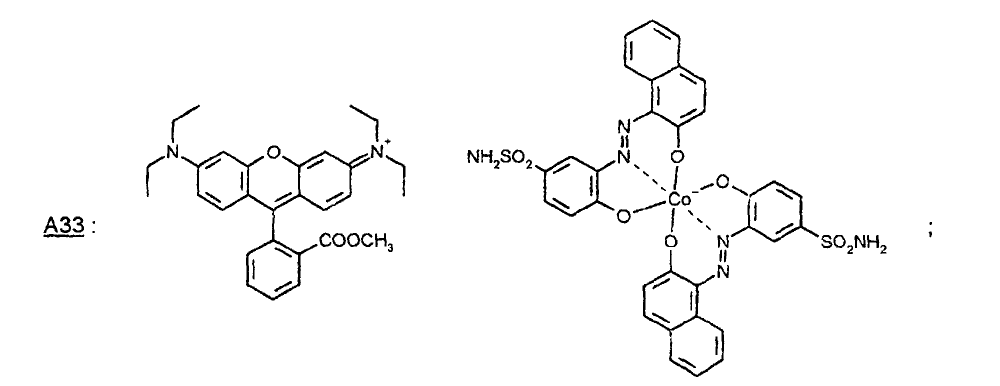 UV/VIS (Ethanol): λₘₐₓ = 554 nm, ε = 114'090 l^{·}mol^{-1·}cm⁻¹. 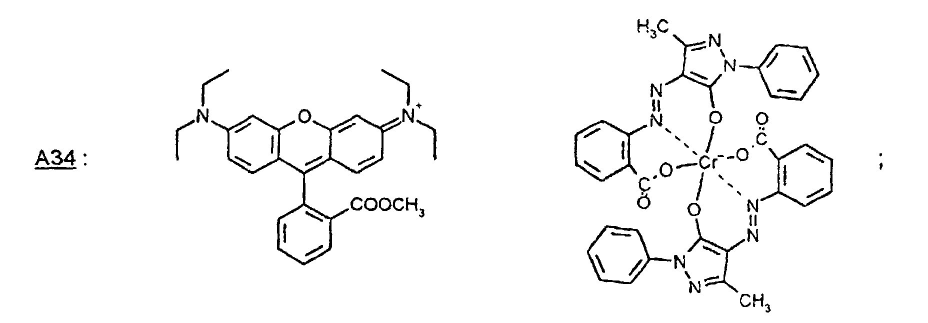 UV/VIS (Ethanol): λₘₐₓ =555 nm, = 104'450 l^{·}mol^{-1·}cm⁻¹.

Beispiel A35 : Man verfährt analog zum Beispiel A17, verwendet jedoch anstatt von ®Orasol Gelb 3R eine äquimolare Menge ®Orasol Orange RG, sowie anstatt der Verbindung nach Beispiel A4 eine äquimolare Menge der Verbindung nach Beispiel A3.
Man erhält folgende Verbindung: 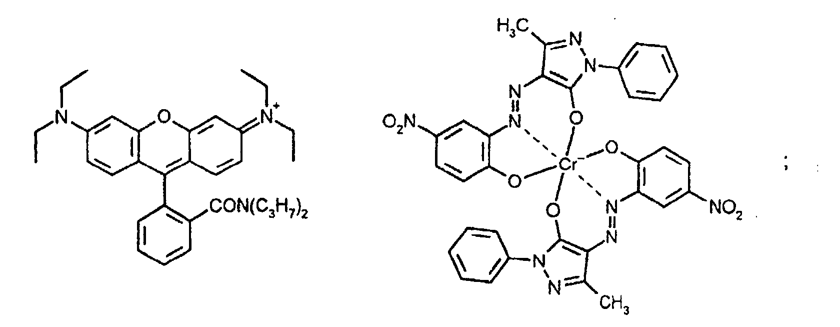 UV/VIS (Ethanol): λₘₐₓ = 554 nm, ε = 100'210 l^{·}mol^{-1·}cm⁻¹.

Beispiel A36 : Man verfährt analog zu Beispiel A1, verwendet jedoch anstatt von Phthalsäureanhydrid eine äquimolare Menge Tetrachlorphthalsäureanhydrid. Man erhält folgende Verbindung: 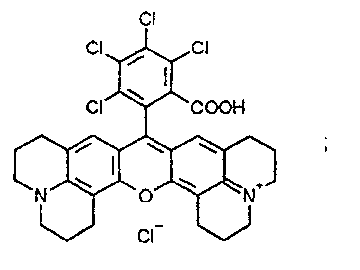 UV/VIS (Ethanol): λₘₐₓ = 596 nm, ε = 75'790l^{·}mol^{-1·}cm⁻¹.

Beispiel A37 : Man verfährt analog zum Beispiel A1, verwendet jedoch anstatt von 8-Hydroxyjulolidin eine äquimolare Menge 3-Dimethylamino-phenol.
Man erhält folgende Verbindung: 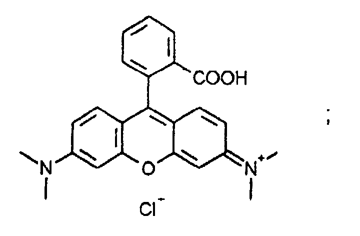 UV/VIS (Ethanol): λₘₐₓ = 537 nm, ε = 36'960 l^{·}mol^{-1·}cm⁻¹.

Beispiel A38 : Man verfährt analog zum Beispiel A1, verwendet jedoch anstatt von 8-Hydroxyjulolidin eine äquimolare Menge 3-Dibutylamino-phenol.
Man erhält folgende Verbindung: 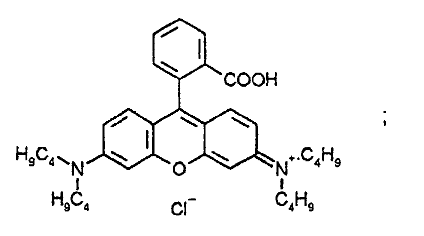 UV/VIS (Ethanol): λₘₐₓ = 547 nm, ε = 29'600 l^{·}mol^{-1·}cm⁻¹.

Beispiel A39 : Man verfährt analog zum Beispiel A1, verwendet jedoch anstatt von 8-Hydroxyjulolidin eine äquimolare Menge 3-Morpholino-phenol.
Man erhält folgende Verbindung: 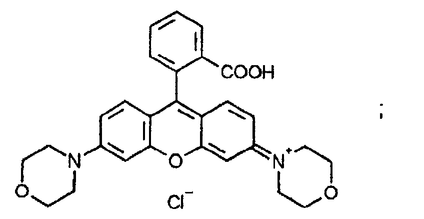 UV/VIS (Ethanol): λₘₐₓ =549 nm, ε = 12'500 l^{·}mol^{-1·}cm⁻¹.

Beispiel A40 : Man verfährt analog zum Beispiel A1, verwendet jedoch anstatt von 8-Hydroxyjulolidin und Phthalsäureanhydrid äquimolare Mengen 3-Diethylamino-phenol und 2,3-Naphthalin-dicarbonsäure-anhydrid. Man erhält folgende Verbindung: 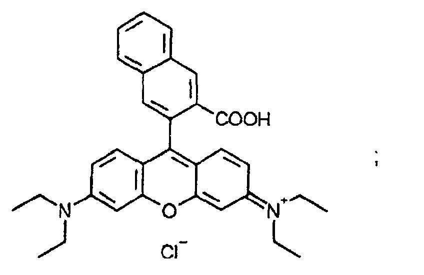 UV/VIS (Ethanol): λₘₐₓ = 544 nm, ε = 74'966 l^{·}mol^{-1·}cm⁻¹.

Beispiel A41 : Man verfährt analog zum Beispiel A3, verwendet jedoch Ethanol anstatt von Methanol. Man erhält folgende Verbindung: 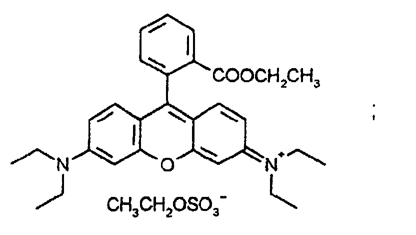 UV/VlS (Ethanol): λₘₐₓ = 556 nm, ε = 114'830 l^{·}mol^{-1·}cm⁻¹.

Beispiel A42 : Man verfährt analog zum Beispiel A3, verwendet jedoch Isopropanol anstatt von Methanol. Man erhält folgende Verbindung: 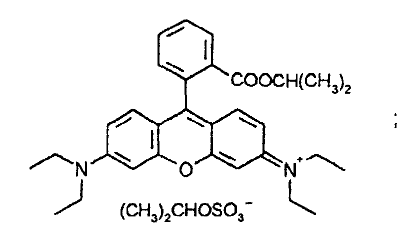 UV/VIS (Ethanol): λₘₐₓ = 555 nm, ε = 66'300 l^{·}mol^{-1·}cm⁻¹.

Beispiel A43 : Man verfährt analog zum Beispiel A3, verwendet jedoch anstatt von Rhodamin B eine äquimolare Menge der Verbindung des Beispiels A37.
Man erhält folgende Verbindung: 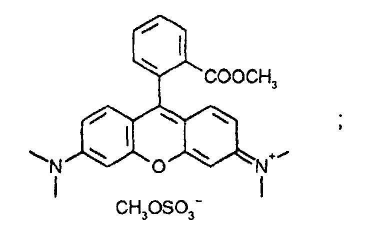 UV/VIS (Ethanol): λₘₐₓ = 550 nm, ε = 91'800 l^{·}mol^{-1·}cm⁻¹.

Beispiel A44 : Man verfährt analog zum Beispiel A3, verwendet jedoch anstatt von Rhodamin B eine äquimolare Menge der Verbindung des Beispiels A38. Man erhält folgende Verbindung: 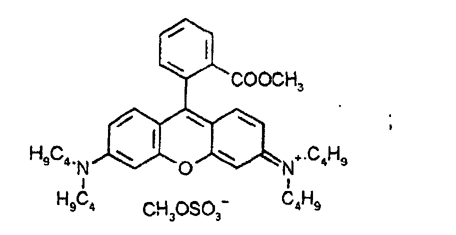 UV/VIS (Ethanol): λₘₐₓ = 561 nm, ε = 57'490 l^{·}mol^{-1·}cm⁻¹.

Beispiel A45: Man verfährt analog zum Beispiel A3, verwendet jedoch anstatt von Rhodamin B eine äquimolare Menge der Verbindung des Beispiels A39.
Man erhält folgende Verbindung: 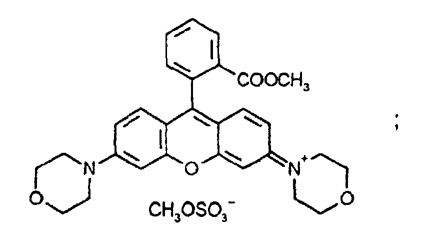 UV/VIS (Ethanol): λₘₐₓ = 554 nm, ε = 62'530 l^{·}mol^{-1·}cm⁻¹.

Beispiel A46 : Man verfährt analog zum Beispiel A3, verwendet jedoch anstatt von Rhodamin B eine äquimolare Menge der Verbindung des Beispiels A40.
Man erhält folgende Verbindung: 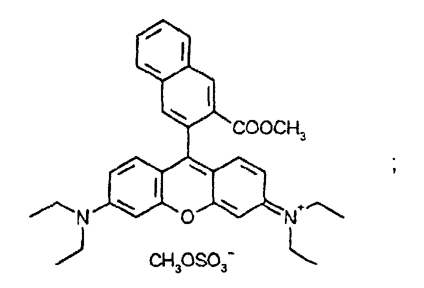 UV/VIS (Ethanol): λₘₐₓ = 555 nm, ε = 90'200 l^{·}mol^{-1·}cm⁻¹.

Beispiel A47 : Man verfährt analog zum Beispiel A4, verwendet jedoch anstatt von Dipropylamin eine äquimolare Menge Dimethylamin. Man erhält folgende Verbindung: 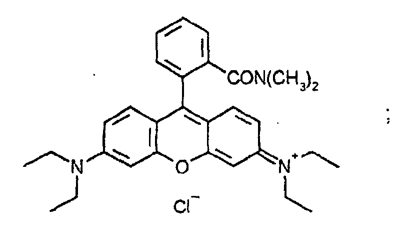 UV/VIS (Ethanol): λₘₐₓ = 561 nm, ε = 94'300 l^{·}mol^{-1·}cm⁻¹.

Beispiel A48 : Man verfährt analog zum Beispiel A4, verwendet jedoch anstatt von Dipropylamin eine äquimolare Menge Diethylamin. Man erhält folgende Verbindung: 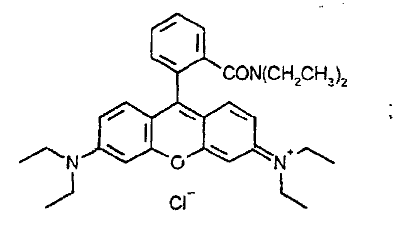 UV/VIS (Ethanol): λₘₐₓ = 561 nm, ε = 100'240 l^{·}mol^{-1·}cm⁻¹.

Beispiel A49 : Man verfährt analog zum Beispiel A4, verwendet jedoch anstatt von Dipropylamin eine äquimolare Menge Dibutylamin. Man erhält folgende Verbindung: 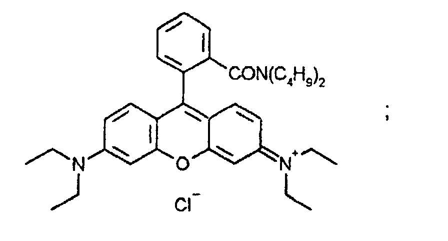 UV/VIS (Ethanol): λₘₐₓ = 563 nm, ε = 95'420 l^{·}mol^{-1·}cm⁻¹.

Beispiel A50 : Man verfährt analog zum Beispiel A4, verwendet jedoch anstatt von Dipropylamin eine äquimolare Menge Piperidin. Man erhält folgende Verbindung: 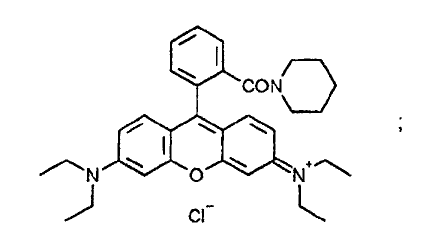 UV/VIS (Ethanol): λₘₐₓ = 561 nm, ε = 91'130 l^{·}mol^{-1·}cm⁻¹.

Beispiel A51 : Man verfährt analog zum Beispiel A17, verwendet jedoch anstatt der Verbindung nach Beispiel A4 eine äquimolare Menge der Verbindung nach Beispiel A2. Man erhält folgende Verbindung: 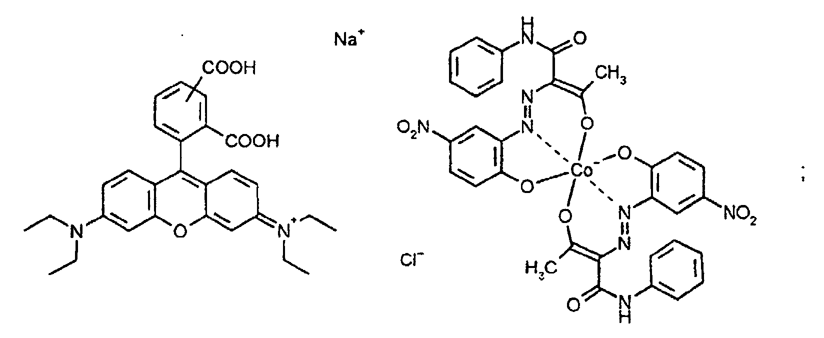 UV/VIS (Ethanol): λₘₐₓ = 542 nm, ε = 56'700 l^{·}mol^{-1·}cm⁻¹.

Beispiel A52 : Man verfährt analog zum Beispiel A17, verwendet jedoch anstatt der Verbindung nach Beispiel A4 eine äquimolare Menge Sulforhodamin 101 freie Säure. Man erhält folgende Verbindung: 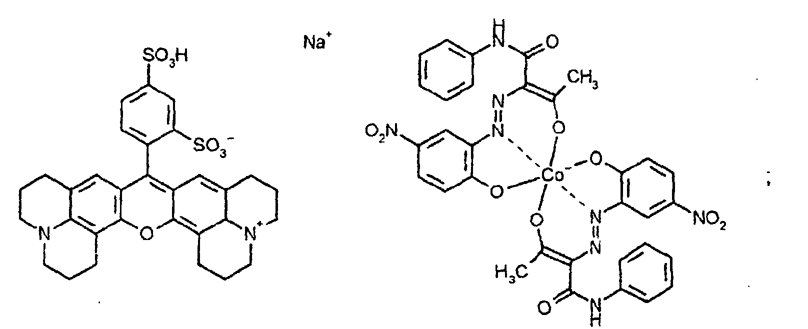 UV/VIS (Ethanol): λₘₐₓ = 575 nm, ε = 116'450 l^{·}mol^{-1·}cm⁻¹.

Beispiel A53 : Man verfährt analog zum Beispiel A52, verwendet jedoch 95% der äquimolaren Menge Sulforhodamin 101 freie Säure zuzüglich 5% der äquimolaren Menge des nach Beispiel 2 von EP 0 540 468 A1 hergestellten Farbstoffes.

Beispiel A54 : Man verfährt analog zum Beispiel A5, verwendet jedoch anstatt von 3-Diethylaminophenol eine äquimolare Menge 3-Dibutylaminophenol.
Man erhält folgende Verbindung: 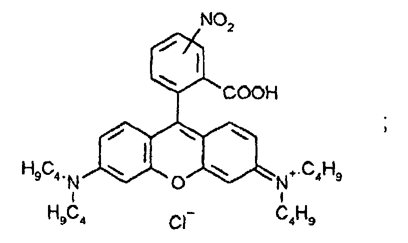 UV/VIS (Ethanol): λₘₐₓ = 557 nm, ε = 42'460 l^{·}mol^{-1·}cm⁻¹.

Beispiel A55 : Man verfährt analog zum Beispiel A6, verwendet jedoch anstatt des Produktes nach Beispiel A5 eine äquimolare Menge des Produktes nach Beispiel A54. Man erhält folgende Verbindung: 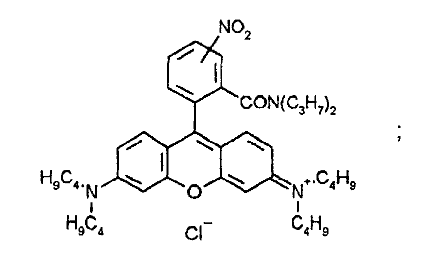 UV/VIS (Ethanol): λₘₐₓ = 576 nm, ε = 47'420 l^{·}mol^{-1·}cm⁻¹.

Beispiele A56-A74 : Man verfährt analog zum Beispiel A17, verwendet jedoch anstatt der Verbindung nach Beispiel A4 jeweils eine Verbindung aus einem in der folgenden Tabelle angegebenen Beispiel. Dann verfährt man weiter analog zum Beispiel 18.
Man erhält folgende Verbindungen:

| Beispiel | aus Edukt nach Beispiel | Ausbeute (% d.Th.) | λₘₐₓ (Ethanol) [nm] | ε (Ethanol) [l^{·}mol^{-1·}cm⁻¹] |
|---|---|---|---|---|
| A56 | A5 | 98,9 | 553 | 62'280 |
| A57 | A7 | 84,1 | 551 | 85'690 |
| A58 | A8 | 85,6 | 562 | 96'400 |
| A59 | A9 | 83,5 | 575 | 55'540 |
| A60 | A10 | 94,0 | 577 | 41'500 |
| A61 | A11 | 88,7 | 585 | 64'650 |
| A62 | A13 | 88,3 | 578 | 71'770 |
| A63 | A36 | 85,4 | 596 | 73'260 |
| A64 | A41 | 94,1 | 555 | 114'850 |
| A65 | A42 | 89,1 | 555 | 73'610 |
| A66 | A43 | 85,3 | 551 | 97'850 |
| A67 | A44 | 83, 7 | 560 | 69'960 |
| A68 | A45 | 98,0 | 554 | 85'010 |
| A69 | A46 | 87,2 | 555 | 92'830 |
| A70 | A47 | 88,7 | 561 | 111'340 |
| A71 | A48 | 82,9 | 561 | 114'760 |
| A72 | A49 | 68,2 | 563 | 102'830 |
| A73 | A50 | 88,6 | 561 | 97'240 |
| A74 | A55 | 91,0 | 575 | 54'320 |

Beispiel B1 : 2 Gew.-% des Produktes nach Beispiel A1 werden in 2,2,3,3-Tetrafluor-1-propanol gelöst und die Lösung wird durch einen Teflonfilter mit Porenweite 0,2 µm filtriert und auf die Oberfläche einer 1,2 mm dicken, gerillten Polycarbonatscheibe vom Durchmesser 120 mm nach dem Schleuderbeschichtungsverfahren bei 1000 U/min aufgetragen. Der Überschuss an Lösung wird durch Erhöhen der Umdrehungszahl abgeschleudert. Beim Abdampfen des Lösungsmittels bleibt der Farbstoff als gleichmässige, amorphe Feststoffschicht zurück. Nach dem Trocknen weist die Feststoffschicht eine Absorbance von 0,16 bei 635 nm auf. In einer Vakuumbeschichtungsapparatur wird dann eine 100 nm dicke Aluminiumschicht auf die Aufzeichnungsschicht aufgebracht. Anschliessend wird darauf eine 13 µm dicke Schutzschicht aus einem UV-härtbaren Photopolymer (SD-17, Dainippon Ink) mittels Schleuderbeschichtung aufgebracht. Der Aufzeichnungsträger weist bei 635 nm eine Grundreflektivität von 67% auf. Mit einer 10 mW Laserdiode der Wellenlänge 635 nm wird mit einer Leistung von 8 mW in die aktive Schicht eingeschrieben. Dieser Vorgang bewirkt an beschrifteten Stellen eine Reflexionsänderung von 67% auf 35%. Mit reduzierter Leistung werden die Marken wieder ausgelesen. Die Reflektivität ändert sich lokal von hoch nach tief, wobei das Signal/Rausch-Verhältnis ausgezeichnet ist.

Beispiel B2 : 1 Gew.-% Sulforhodamin 101 freie Säure [C.A. Reg.-Nr. 60311-02-6] wird in 2,2,3,3-Tetrafluor-1-propanol gelöst, über einen 0,2 µm Teflonfilter filtriert und wie in Beispiel B1 auf die Oberfläche einer gerillten Polycarbonatscheibe aufgeschleudert. Nach dem Abdampfen des Lösungsmittels bleibt der Farbstoff als gleichmässige, amorphe Feststoffschicht zurück. Die so hergestellte Speicherschicht weist eine Absorbance von 0,58 beim Absorptionsmaximum von 604 nm auf. Wie in Beispiel B1 werden darauf eine Reflexionschicht und eine Schutzschicht aufgetragen. Der Aufzeichnungsträger weist eine Grundreflektivität von 70% bei 650 nm auf. Auf dem erwähnten Medium werden mit einem gepulsten Farbstofflaser der Wellenlänge 635 nm Marken beschriftet, wobei die Leistung 9 mW und die Pulsdauer 15 ns betragen. Unter dem Mikroskop erscheinen die Marken kreisrund und dunkel.

Beispiel B3 : 2,0 Gew.-% des analog Beispiel A33 hergestellten Produktes der Formel 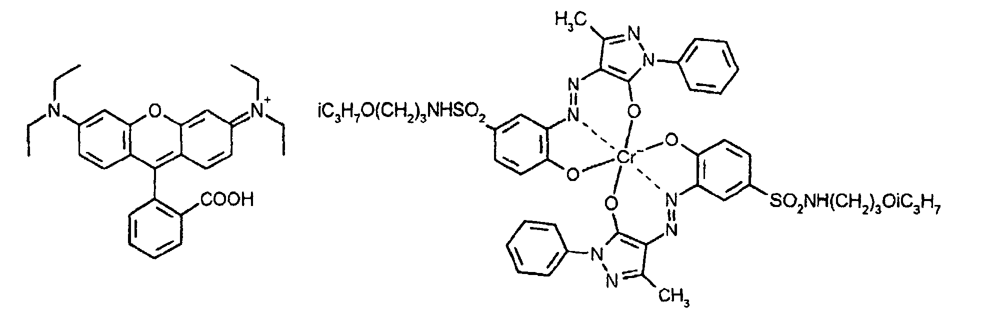 wird in Methoxyethanol gelöst, filtriert und mittels Schleuderbeschichtungsverfahren bei 200 U/min auf ein Polycarbonatsubstrat wie in Beispiel B1 aufgetragen und bei 800 U/min abgeschleudert. Nach dem Trocknen hat die Feststoffschicht eine Absorbance von 0,7 bei 566 nm. Danach werden eine Reflexionsschicht und eine Polymerschutzschicht gemäss Beispiel B1 aufgebracht. Mit einer Laserenergie von 15 nJ/pixel wird bei einer linearen Geschwindigkeit von 1 m/sec bei der Schreibwellenlänge von 635 nm in die aktive Schicht eingeschrieben. Die so erzielten Marken zeigen einen hohen Kontrast.

Beispiel B4 : Man verfährt wie in Beispiel B3, ersetzt jedoch den Farbstoff durch Colour Index Solvent Red 127. Die Feststoffschicht hat eine Absorbance von 0,8 bei 569 nm. Danach werden eine Reflexionsschicht und eine Polymerschutzschicht gemäss Beispiel B1 aufgebracht. Mit einer Laserleistung von 5mW werden Marken mit einer linearen Geschwindigkeit von 0,5 m/s bei 635 nm eingeschrieben.

Beispiel B5 : Man verfährt wie in Beispiel B4, ersetzt jedoch den Farbstoff durch das Produkt nach Beispiel A53. Die mit einem Mikroskopspektralphotometer (UMSP 80, Zeiss) gemessene Reflektivität beträgt 62%. Mit einer Laserleistung von 6 mW werden Marken mit einer linearen Geschwindigkeit von 0,5 m/s bei 635 nm eingeschrieben. An beschrifteten Stellen beträgt die Reflektivität 25%.

Beispiele B6-B49 : Die Produkte der Beispiele A14-A35, A51-A53 und A56-A74 werden analog zum Beispiel B1 auf Polycarbonatscheiben beschichtet, beschriftet und gelesen. Die Resultate sind sehr gut.

Beispiele B50-B78 : Die Produkte der Beispiele A2-A13, A36-A50 und A54-A55 werden analog zum Beispiel B1 auf Polycarbonatscheiben beschichtet, beschriftet und gelesen. Die Resultate sind gut.

Beispiel C1 : Eine Feststoffschicht des Produktes nach Beispiel A69 wird auf einen Glasträger aufgebracht und spektralellipsometrisch (Sopra Instrument) vermessen. Bei der Aufzeichnungswellenlänge von 635 nm wird ein Brechungsindex von n=2,15 und ein Absorptionskoeffizient von k=0,01 ermittelt.

Beispiel C2 : In einem Belichtungsgerät (Cl 35, Atlas) wird die Lichtstabilität einer Feststoffschicht nach Beispiel B3 bei einer Strahlungsleistung von 80 klux geprüft. Die optische Dichte beim Absorptionsmaximum beträgt nach 40 Stunden noch 80% des ursprünglichen Wertes.

## Patentansprüche

1. Optisches Aufzeichnungsmedium, enthaltend ein Substrat, eine reflektierende Schicht und eine Aufzeichnungsschicht, **dadurch gekennzeichnet, dass** diese Aufzeichnungsschicht aus einem oder mehreren Farbstoffen der Formel (I), 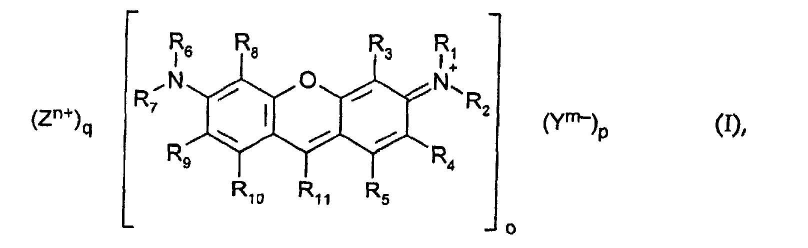 gegebenenfalls einem anderen Farbstoff in einer Menge von höchstens 50 Gew.-%, bezogen auf die Aufzeichnungsschicht, und gegebenenfalls einem Stabilisator besteht,worin R₁, R₂, R₆ und R₇ unabhängig voneinander für Wasserstoff, unsubstituiertes oder mit Halogen, C₁-C₈Alkoxy, C₁-C₈Alkylthio, NO₂, CN, NR₁₂R₁₃, COO⁻, COOH,
COO-C₁-C₈Alkyl, SO₃⁻, SO₃H oder SO₃-C₁-C₈Alkyl einfach oder mehrfach substituiertes C₁-C₂₀Alkyl, C₂-C₂₀Alkenyl oder C₂-C₂₀Alkinyl, oder unsubstituiertes oder mit C₁-C₈Alkyl, C₁-C₈Alkoxy, C₁-C₈Alkylthio, Halogen, NO₂, CN, NR₁₂R₁₃, SO₃⁻, SOR₁₂, SO₂NR₁₂R₁₃, COO⁻, COOR₁₂, CONR₁₂R₁₃, PO₃⁻, PO(OR₁₂)(OR₁₃) oder SiR₁₄R₁₅R₁₆ einfach oder mehrfach substituiertes C₇-C₁₈Aralkyl oder C₆₋C₁₄Aryl stehen, jedoch R₁ und R₆ sowie R₂ und R₇ nicht jeweils beide gleichzeitig Wasserstoff sein können, wobei R₁, und R₂ sowie R₆ und R₇ unabhängig voneinander je paarweise getrennt oder, falls sie substituierbare Stellen enthalten, über eine Direktbindung oder über eine Brücke -O- oder -NR₁₂miteinander so verbunden sein können, dass mit dem gemeinsamen N⁺ ein fünfoder sechsgliedriger Heterozyklus gebildet wird;
R₃, R₄, R₅, R₈, R₉ und R₁₀ unabhängig voneinander für Wasserstoff, Halogen, OR₁₇, SR₁₇, NO₂, NR₁₈R₁₉ oder unsubstituiertes oder mit Halogen, C₁-C₈Alkoxy, C₁-C₈Alkylthio, NO₂, CN oder NR₁₈R₁₉ einfach oder mehrfach substituiertes C₁-C₂₀Alkyl, C₂-C₂₀Alkenyl, C₂-C₂₀Alkinyl oder C₇-C₁₈Aralkyl stehen, wobei R₁ und R₃, R₂ und R₄, R₆ und R₈ sowie R₇ und R₉ unabhängig voneinander je paarweise getrennt, oder, falls jeweils beide mindestens eine substituierbare Stelle enthalten, über eine Direktbindung oder über eine Brücke -O- oder -NR₂₀- miteinander so verbunden sein können, dass mit der gemeinsamen Gruppe C-C=N⁺, C=C-N oder C-C-N ein fünf- oder sechsgliedriger Heterozyklus gebildet wird,
oder R₄ und R₅ oder davon unabhängig R₉ und R₁₀ sind zusammen unsubstituiertes oder mit C₁-C₈Alkyl, C₁-C₈Alkoxy, C₁-C₈Alkylthio, Halogen, NO₂, CN, NR₁₈R₁₉, SO₃⁻, SO₃R₁₇, SO₂NR₁₈R₁₉, COO⁻, COOR₁₇, CONR₁₈R₁₉, PO₃⁻, PO(OR₁₈)(OR₁₉) oder SiR₂₁R₂₂R₂₃ einfach oder mehrfach substituiertes 1,4-Buta-1,3-dienylen, so dass gegebenenfalls mit der gemeinsamen C=C-Gruppe ein sechsgliedriger aromatischer Ring gebildet wird;
R₁₁ für Wasserstoff, (CH₂)ₖCOO⁻, (CH₂)ₖCOOR₂₄, C₁-C₂₀Alkyl, C₂-C₂₀Alkenyl, C₂-C₂₀Alkinyl oder unsubstituiertes oder einfach oder mehrfach mit Halogen, NO₂, CN, NR₂₄R₂₅, SO₃⁻, SO₃R₂₄, SO₂NR₂₄R₂₅, COO⁻, (CH₂)ₖOR₂₄, (CH₂)ₖOCOR₂₄, COOR₂₄, CONR₂₄R₂₅, OR₂₄, SR₂₄, PO₃⁻_{,} PO(OR₂₄)(OR₂₅) oder SiR₂₁R₂₂R₂₃ substituiertes C₇-C₁₈Aralkyl oder C₆-C₁₄Aryl steht;
R₁₂, R₁₃, R₁₇, R₁₈, R₁₉, R₂₀, R₂₄ und R₂₅ unabhängig voneinander für Wasserstoff, C₁-C₂₀Alkyl, C₂-C₂₀Alkenyl, C₂-C₂₀Alkinyl oder C₇-C₁₈Aralkyl, oder für unsubstituiertes oder mit C₁-C₈Alkyl, C₁-C₈Alkoxy, C₁-C₈Alkylthio, Halogen, NO₂, CN, NH₂, NHR₂₁, NR₂₁R₂₂, SO₃⁻, SO₃R₂₃, SO₂NH₂, SO₂NHR₂₁, SO₂NR₂₁R₂₂, COO⁻, COOR₂₃, CONH₂, CONHR₂₁, CONR₂₁R₂₂, PO₃⁻, PO(OR₂₁)(OR₂₂) oder SiR₁₄R₁₅R₁₆ einfach oder mehrfach substituiertes C₆-C₁₄Aryl stehen,
oder NR₁₂R₁₃, NR₁₈R₁₉, NR₂₁R₂₂ oder NR₂₄R₂₅ einen fünf- oder sechsgliedrigen, gegebenenfalls einen weiteren N oder O-Atom enthaltenden Heterozyklus bedeuten, welcher einfach oder mehrfach mit C₁-C₈Alkyl substituiert sein kann;
R₁₄, R₁₅, R₁₆, R₂₁, R₂₂ und R₂₃ unabhängig voneinander für C₁-C₂₀Alkyl, C₂-C₂₀Alkenyl, C₂-C₂₀Alkinyl oder C₇-C₁₈Aralkyl stehen;
Y für ein Metallkomplexanion oder metallorganisches Anion, oder für ein Gemisch davon, steht;
Z für ein Proton oder ein Metall-, Ammonium- oder Phosphonium-Kation, oder für ein Gemisch davon, steht;
k für eine ganze Zahl von 1 bis 10 steht;
m, n und o unabhängig voneinander je für eine ganze Zahl von 1 bis 3 stehen; und
p und q je für eine Zahl von 0 bis 4 stehen, wobei o, p und q je nach Ladung der zugehörigen Teilstrukturen in einem solchen Verhältnis zueinander stehen, dass in Formel (I) keine überschüssige positive oder negative Ladung resultiert.

2. Aufzeichnungsmedium nach Anspruch 1, worin R₁ R₂, R₆ und R₇ unabhängig voneinander für Wasserstoff oder unsubstituiertes oder mit COO⁻, COOH, COO-C₁-C₈Alkyl, SO₃⁻, SO₃H oder SO₃-C₁-C₈Alkyl einfach oder mehrfach substituiertes C₁-C₂₀Alkyl, C₂-C₂₀Alkenyl oder C₂-C₂₀Alkinyl, jedoch R₁ und R₆ sowie R₂ und R₇ nicht jeweils beide gleichzeitig für Wasserstoff, stehen;
wobei R₁ und R₂ sowie R₆ und R₇ unabhängig voneinander je paarweise getrennt oder, falls sie substituierbare Stellen enthalten, über eine Direktbindung oder über eine Brücke -O- oder -NR₁₂- miteinander so verbunden sein können, dass mit dem gemeinsamen N⁺ ein fünf- oder sechsgliedriger Heterozyklus gebildet wird;
R₃ und R₈ unabhängig voneinander für Wasserstoff, Halogen, OR₁₇, NO₂, C₁-C₂₀Alkyl, C₂-C₂₀Alkenyl, C₂-C₂₀Alkinyl oder C₇-C₁₈Aralkyl steht;
R₄, R₅, R₉ und R₁₀ unabhängig voneinander für Wasserstoff, Halogen, NO₂, OR₁₇ oder unsubstituiertes C₁-C₂₀Alkyl, C₂-C₂₀Alkenyl, C₂-C₂₀Alkinyl oder C₇-C₁₈Aralkyl stehen;
wobei R₁ und R₃, R₂ und R₄, R₆ und R₈ sowie R₇ und R₉ unabhängig voneinander je paarweise getrennt, oder, falls jeweils beide mindestens eine substituierbare Stelle enthalten, über eine Direktbindung miteinander so verbunden sind, dass mit der gemeinsamen Gruppe C-C=N⁺, C=C-N oder C-C-N ein fünf- oder sechsgliedriger Heterozyklus gebildet wird;
R₁₁ für Wasserstoff, (CH₂)ₖCOO⁻, (CH₂)ₖCOOR₂₄ oder unsubstituiertes oder einfach oder mehrfach mit Halogen, NO₂, NR₂₄R₂₅, SO₃⁻, SO₃R₂₄, SO₂NR₂₄R₂₅, (CH₂)ₖOR₂₄, COO⁻_{,} COOR₂₄, CONR₂₄R₂₅ oder OR₂₄ substituiertes Phenyl oder Naphthyl steht;
R₁₇, R₁₉, R₂₄ und R₂₅ unabhängig voneinander für Wasserstoff oder unsubstituiertes C₁-C₂₀Alkyl, C₂-C₂₀Alkenyl, C₂-C₂₀Alkinyl oder C₇-C₁₈Aralkyl stehen; und
o für eine ganze Zahl 1 oder 2 steht.

3. Aufzeichnungsmedium nach Anspruch 2, worin R₁, R₂, R₆ und R₇ unabhängig voneinander für unsubstituiertes C₁-C₂₀Alkyl stehen, wobei R₁ und R₂ sowie R₆ und R₇ unabhängig voneinander je paarweise getrennt oder über eine Direktbindung oder über eine Brücke -O- oder -NR₁₂- miteinander so verbunden sein können, dass mit dem gemeinsamen N⁺ ein fünf- oder sechsgliedriger Heterozyklus gebildet wird;
R₃, R₄, R₈ und R₉ unabhängig voneinander für Wasserstoff oder unsubstituiertes C₁-C₂₀Alkyl stehen, wobei R₁ und R₃, R₂ und R₄, R₆ und R₈ sowie R₇ und R₉ unabhängig voneinander je paarweise getrennt oder über eine Direktbindung miteinander so verbunden sind, dass mit der gemeinsamen Gruppe C-C=N⁺, C=C-N oder C-C-N ein fünf- oder sechsgliedriger Heterozyklus gebildet wird;
R₅ und R₁₀ für Wasserstoff stehen;
R₁₁ für unsubstituiertes oder einfach oder mehrfach mit Halogen, NO₂, SO₃⁻, SO₃R_{24,} SO₂NR₂₄R₂₅ COO⁻, COOR₂₄ oder CONR₂₄R₂₅ substituiertes Phenyl oder Naphthyl steht;
R₁₂ für Wasserstoff oder unsubstituiertes C₁-C₄Alkyl steht; und
R₂₄ und R₂₅ unabhängig voneinander für Wasserstoff oder unsubstituiertes C₁-C₂₀Alkyl stehen.

4. Aufzeichnungsmedium nach Anspruch 1, worin Y^{m}-für ein Übergangsmetallkomplexanion, welches mindestens eine phenolische oder phenylcarboxylische Azoverbindung als Ligand enthält, m für eine ganze Zahl 1 oder 2, und p für eine Zahl von 0 bis 2 stehen.

5. Aufzeichnungsmedium nach Anspruch 1, worin Z für ein Proton oder ein Metalloder Ammonium-Kation, n für eine ganze Zahl 1 oder 2, und q für eine Zahl von 0 bis 3 stehen.

6. Aufzeichnungsmedium nach Anspruch 4, worin Y^{m-} ein Übergangsmetallkomplexanion der Formel (II) darstellt,
[(L₁)M(L₂)]^{m-} (II)
worin L₁ und L₂ unabhängig voneinander Liganden der Formeln 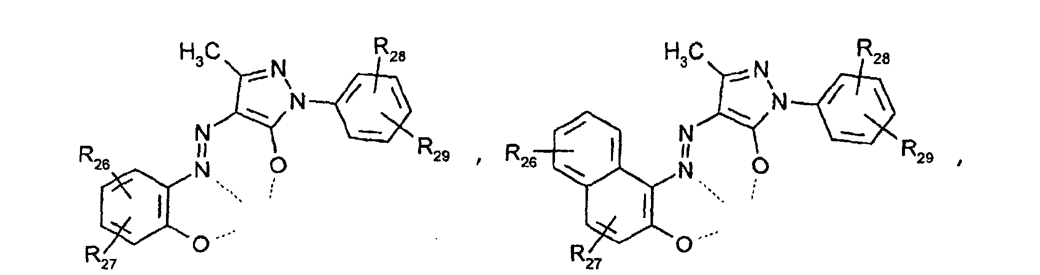 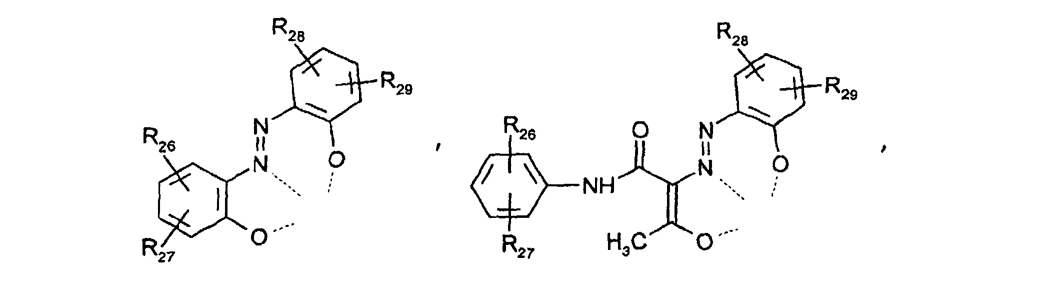 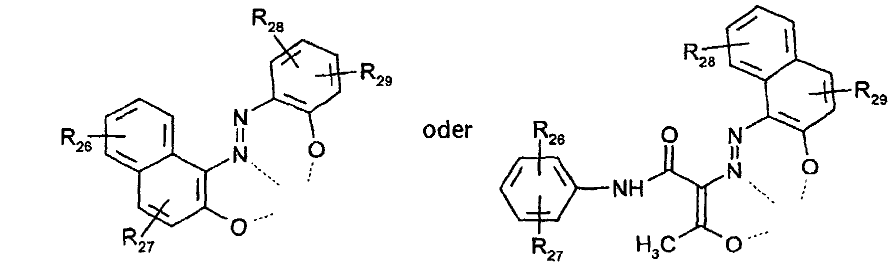 sind,
wobei R₂₆, R₂₇, R₂₈ und R₂₉ unabhängig voneinander Wasserstoff, Halogen, R₃₀, NO₂, NR₃₀R₃₁, NHCO-R₃₀, NHCOO-R₃₀, SO₂-R₃₀, SO₂NH₂, SO₂NH-R₃₀, SO₂NR₃₀R₃₁, SO₃⁻ oder SO₃H sind, worin R₃₀ und R₃₁ unabhängig voneinander unsubstituiertes oder mit Hydroxy, Halogen oder C₁-C₆alkoxy substituiertes C₁-C₁₂Alkyl bedeuten; und M für Cr³⁺ oder Co³⁺ steht

7. Aufzeichnungsmedium nach Anspruch 1, worin Zⁿ⁺ für [NH₂R₃₂R₃₃]⁺ steht, wobei R₃₂ Wasserstoff oder C₁-C₁₂Alkyl und R₃₃ C₁-C₂₄Alkyl oder C₇-C₂₄Aralkyl bedeuten, und R₃₂ und R₃₃ zusammen von 8 bis 25 Kohlenstoffatome besitzen.

8. Aufzeichnungsmedium nach Anspruch 1, worin m, n und o je die Zahl 1, p eine Zahl von 0 bis 2½, und q eine Zahl von 0 bis 1½ sind, wobei die Summe von o und q gleich p ist, so dass in Formel (II) keine überschüssige positive oder negative Ladung resultiert.

9. Aufzeichnungsmedium nach Anspruch 1, worin Formel (I) für 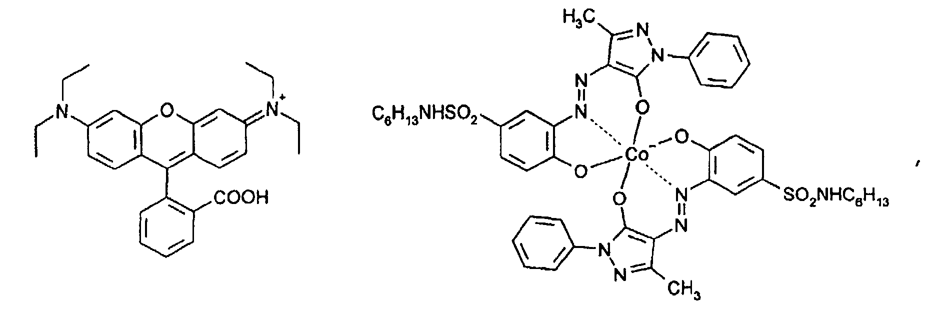 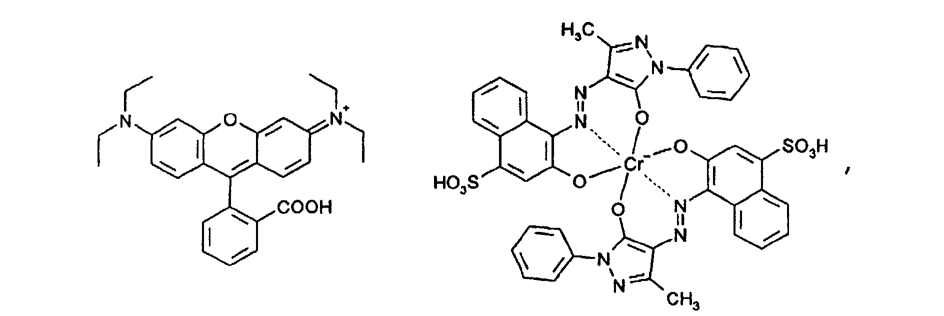 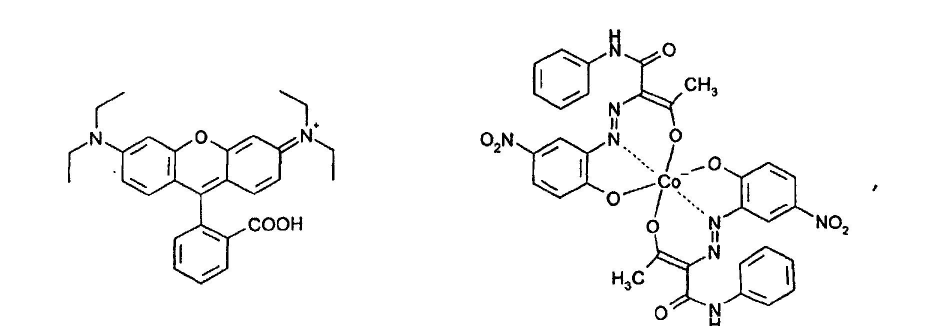 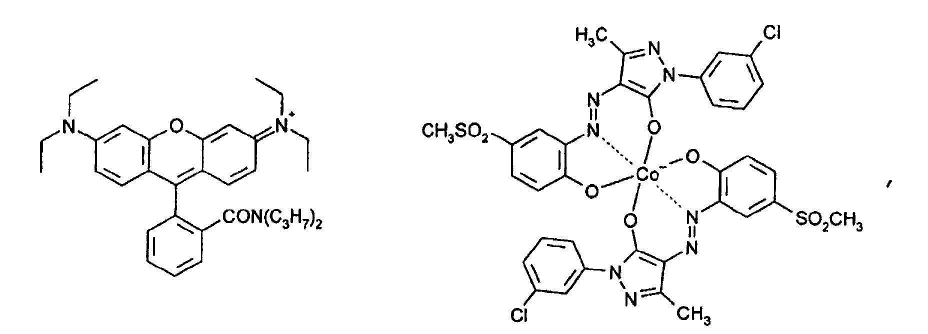 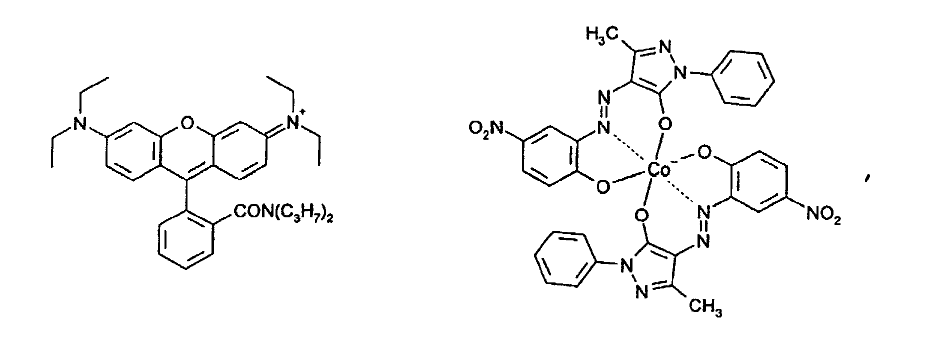 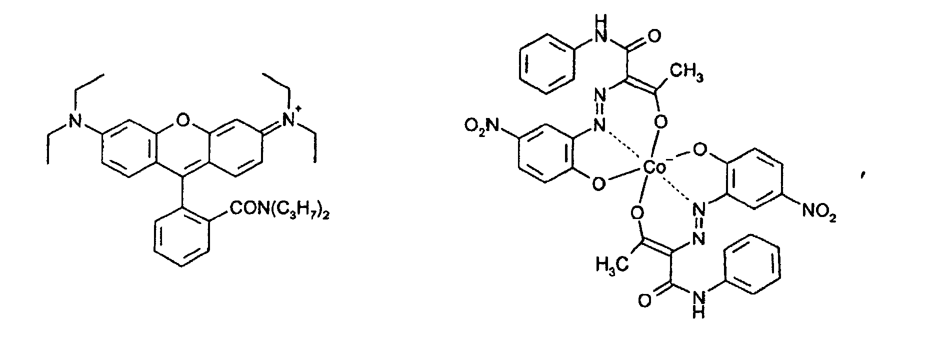 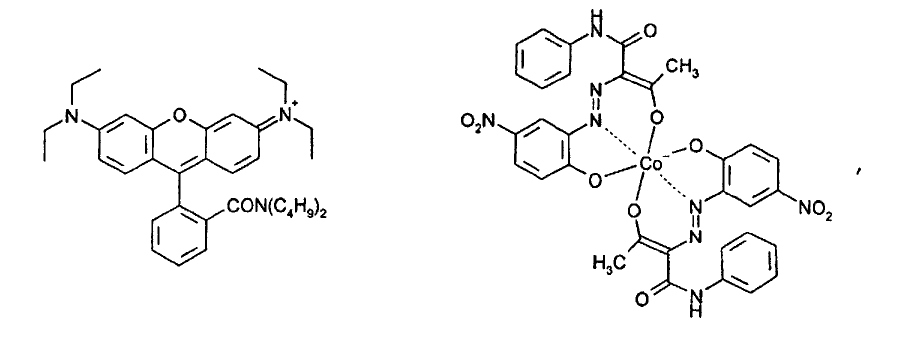 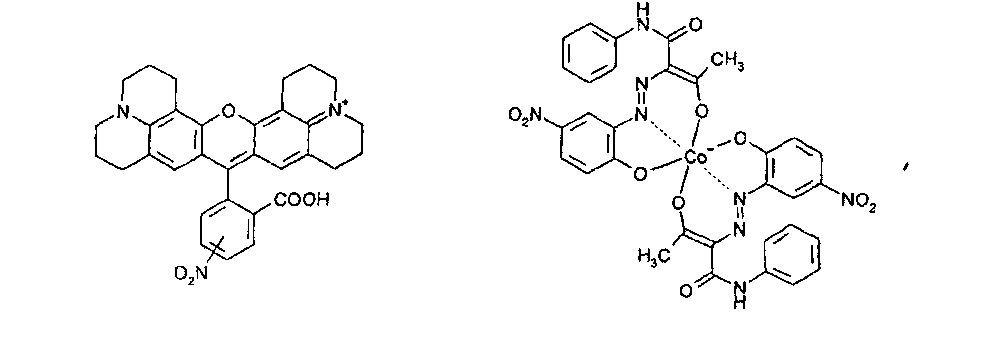 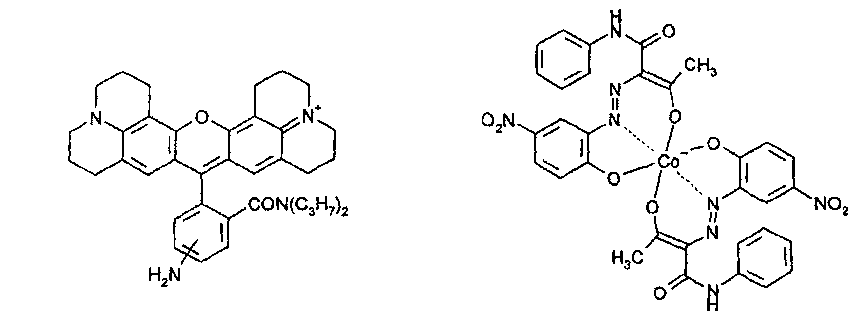 oder 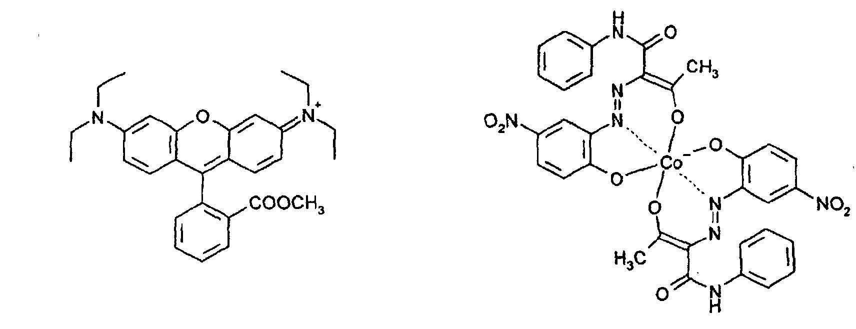 steht.

10. Aufzeichnungsmedium nach Anspruch 1, worin der Farbstoff der Formel (I) ein Absorptionsmaximum bei 540 bis 610 nm in ethanolischer Lösung und einen Brechungsindex von 2,0 bis 3,0 im Bereich von 600 bis 700 nm besitzt.

11. Aufzeichnungsmedium nach Anspruch 1, worin das Substrat eine Transparenz von mindestens 90% und eine Dicke von 0,01 bis 10 mm, bevorzugt von 0,1 bis 5 mm aufweist.

12. Aufzeichnungsmedium nach Anspruch 1, worin die reflektierende Schicht aus Aluminium, Silber, Kupfer, Gold oder deren Legierungen besteht, und eine Reflektivität von mindestens 70% und eine Dicke von 10 bis 150 nm aufweist.

13. Aufzeichnungsmedium nach Anspruch 1, worin die Aufzeichnungsschicht sich zwischen dem transparenten Substrat und der reflektierenden Schicht befindet, und eine Dicke von 10 bis 1000 nm, bevorzugt von 50 bis 500 nm, besonders bevorzugt von 80 bis 150 nm aufweist.

14. Aufzeichnungsmedium nach Anspruch 1, dessen oberste Schicht mit einer zusätzlichen Schutzschicht, deren Dicke von 0,1 bis 1000 µm, bevorzugt 0,1 bis 50 µm und besonders bevorzugt 0,5 bis 15 µm beträgt, versehen ist, worauf gegebenenfalls noch eine zweite Substratschicht angebracht sein kann, welche bevorzugt von 0,1 bis 5 mm dick ist und aus dem gleichen Material wie das Trägersubstrat besteht.

15. Aufzeichnungsmedium nach Anspruch 1, welches eine Reflektivität von mindestens 60% aufweist.

16. Aufzeichnungsmedium nach Anspruch 1, worin zwischen der Aufzeichnungsschicht und der reflektierenden Schicht und/oder zwischen der Aufzeichnungsschicht und dem Substrat zusätzlich mindestens eine aus einem dielektrischen Material bestehende Interferenzschicht angeordnet ist.

17. Verfahren zur optischen Aufzeichnung, Speicherung und Wiedergabe von Information, **dadurch gekennzeichnet, dass** ein Aufzeichnungsmedium nach Anspruch 1 verwendet wird.

18. Verfahren nach Anspruch 17, worin die Aufzeichnung und die Wiedergabe im Wellenlängenbereich von 600 bis 700 nm erfolgen.

## Claims

1. An optical recording medium comprising a substrate, a reflecting layer and a recording layer, wherein this recording layer consists essentially of one or more dyes of the formula (I) 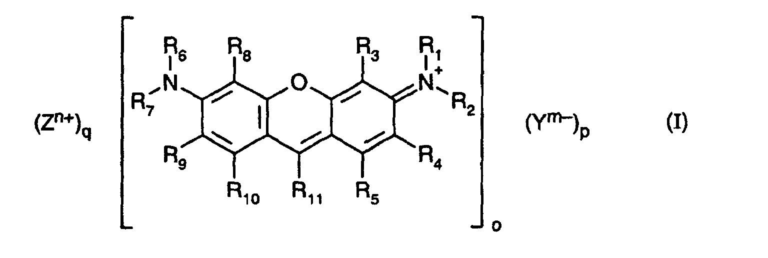 if desired another dye in an amount of not more than 50% by weight, based on the recording layer, and if desired a stabilizer, in which R₁, R₂, R₆ and R₇ independently of one another are hydrogen, unsubstituted or mono- or poly-halo-, -C₁-C₈alkoxy-, -C₁-C₈alkylthio-, -NO₂-, -CN-, -NR₁₂R₁₃-, -COO⁻-, -COOH-, -COO-C₁-C₈alkyl-, -SO₃⁻-, -SO₃H- or -SO₃-C₁-C₈alkyl-substituted C₁-C₂₀alkyl, C₂-C₂₀alkenyl or C₂-C₂₀alkynyl, or unsubstituted or mono- or poly-C₁-C₈alkyl-, -C₁-C₈alkoxy-, -C₁-C₈alkylthio-, -halo-, -NO₂-, -CN-, -NR₁₂R₁₃-, -SO₃⁻-, -SO₃R₁₂-, -SO₂NR₁₂R₁₃-, -COO⁻-, -COOR₁₂-, -CONR₁₂R₁₃-, -PO₃⁻-, -PO(OR₁₂)(OR₁₃)- or -SiR₁₄R₁₅R₁₆- substituted C₇-C₁₈aralkyl or C₆-C₁₄aryl, but R₁ and R₆ and R₂ and R₇ cannot each both simultaneously be hydrogen, and where R₁ and R₂ and R₆ and R₇ independently of one another, each in pairs, are separate or, if they contain substitutable sites, can be connected to one another in such a way, via a direct bond or via a bridge -O- or -NR₁₂-, as to form with the shared N⁺ a five- or six-membered heterocycle;
R₃, R₄, R₅, R₈, R₉ and R₁₀ independently of one another are hydrogen, halogen, OR₁₇, SR₁₇, NO₂, NR₁₈R₁₉ or unsubstituted or mono- or poly-halo-, -C₁-C₈alkoxy-, -C₁-C₈alkylthio-, -NO₂-, -CN- or -NR₁₈R₁₉-substituted C₁-C₂₀alkyl, C₂-C₂₀alkenyl, C₂-C₂₀alkynyl or C₇-C₁₈aralkyl, R₁ and R₃, R₂ and R₄, R₆ and R₈ and R₇ and R₉ independently of one another, each in pairs, are separate or, if both in each case contain at least one substitutable site, can be connected to one another in such a way, via a direct bond or via a bridge -O- or -NR₂₀-, as to form a five- or six-membered heterocycle with the shared group C-C=N⁺, C=C-N or C-C-N ,
or R₄ and R₅ or independently thereof, R₉ and R₁₀ together are 1,4-buta-1,3-dienylene which is unsubstituted or is substituted one or more times by C₁-C₈alkyl, C₁-C₈alkoxy, C₁-C₈alkylthio, halogen, NO₂, CN, NR₁₈R₁₉, SO₃⁻, SO₃R₁₇, SO₂NR₁₈R₁₉, COO⁻, COOR₁₇, CONR₁₈R₁₉, PO₃⁻, PO(OR₁₈)(OR₁₉) or SiR₂₁R₂₂R₂₃, so that alone or together with the shared C=C group a six-membered aromatic ring is formed;
R₁₁ is hydrogen, (CH₂)ₖCOO⁻, (CH₂)ₖCOOR₂₄, C₁-C₂₀alkyl, C₂-C₂₀alkenyl or C₂-C₂₀alkynyl, or is C₆-C₁₄aryl or C₇-C₁₈aralkyl which is unsubstituted or substituted one or more times by halogen, NO₂, CN, NR₂₄R₂₅, SO₃⁻, SO₃R₂₄, SO₂NR₂₄R₂₅, COO⁻, (CH₂)ₖOR₂₄, (CH₂)ₖOCOR₂₄, COOR₂₄, CONR₂₄R₂₅, OR₂₄, SR₂₄, PO₃⁻, PO(OR₂₄)(OR₂₅) or SiR₂₁R₂₂R₂₃;
R₁₂, R₁₃, R₁₇, R₁₈, R₁₉, R₂₀, R₂₄ and R₂₅ independently of one another are hydrogen, C₁-C₂₀alkyl, C₂-C₂₀alkenyl, C₂-C₂₀alkynyl or C₇-C₁₈aralkyl, or are C₈-C₁₄aryl which is unsubstituted or substituted one or more times by C₁-C₈alkyl, C₁-C₈alkoxy, C₁-C₈alkylthio, halogen, NO₂, CN, NH₂, NHR₂₁, NR₂₁R₂₂, SO₃⁻, SO₃R₂₃, SO₂NH₂, SO₂NHR₂₁, SO₂NR₂₁R₂₂, COO⁻, COOR₂₃, CONH₂, CONHR₂₁, CONR₂₁R₂₂, PO₃⁻, PO(OR₂₁)(OR₂₂) or SiR₁₄R₁₅R₁₆,
or NR₁₂R₁₃, NR₁₈R₁₉, NR₂₁R₂₂ or NR₂₄R₂₅ is a five- or six-membered heterocycle which possibly contains an additional N or O atom and which can be substituted one or more times by C₁-C₈alkyl;
R₁₄, R₁₅, R₁₆, R₂₁, R₂₂ and R₂₃ independently of one another are C₁-C₂₀alkyl, C₂-C₂₀alkenyl, C₂-C₂₀alkynyl or C₇-C₁₈aralkyl;
Y is a metal complex anion or organometallic anion, or a mixture thereof;
Z is a proton or a metal cation, ammonium cation or phosphonium cation, or a mixture thereof;
k is an integer from 1 to 10;
m, n and o independently of one another are each an integer from 1 to 3; and
p and q are each a number from 0 to 4, where the relationship between o, p and q, depending on the charge of the associated substructures, is such that in formula I no excess positive or negative charge results.

2. A recording medium according to claim 1, in which R₁, R₂, R₆ and R₇ independently of one another are hydrogen or are unsubstituted or mono- or poly-COO⁻-, -COOH-,
-COO-C₁-C₈alkyl-, -SO₃-, -SO₃H- or -SO₃-C₁-C₈alkyl-substituted C₁-C₂₀alkyl, C₂-C₂₀alkenyl or C₂-C₂₀alkynyl, but R₁ and R₆ and R₂ and R₇ are not in each case both simultaneously hydrogen;
and R₁ and R₂ and R₆ and R₇ independently of one another, each in pairs, are separate or, if they contain substitutable sites, can be connected to one another in such a way, via a direct bond or via a bridge -O- or -NR₁₂-, as to form with the shared N⁺ a five- or six-membered heterocycle;
R₃ and R₈ independently of one another are hydrogen, halogen, OR₁₇, NO₂, C₁-C₂₀alkyl, C₂-C₂₀alkenyl, C₂-C₂₀alkynyl or C₇-C₁₈aralkyl;
R₄, R₅, R₉ and R₁₀ independently of one another are hydrogen, halogen, NO₂, OR₁₇ or unsubstituted C₁-C₂₀alkyl, C₂-C₂₀alkenyl, C₂-C₂₀alkynyl or C₇-C₁₈aralkyl;
and R₁ and R₃, R₂ and R₄, R₆ and R₈ and R₇ and R₉ independently of one another, each in pairs, are separate or, if both in each case contain at least one substitutable site, are connected to one another in such way, via a direct bond, as to form a five- or six-membered heterocycle with the shared group C-C=N⁺, C=C-N or C-C-N;
R₁₁ is hydrogen, (CH₂)ₖCOO⁻ or (CH₂)ₖCOOR₂₄ or is naphthyl or phenyl which is unsubstituted or substituted one or more times by halogen, NO₂, NR₂₄R₂₅, SO₃⁻, SO₃R₂₄, SO₂NR₂₄R₂₅, (CH₂)ₖOR₂₄, COO⁻, COOR₂₄, CONR₂₄R₂₅ or OR₂₄;
R₁₇, R₁₉, R₂₄ and R₂₅ independently of one another are hydrogen or unsubstituted C₁-C₂₀alkyl, C₂-C₂₀alkenyl, C₂-C₂₀alkynyl or C₇-C₁₈aralkyl; and
o is an integer 1 or 2.

3. A recording medium according to claim 2, wherein R₁, R₂, R₆ and R₇ independently of one another are unsubstituted C₁-C₂₀alkyl, R₁ and R₂ and R₆ and R₇ independently of one another, each in pairs, are separate, or can be connected to one another in such a way, via a direct bond or via a bridge -O- or -NR₁₂-, as to form with the shared N⁺ a five- or six-membered heterocycle;
R₃, R₄, R₈ and R₉ independently of one another are hydrogen or unsubstituted C₁-C₂₀alkyl, R₁ and R₃, R₂ and R₄, R₆ and R₈ and R₇ and R₉ independently of one another, each in pairs, are separate, or are connected to one another in such a way, via a direct bond, as to form a five- or six-membered heterocycle with the shared group C-C=N⁺, C=C-N or C-C-N;
R₅ and R₁₀ are hydrogen;
R₁₁ is naphthyl or phenyl which is unsubstituted or substituted one or more times by halogen, NO₂, SO₃⁻, SO₃R₂₄, SO₂NR₂₄R₂₅, COO⁻, COOR₂₄ or CONR₂₄R₂₅;
R₁₂ is hydrogen or unsubstituted C₁-C₄alkyl; and
R₂₄ and R₂₅ independently of one another are hydrogen or unsubstituted C₁-C₂₀alkyl.

4. A recording medium according to claim 1, wherein Y^{m-} is a transition metal complex anion containing at least one phenolic or phenylcarboxylic azo compound as ligand, m is an integer 1 or 2, and p is a number from 0 to 2.

5. A recording medium according to claim 1, wherein Z is a proton or a metal cation or ammonium cation, n is an integer 1 or 2, and q is a number from 0 to 3.

6. A recording medium according to claim 4, wherein Y^{m-} is a transition metal complex anion of the formula (II),
[(L₁)M(L₂)]^{m-} (II) 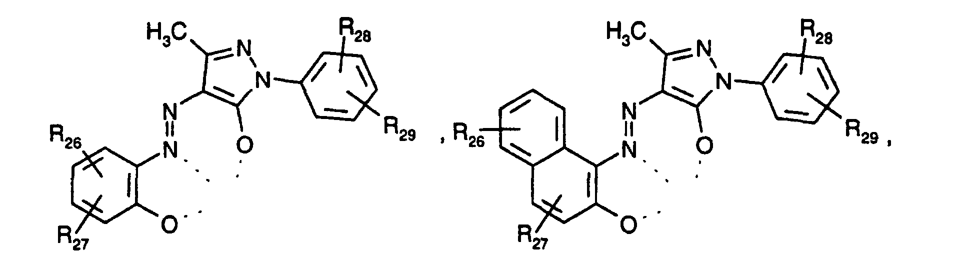
in which L₁ and L₂ independently of one another are ligands of the formulae 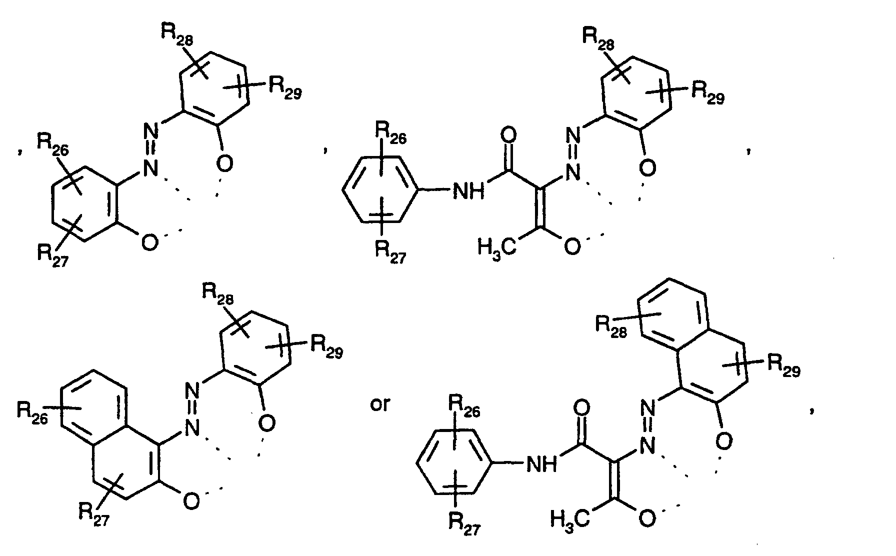 in which R₂₆, R₂₇, R₂₈ and R₂₉ independently of one another are hydrogen, halogen, R₃₀, NO₂, NR₃₀R₃₁, NHCO-R₃₀, NHCOO-R₃₀, SO₂-R₃₀, SO₂NH₂, SO₂NH-R₃₀, SO₂NR₃₀R₃₁, SO₃⁻ or SO₃H where R₃₀ and R₃₁ independently of one another are unsubstituted or hydroxyl-, halo- or C₁-C₆alkoxy-substituted C₁-C₁₂alkyl; and
M is Cr³⁺ or Co³⁺.

7. A recording medium according to claim 1, wherein Zⁿ⁺ is [NH₂R₃₂R₃₃]⁺, where R₃₂ is hydrogen or C₁-C₁₂alkyl and R₃₃ is C₁-C₂₄alkyl or C₇-C₂₄aralkyl, and R₃₂ and R₃₃ together have from 8 to 25 carbon atoms.

8. A recording medium according to claim 1, wherein m, n and o are each the number 1, p is a number from 0 to 2½, and q is a number from 0 to 1½, the sum of o and q being equal to p, so that in formula (II) no excess positive or negative charge results.

9. A recording medium according to claim 1, wherein formula (I) is 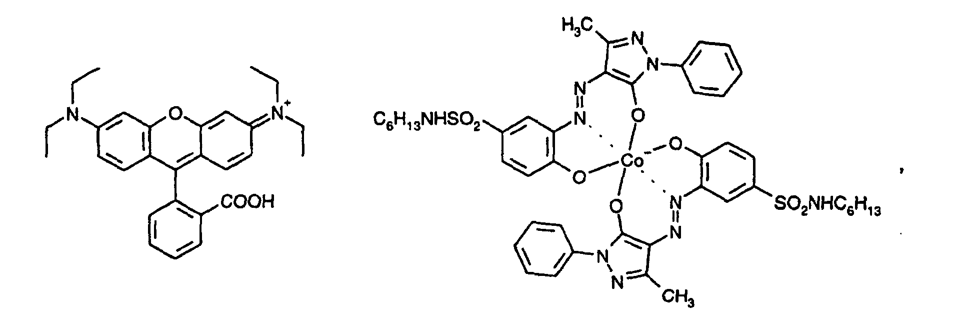 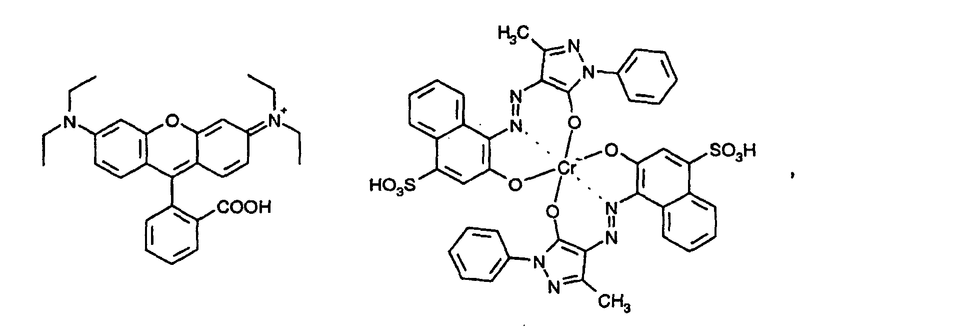 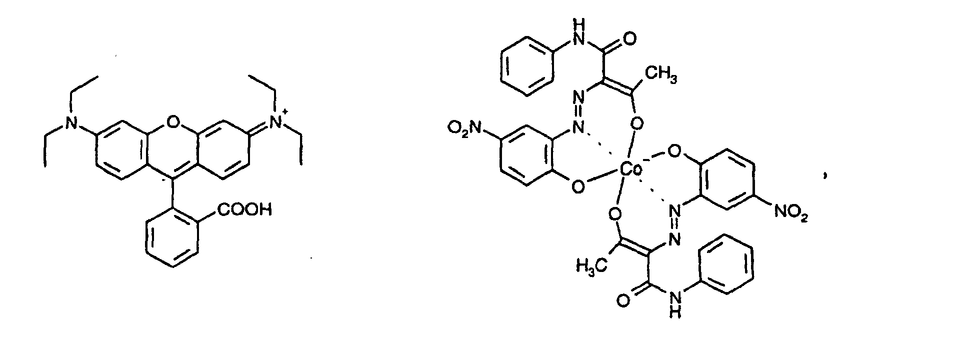 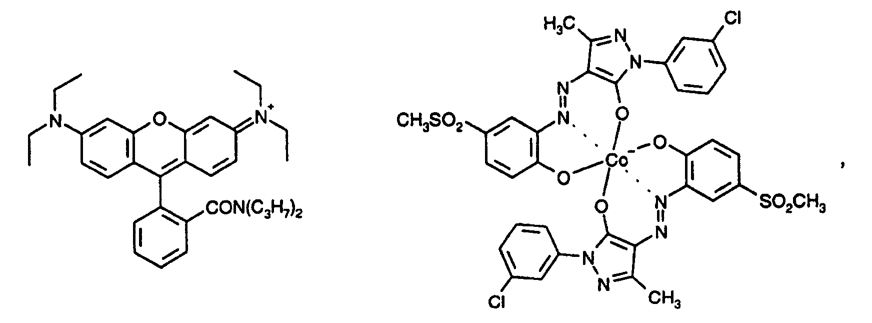 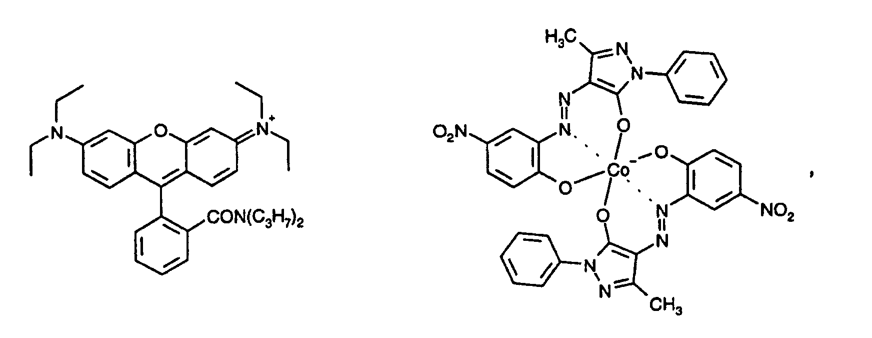 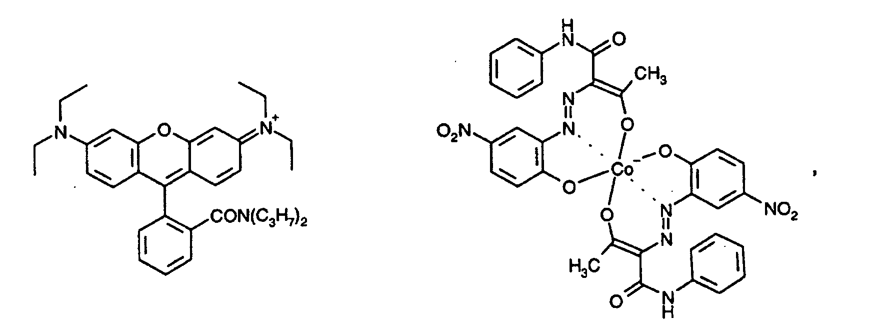 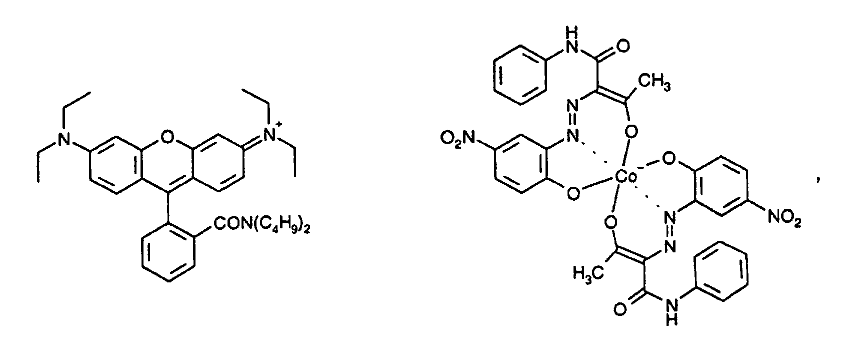 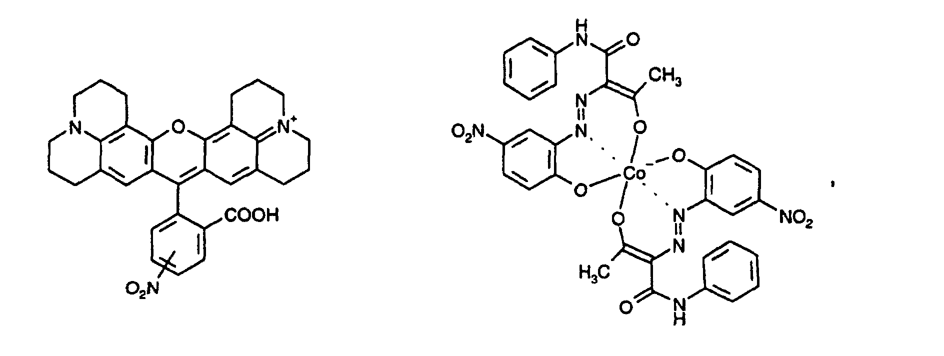 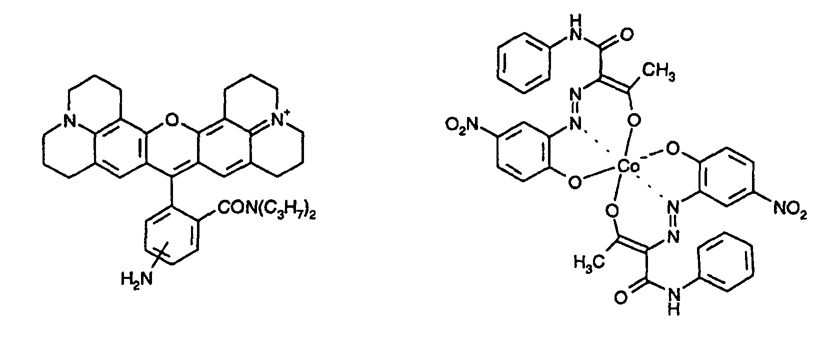 or

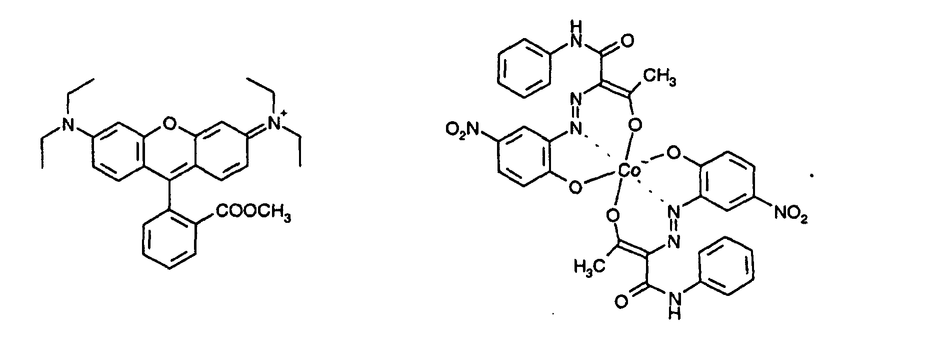

10. A recording medium according to claim 1, wherein the dye of the formula (I) has an absorption maximum at from 540 to 610 nm in ethanolic solution and a refractive index of from 2.0 to 3.0 in the range from 600 to 700 nm.

11. A recording medium according to claim 1, wherein the substrate has a transparency of at least 90% and a thickness of from 0.01 to 10 mm, preferably from 0.1 to 5 mm.

12. A recording medium according to claim 1, wherein the reflecting layer consists of aluminium, silver, copper, gold or alloys thereof and has a reflectivity of at least 70% and a thickness of from 10 to 150 nm.

13. A recording medium according to claim 1, wherein the recording layer is located between the transparent substrate and the reflecting layer and has a thickness of from 10 to 1000 nm, preferably from 50 to 500 nm, with particular preference from 80 to 150 nm.

14. A recording medium according to claim 1, whose topmost layer is provided with an additional protective layer whose thickness is from 0.1 to 1000 µm, preferably from 0.1 to 50 µm and, with particular preference, from 0.5 to 15 µm, and on which, if desired, a second substrate layer can also be arranged, which is preferably from 0.1 to 5 mm thick and consists of the same material as the support substrate.

15. A recording medium according to claim 1 which has a reflectivity of at least 60%.

16. A recording medium according to claim 1, wherein between the recording layer and the reflecting layer and/or between the recording layer and the substrate there is additionally arranged at least one interference layer consisting of a dielectric material.

17. A method of optical recording, storage and reproduction of information, wherein a recording medium according to claim 1 is used.

18. A method according to claim 17, wherein recording and reproduction take place in the wavelength range from 600 to 700 nm.

## Revendications

1. Milieu d'enregistrement optique, comprenant un substrat, une couche réfléchissante et une couche d'enregistrement, **caractérisé en ce que** cette couche d'enregistrement est constituée par un ou plusieurs colorants de formule (I) 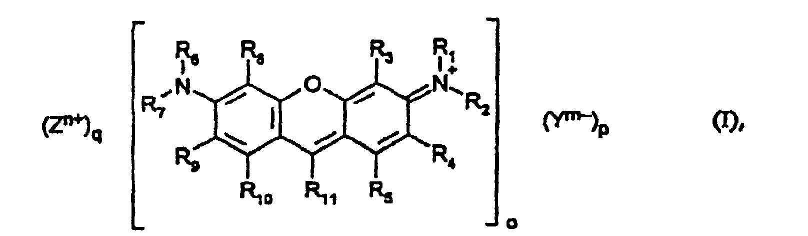 éventuellement avec un autre colorant en une quantité d'au maximum 50 % en masse par rapport à la couche d'enregistrement, et éventuellement par un stabilisant,
où R₁, R₂, R₆ et R₇ représentent, indépendamment les uns des autres, un atome d'hydrogène, un groupe alkyle en C₁-C₂₀, alcényle en C₂-C₂₀ ou alcynyle en C₂-C₂₀ non substitué ou substitué une ou plusieurs fois par un substituant halogène, alkoxy en C₁-C₈, (alkyl en C₁-C₈)-thio, NO₂, CN, NR₁₂R₁₃, COO⁻, COOH, COO-alkyle en C₁-C₈, SO₃⁻, SO₃H ou SO₃-alkyle en C₁-C₈, ou aralkyle en C₇-C₁₈ ou aryle en C₆-C₁₄ non substitué ou substitué une ou plusieurs fois par un substituant alkyle en C₁-C₈, alkoxy en C₁-C₈, (alkyl en C₁-C₈) thio, halogène, NO₂, CN, NR₁₂R₁₃, SO₃⁻, SO₃R₁₂, SO₂NR₁₂R₁₃, COO⁻, COOR₁₂, CONR₁₂R₁₃, PO₃⁻, PO(OR₁₂) (OR₁₃) ou SiR₁₄R₁₅R₁₆, mais R₁ et R₆, ainsi que R₂ et R₇ ne peuvent pas représenter simultanément un atome d'hydrogène, R₁ et R₂, ainsi que R₆ et R₇ peuvent être, indépendamment les uns des autres, chaque fois séparés par paires ou, s'ils présentent des sites substituables, reliés l'un à l'autre par une liaison directe ou un pont -O- ou -NR₁₂- de façon telle qu'ils forment avec N⁺ commun un hétérocycle de cinq ou six chaînons ;
R₃, R₄, R₅, R₈, R₉ et R₁₀ représentent, indépendamment les uns des autres, un atome d'hydrogène, un atome d'halogène, un groupe OR₁₇, SR₁₇, NO₂, NR₁₈R₁₉ ou un groupe alkyle en C₁-C₂₀, alcényle en C₂-C₂₀, alcynyle en C₂-C₂₀ ou aralkyle en C₇-C₁₈ non substitué ou substitué une ou plusieurs fois par des substituants halogène, alkoxy en C₁-C₈, (alkyl en C₁-C₈)-thio, NO₂, CN ou NR₁₈R₁₉, R₁ et R₃, R₂ et R₄, R₆ et R₈ ainsi que R₇ et R₉ sont, indépendamment les uns des autres, séparés par paires ou, dans le cas où les deux présentent au moins un site substituable, reliés les uns aux autres par une liaison directe ou un pont -O- ou -NR₂₀- de façon telle qu'ils forment avec le groupe commun C-C=N⁺, C=C-N ou C-C-N un hétérocycle de cinq ou six chaînons,
ou R₄ et R₅ ou indépendamment R₉ et R₁₀ représentent ensemble un groupe l,4-buta-1,3-diénylène non substitué ou substitué une ou plusieurs fois par des substituants alkyle en C₁-C₈, alkoxy en C₁-C₈, (alkyl en C₁-C₈)thio, halogène, NO₂, CN, NR₁₈R₁₉, SO₃⁻, SO₃R₁₇, SO₂NR₁₈R₁₉, COO⁻, COOR₁₇, CONR₁₈R₁₉, PO₃⁻, PO(OR₁₈)(OR₁₉) ou SiR₂₁R₂₂R₂₃, de sorte qu'un cycle aromatique de six chaînons est éventuellement formé avec le groupe C=C commun ;
R₁₁ représente un atome d'hydrogène, un groupe (CH₂)ₖCOO⁻, (CH₂)ₖCOOR₂₄, alkyle en C₁-C₂₀, alcényle en C₂-C₂₀, alcynyle en C₂-C₂₀ ou aralkyle en C₇-C₁₈ ou aryle en C₆-C₁₄ non substitué ou substitué une ou plusieurs fois par un par des substituants halogène, NO₂, CN, NR₂₄R₂₅, SO₃⁻, SO₃R₂₄, SO₂NR₂₄R₂₅, COO⁻, (CH₂)ₖOR₂₄, (CH₂)ₖCOOR₂₄, COOR₂₄, CONR₂₄R₂₅, OR₂₄, SR₂₄, PO₃⁻, PO(OR₂₄) (OR₂₅) ou SiR₂₁R₂₂R₂₃ ;
R₁₂, R₁₃, R₁₇, R₁₈, R₁₉, R₂₀, R₂₄ et R₂₅ représentent, indépendamment les uns des autres, un atome d'hydrogène, un groupe alkyle en C₁-C₂₀, alcényle en C₂-C₂₀, alcynyle en C₂-C₂₀ ou aralkyle en C₇-C₁₈, ou représentent un groupe aryle en C₆-C₁₄ non substitué ou substitué une ou plusieurs fois par des substituants alkyle en C₁-C₈, alkoxy en C₁-C₈, (alkyl en C₁-C₈) thio, halogène, NO₂, CN, NH₂, NHR₂₁, NR₂₁R₂₂, SO₃⁻, SO₃R₂₃, SO₂NH₂, SO₂NHR₂₁, SO₂NR₂₁R₂₂, COO⁻, COOR₂₃, CONH₂, CONHR₂₁, CONR₂₁R₂₂, PO₃⁻, PO(OR₂₁) (OR₂₂) ou SiR₁₄R₁₅R₁₆;
ou NR₁₂R₁₃, NR₁₈R₁₉, NR₂₁R₂₂ ou NR₂₄R₂₅ représentent un hétérocycle de cinq ou six chaînons éventuellement renferment un autre hétéroatome N ou O, qui peut être substitué une ou plusieurs fois par un substituant alkyle en C₁-C₈;
R₁₄, R₁₅, R₁₆, R₂₁, R₂₂ et R₂₃ représentent, indépendamment les uns des autres, un groupe alkyle en C₁-C₂₀, alcényle en C₂-C₂₀, alcynyle en C₂-C₂₀ ou aralkyle en C₇-C₁₈,
Y représente anion complexe métallifère ou un anion organométallique ou un mélange de ces anions ;
Z représente un proton ou un cation métal, ammonium ou phosphonium ou un mélange de ces cations ;
k est un entier de 1 à 10 ;
m, n et o sont chacun, indépendamment les uns des autres, un entier de 1 à 3 ; et
p et q sont chacun un nombre de 0 à 4, o, p et q, en fonction de la charge des structures partielles correspondantes se trouvent dans un rapport tel qu'il n'en résulte pas d'excès en charge positive ou négative dans la formule (I).

2. Milieu d'enregistrement selon la revendication 1, où
R₁, R₂, R₆ et R₇ représentent, indépendamment les uns des autres, un atome d'hydrogène, un groupe alkyle en C₁-C₂₀, alcényle en C₂-C₂₀ ou alcynyle en C₂-C₂₀ non substitué ou substitué une ou plusieurs fois par un substituant COO⁻, COOH, COO-alkyle en C₁-C₈, SO₃⁻, SO₃H ou SO₃-alkyle en C₁-C₈, toutefois R₁ et R₆, ainsi que R₂ et R₇ ne peuvent pas représenter les deux en même temps un atome d'hydrogène ;
R₁ et R₂, ainsi que R₆ et R₇ peuvent être, indépendamment les uns des autres, séparés chaque fois par paires ou, dans le cas où ils présentent des sites substituables, reliés par une liaison directe ou par un pont -O- ou -NR₂- de façon telle qu'ils forment avec le N⁺ commun un hétérocycle de 5 ou 6 chaînons ;
R₃ et R₈ représentent, indépendamment l'un de l'autre, un atome d'hydrogène, un atome d'halogène, un groupe OR₁₇, NO₂, alkyle en C₁-C₂₀, alcényle en C₂-C₂₀, alcynyle en C₂-C₂₀ ou aralkyle en C₇-C₂₁₈;
R₄, R₅, R₉ et R₁₀ représentent, indépendamment les uns des autres, un atome d'hydrogène, un atome d'halogène, un groupe NO₂, OR₁₇ ou un groupe alkyle en C₁-C₂₀, alcényle en C₂-C₂₀, alcynyle en C₂-C₂₀ ou aralkyle en C₇-C₁₈
R₁ et R₃, R₂ et R₄, R₆ et R₈ ainsi que R₇ et R₉ sont, indépendamment les uns des autres, séparés par paires ou, dans le cas où chaque fois les deux présentent au moins un site substituable, reliés les uns aux autres par une liaison directe de façon telle qu'ils forment avec le groupe commun C-C=N⁺, C=C-N ou C-C-N un hétérocycle de cinq ou six chaînons,
R₁₁ représente un atome d'hydrogène, un groupe (CH₂)ₖCOO⁻, (CH₂)ₖCOOR₂₄, phényle ou naphtyle non substitué ou substitué une ou plusieurs fois par des substituants halogène, NO₂, NR₂₄R₂₅, SO₃⁻, SO₃R₂₄, SO₂NR₂₄R₂₅, (CH₂)ₖOR₂₄, COO⁻, COOR₂₄, CONR₂₄R₂₅ ou OR₂₄;
R₁₇, R₁₉, R₂₄ et R₂₅ représentent, indépendamment les uns des autres, un atome d'hydrogène ou un groupe alkyle en C₁-C₂₀, alcényle en C₂-C₂₀, alcynyle en C₂-C₂₀ ou aralkyle en C₇-C₁₈ non substitué ; et
o est un entier qui vaut 1 ou 2.

3. Milieu d'enregistrement selon la revendication 2, où
R₁, R₂, R₆ et R₇ représentent, indépendamment les uns des autres, un groupe alkyle en C₁-C₂₀ non substitué, R₁ et R₂, ainsi que R₆ et R₇ peuvent être, indépendamment les uns des autres, chaque fois séparés par paires ou reliés les uns aux autres par une liaison directe ou un pont -O- ou -NR₁₂- de façon telle qu'ils forment avec N⁺ commun un hétérocycle de cinq ou six chaînons ;
R₃, R₄, R₈ et R₉ représentent, indépendamment les uns des autres, un atome d'hydrogène ou un groupe alkyle en C₁-C₂₀ non substitué, R₁ et R₃, R₂ et R₄, R₆ et R₈ ainsi que R₇ et R₉ sont, indépendamment les uns des autres, chaque fois séparés par paires ou reliés les uns aux autres par une liaison directe de façon telle qu'ils forment avec le groupe commun C-C=N⁺, C=C-N ou C-C-N un hétérocycle de cinq ou six chaînons ;
R₅ et R₁₀ représentent un atome d'hydrogène ;
R₁₁ représente un groupe phényle ou naphtyle non substitué ou substitué une ou plusieurs fois par des substituants halogène, NO₂, SO₃⁻, SO₃R₂₄, SO₂NR₂₄R₂₅, COO⁻, COOR₂₄ ou CONR₂₄R₂₅ ;
R₁₂ représente un atome d'hydrogène ou un groupe alkyle en C₁-C₄ non substitué ; et
R₂₄ et R₂₅ représentent, indépendamment l'un de l'autre, un atome d'hydrogène ou un groupe alkyle en C₁-C₂₀ non substitué.

4. Milieu d'enregistrement selon la revendication 1, où Y^{m-} représente un complexe de métaux de transition, qui contient au moins un composé azoïque phénolique ou phénylcarboxylique en tant que ligand, m est un entier qui vaut 1 ou 2 et p est un nombre de 0 à 2.

5. Milieu d'enregistrement selon la revendication 1, où Z représente un proton ou un cation métal ou ammonium, n est un entier 1 ou 2, et q va de 0 à 3.

6. Milieu d'enregistrement selon la revendication 4, où
où Y^{m-} est un anion complexe de métaux de transition de formule (II)
[(L₁)M(L₂)]^{m-} (II)
où L₁ et L₂ représentent indépendamment des ligands de formules 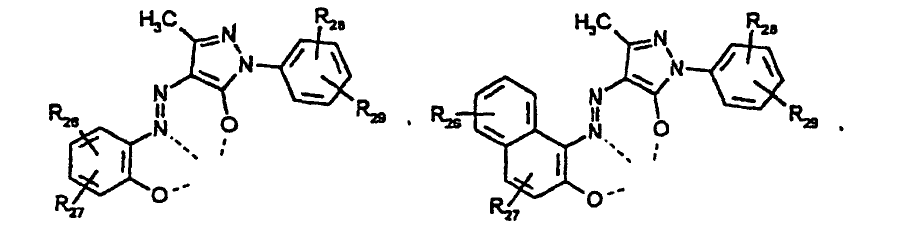 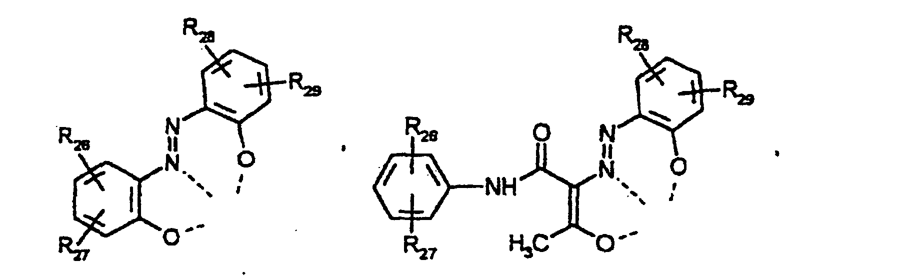 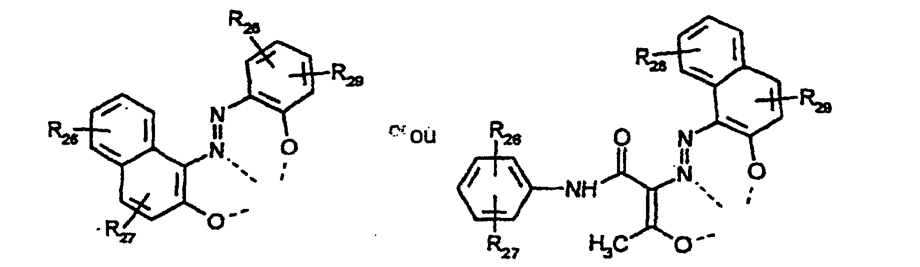 R₂₆, R₂₇ R₂₈ et R₂₉ représentent, indépendamment les uns des autres, un atome d'hydrogène, un atome d'halogène, un groupe R₃₀, NO₂, NR₃₀R₃₁, NHCO-R₃₀, NHCOO-R₃₀, SO₂-R₃₀, SO₂NH₂, SO₂NH-R₃₀, SO₂NR₃₀R₃₁, SO₃⁻ ou SO₃H, où R₃₀ et R₃₁ représentent, indépendamment l'un de l'autre, un groupe alkyle en C₁-C₁₂ non substitué ou substitué par des substituants hydroxy, halogène ou alkoxy en C₁-C₆; et M représente Cr³⁺ ou Co³⁺.

7. Milieu d'enregistrement selon la revendication 1, où Zⁿ⁺ représente un groupe [NH₂R₃₂R₃₃]⁺, R₃₂ représente un atome d'hydrogène ou un groupe alkyle en C₁-C₁₂ et R₃₃ représente un groupe alkyle en C₁-C₂₄ ou aralkyle en C₇-C₂₄ et R₃₂ et R₃₃ présentent conjointement 8 à 25 atomes de carbone.

8. Milieu d'enregistrement selon la revendication 1, où m, n et o valent chacun 1, p va de 0 à 2½ et q va de 0 à 1½, la somme de o et de q est égale à p, de sorte qu'il n'en résulte pas de charge supplémentaire négative ou positive dans la formule (II).

9. Milieu d'enregistrement selon la revendication 1, où la formule (I) représente 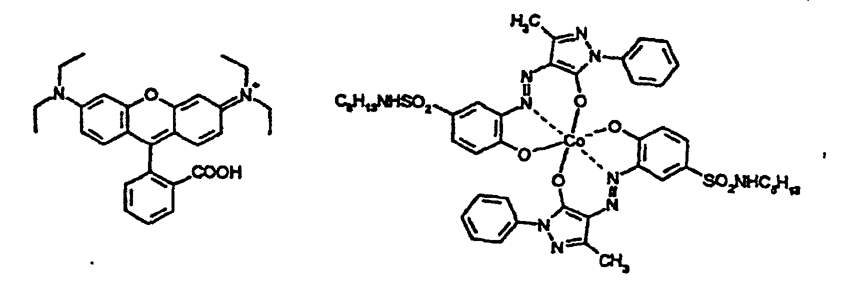 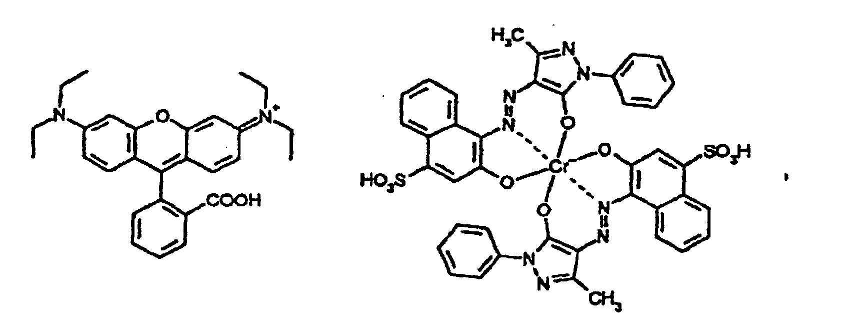 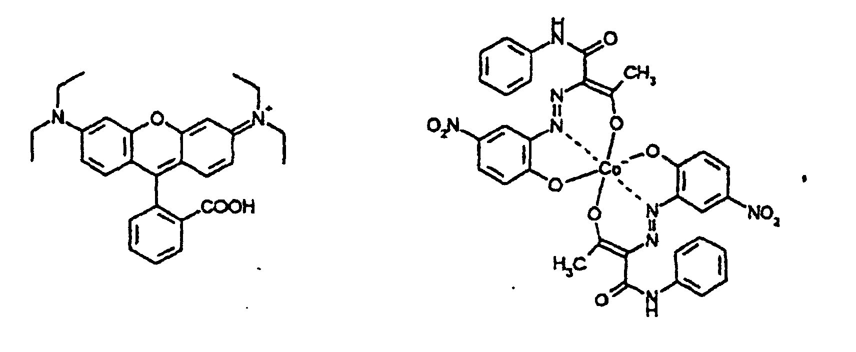 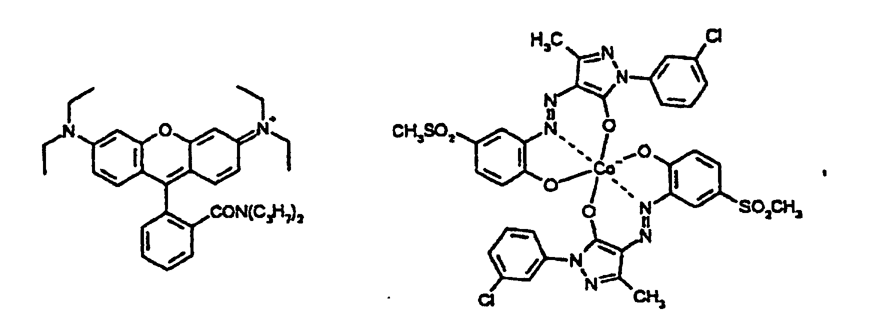 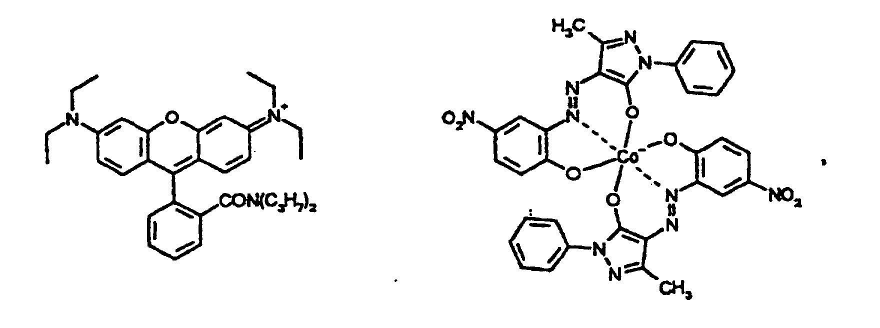 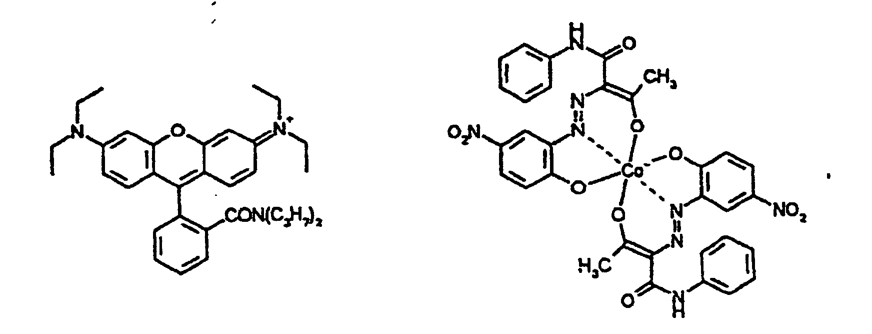 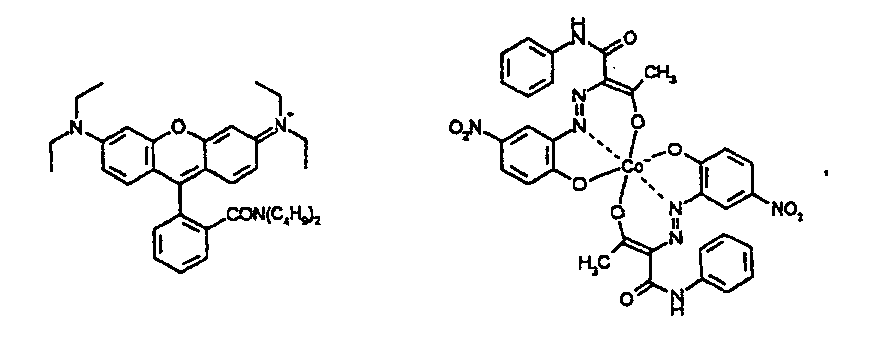 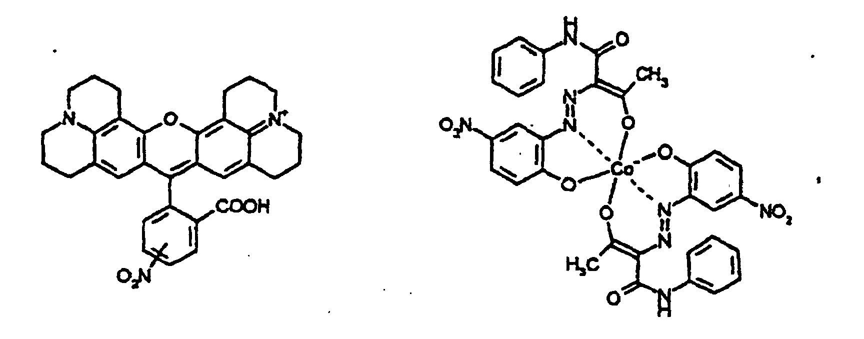 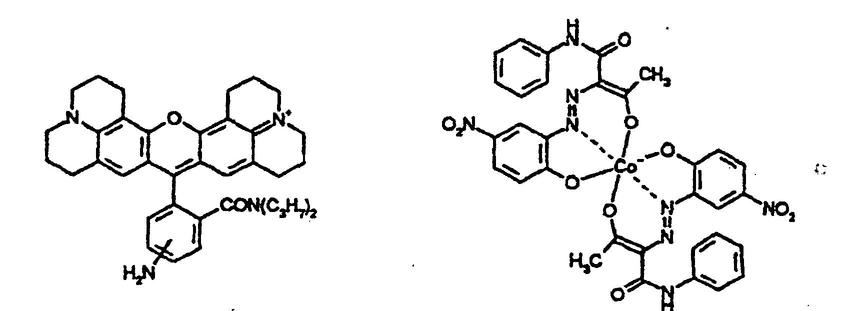 ou

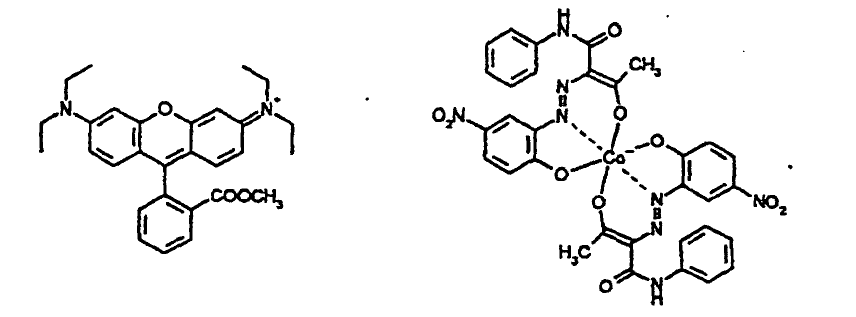

10. Milieu d'enregistrement selon la revendication 1, où le colorant de formule (I) possède un maximum d'absorption de 540 à 610 nm dans une solution éthanolée et un indice de réfraction de 2,0 à 3,0 dans le domaine de 600 à 700 nm.

11. Milieu d'enregistrement selon la revendication 1, où le substrat présente une transparence d'au moins 90 % et une épaisseur de 0,01 à 10 mm, de préférence de 0,1 à 5 mm.

12. Milieu d'enregistrement selon la revendication 1, où la couche réfléchissante est en aluminium, argent, cuivre, or ou leurs alliages, et présente une réflectivité d'au moins 70 % et une épaisseur de 10 à 150 nm.

13. Milieu d'enregistrement selon la revendication 1, où la couche d'enregistrement se trouve entre le substrat transparent et la couche réfléchissante, et présente une épaisseur de 10 à 1000 nm, de préférence de 50 à 500 nm, de manière particulièrement préférée de 80 à 150 nm.

14. Milieu d'enregistrement selon la revendication 1, dont la couche supérieure est munie d'une couche protectrice supplémentaire, dont l'épaisseur est de 0,1 à 1000 µm, de préférence de 0,1 à 50 µm et de manière particulièrement préférée de 0,1 à 15 µm, sur laquelle peut être déposée une deuxième couche de substrat, qui présente de préférence une épaisseur de 0,1 à 5 mm et est constituée par la même matière que le substrat de support.

15. Milieu d'enregistrement selon la revendication 1, qui présente une réflectivité d'au moins 60 %.

16. Milieu d'enregistrement selon la revendication 1, où est disposée, entre la couche d'enregistrement et la couche réfléchissante et/ou entre la couche d'enregistrement et le substrat, au moine une couche d'interférence en une matière diélectrique.

17. Procédé pour l'enregistrement, le stockage et la reproduction optiques d'informations, **caractérisé en ce qu'**on utilise un milieu d'enregistrement selon la revendication 1.

18. Procédé selon la revendication 17, dans lequel l'enregistrement et la reproduction sont réalisés dans le domaine de longueurs d'onde de 600 à 700 nm.
